# EUROPEAN PATENT SPECIFICATION

(11) **EP 3 966 134 B1**
(45) Date of publication and mention of the grant of the patent: **28.10.2026**
(21) Application number: 20805222.5
(22) Date of filing: 08.05.2020
(51) Int. Cl.: B65G 1/04, B25J 5/00, B25J 9/18, B60P 1/38, G06Q 10/087

(54) **SPACE-EFFICIENT ORDER FULFILLMENT SYSTEM FOR WORKFLOW BETWEEN SERVICE AREAS**
RAUMSPARENDES ERFÜLLUNGSSYSTEM FÜR WORKFLOW ZWISCHEN DIENSTGEBIETEN
SYSTÈME D'EXÉCUTION DE COMMANDE EFFICACE EN TERMES D'ESPACE POUR UN FLUX DE TRAVAUX ENTRE DES ZONES DE SERVICE

(30) Priority: 10.05.2019 US 201962846295 P
(43) Date of publication of application: 16.03.2022
(73) Proprietor: Lafayette Systems Canada ULC, Calgary, Alberta T2P 1N2 (CA)
(72) Inventor: GRAVELLE, Scott, Calgary, Alberta T2E 8W1 (CA); LANGEN, Douglas, Calgary, Alberta T2E 8W1 (CA); DHALIWAL, Sundeep, Calgary, Alberta T2E 8W1 (CA)
(74) Representative: Nederlandsch Octrooibureau
(86) International application number: PCT/IB2020/054380
(87) International publication number: WO 2020/229973

(56) References cited:
- WO-A1-2018/069282
- WO-A1-2019/000106
- US-A1- 2016 167 888
- US-A1- 2016 167 888
- US-A1- 2016 355 339
- US-A1- 2017 217 681
- US-A1- 2017 323 250
- US-A1- 2018 148 259
- US-A1- 2018 194 556
- US-A1- 2018 194 556
- US-A1- 2018 218 469
- US-A1- 2018 247 257
- US-A1- 2018 247 257
- US-A1- 2018 305 123
- US-A1- 2018 341 908

## Description

The embodiments herein, in general, relate to order fulfillment centers for storing vendor inventory and fulfilling customer orders from the stored vendor inventory. More particularly, the embodiments herein relate to a space-efficient order fulfillment system for workflow between different service areas configured in a continuous arrangement around an automated storage and retrieval system (ASRS) structure navigable by a fleet of robotic storage/retrieval vehicles.

Electronic commerce (e-commerce) has changed the way customers purchase items. As e-commerce continues to grow at a significant rate and overtake conventional brick and mortar retail practices, many businesses are facing notable challenges of maintaining or gaining relevance in an online marketplace and being able to compete with prominent players in the space. Accordingly, there is a need for solutions by which vendors can shift away from, or supplement, conventional supply chain, distribution and inventory management practices to re-focus on direct-to-customer order fulfillment. Order fulfillment is a complete end-to-end process involving receiving, processing, and delivering orders to end customers. There is a need for order fulfillment systems capable of handling substantial volumes of inventory with both time, space and service efficiency.

Conventionally, fulfillment of customer orders follows a linear workflow, where each fulfillment process occurs in a sequence defined by a typical one-way flow of a conveyor system. Once the workflow is designed and conveyors bolted down to a warehouse floor, the fulfillment workflow is substantially difficult to modify to changing requirements. As customer service expectations are rapidly increasing, retailers aim to differentiate themselves by focusing on customer experience. As a result, there is a need for automation systems that have the ability to be adapted to changing conditions easily and flexibly. Moreover, conventional systems split each fulfillment workflow into separate functions managed by independent entities connected by fixed conveyor belts. Warehouse processes typically include receiving, induction, value-added service, returns processing, order picking, order packing, and last-mile sortation, which are typically separate processes serviced by independent material handling equipment connected by linear conveyors. There is a need for completing all warehouse processes by one automated material handling system that does not require conveyors between service areas. Furthermore, conventional systems require oversized items picked from a manual environment to be packaged and shipped separate from that picked from an automated storage and retrieval system.

Another difficulty of conventional approaches to fulfillment is that due to the reliance of one-way conveyors between processes, buffer storage is required if flow rates differ. Without buffer storage, if an upstream process processes goods faster than a downstream process at any given time, material can quickly accumulate and overwhelm the system to a halt. Due to the complexity and expense of buffer storage for each process, conventional automation solutions attempt to solve the problem with careful upfront equipment and workflow design and meticulous management during operation to ensure acceptable flow between processes. As a result, once established, workflows cannot be flexibly changed and warehouses remain vulnerable to interruptions from unforeseen circumstances.

Moreover, in conventional approaches, goods are received and identified at a facility or a warehouse, for example, by a barcode scan, a radio frequency identification (RFID) scan, etc., by each process to complete the logical transfer of custody between entities, which is another drawback of conventional logistics. Furthermore, since conventional automated solutions rely on miles of ground-fixed conveyors, the footprint of the entire operation is relatively large since most of the vertical space above the conveyor systems and workstations is not used.

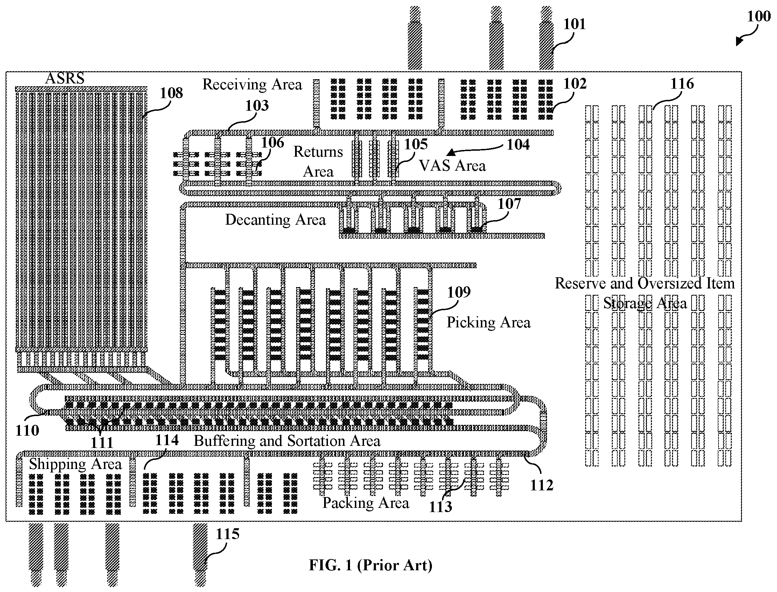

FIG. 1 (prior art) illustrates a top plan view of a conventional order fulfillment center 100 using known inventory storage and handling equipment. Conventional order fulfillment centers receive and store inventory of one or more vendors, fulfill orders placed by customers of the vendor(s), and may also handle customer returns. As illustrated in FIG. 1, the facility layout of the order fulfillment center 100 comprises a receiving area 102 located adjacent to inbound shipping docks of the facility. Inbound transport service vehicles 101 drop off new inventory items and customer returns, herein collectively referred to as "inbound items", in loose or palletized cases at the receiving area 102. The cases of inbound items are placed on an intake conveyor 103 and conveyed thereby to a value-added service (VAS) and returns arca 104. At VAS stations 105 of the VAS and returns area 104, the new inventory items are labeled, tagged, repackaged, or otherwise processed according to prescribed VAS requirements of each vendor. At this VAS and returns arca 104, the intake conveyor 103 also serves the customer returns to multiple return-handling stations 106 at which the condition of the returned items are inspected to assess their suitability for return into the vendor's inventory for re-sale to another customer.

The VAS-processed new inventory items and inventory-suitable customer returns, herein collectively referred to as "processed inventory", are conveyed further downstream from the VAS and returns area 104 to a decanting area 107 at which individual items of the processed inventory are placed into storage units, for example, storage bins, trays, totes, etc., for induction into an automatic storage and retrieval system (ASRS) 108. The ASRS 108 comprises an array of storage locations of compatible size and shape for receiving the inventory-filled storage units. The ASRS 108 further comprises a fleet of robotic vehicles or handling equipment operable to deposit and retrieve the storage units to and from the storage locations of the ASRS 108. A conventional ASRS 108 is typically arranged in an aisle-based layout where aisles traversable by robotic vehicles have racking or shelving on opposing sides of each aisle as illustrated in FIG. 1.

In response to placed orders, the robotic vehicles or handling equipment extract the storage units containing the ordered inventory items from their respective storage locations in the ASRS 108 and transfer the storage units to a buffer/sortation conveyor 110 located outside the ASRS 108, from which the extracted storage units are directed to different picking stations in a picking area 109 of the facility. The picking area 109 is typically located remotely of the ASRS 108 at a discretely spaced distance outward from the ASRS 108. At the picking stations of the picking area 109, the ordered inventory items are picked in their ordered quantities from the extracted storage units and conveyed back to the buffer/sortation conveyor 110. The buffer/sortation conveyor 110 distributes the picked inventory items to respective order filling locations 111 distributed along the buffer/sortation conveyor 110, where chutes or workers place the inventory items of each order into a respective order container, for example, a bin or a tote. An order conveyor 112 then conveys the order container further downstream to a packing area 113, at which the ordered items are packed into one or more shipping packages, which have shipping labels applied thereto. The order conveyor 112 then conveys the shipping package(s) with their respective shipping labels further downstream to a shipping area 114. At the shipping area 114, the packaged order is palletized together with other packaged orders that are destined for a geographically similar delivery area, for example, by zip code or postal code, and that have been designated for pickup by the same transport carrier. Outbound transport service vehicles 115 pickup the palletized orders at the outbound shipping docks of the facility. Oversized inventory that is too large to fit in the ASRS 108 and optionally extra reserve inventory are stored outside the ASRS 108 at a separate reserve and oversized item storage area 116 located remotely of the ASRS 108 at a discretely spaced distance from the ASRS 108. The layouts of the order fulfillment center 100 illustrated in FIG. 1 and other conventional order fulfillment centers rely on extensive, long-range conveyor systems, numerous aisles between racks, and widely spaced out and discontinuous service areas, and are, therefore, space, service and equipment intensive.
US 2018/0194556 A1 discloses an order fulfillment system, wherein the automated fulfillment section includes the storage rack system configured to hold totes of inventory accessible by the automated mobile robots and further configured to enable the automated mobile robots to pull inventory totes and deliver the totes to pickers at picking workstations for automated order fulfillment. The storage rack includes a plurality of rack modules separated by aisles and having a plurality of storage levels. The storage rack is configured to enable the automated mobile robots to propel themselves horizontally and vertically throughout the storage rack structure. The automated mobile robots are configured to place totes into the storage rack structure, remove totes from the storage rack structure, and transport totes. A plurality of automated mobile robots are tasked to retrieve totes of goods from the various sections, and transfer those totes to the merge module of the consolidation section. The consolidation section includes a merge module that combines eaches of goods picked from the automated fulfillment section with eaches of goods picked from the shopping section deposited at the one or more goods drop-off transfer stations.
US 2016/0167888 A1 discloses a mobile configurable conveyor component.
WO 2019/000106 A1 discloses a system and method for exposing and integrating multiple supply chain and delivery networks to optimize capacity utilizations.
US 2018/0247257 A1 discloses an inventory management system and method.
Hence, there is a long felt need for a space-efficient order fulfillment system and method for workflow between different service areas. Moreover, there is a need for a space-efficient order fulfillment system comprising multiple different service areas configured in a continuous arrangement around the ASRS to perform multiple functions, for example, induction, decantation, value-added service (VAS) and returns processing, picking, packing, last mile sortation, consolidation, etc., of an order fulfillment center in a continuous manner using a fleet of robotic storage/retrieval vehicles and multiple workstations that collaborate to execute the workflow of the order fulfillment center. Furthermore, there is a need for facilitating sortation in the different service areas using a two-dimensional lower grid structure that extends from the ASRS and directly attaches to purpose-built workstations of the different service areas.

### This need is satisfied by the independent claims.

### Embodiments are mirrored by the dependent claims.

FIG. 1 (prior art) illustrates a top plan view of a conventional order fulfillment center.
FIG. 2 illustrates a top plan view of a layout of a space-efficient order fulfillment system, according to an embodiment herein.
FIG. 3 illustrates a top plan view of another layout of the space-efficient order fulfillment system, according to another embodiment herein.
FIG. 4 illustrates a top isometric view of an automated storage and retrieval system (ASRS) comprising a three-dimensional gridded storage structure used in the space-efficient order fulfillment system, according to an embodiment herein.
FIG. 5A illustrates a robotic storagc/rctricval vehicle and a compatible storage bin employed in the ASRS structure of the space-efficient order fulfillment system, according to an embodiment herein.
FIG. 5B illustrates the robotic storage/retrieval vehicle and the compatible storage bin of FIG. 5A, showing an extension of a turret arm of the robotic storage/retrieval vehicle for engaging with the storage bin to push or pull the storage bin off of or onto the robotic storage/retrieval vehicle, according to an embodiment herein.
FIG. 6 illustrates a top isometric view of the layout of the order fulfillment system shown in FIG. 3, according to an embodiment herein.
FIG. 7 illustrates a partial perspective view of the layout of the order fulfillment system shown in FIG. 6, showing a receiving area and a decanting/induction area positioned on a first perimeter side of the ASRS structure of the order fulfillment system, according to an embodiment herein.
FIG. 8A illustrates a perspective view of a decanting/induction workstation used at the decanting/induction area shown in FIG. 7, showing an inner side of the decanting/induction workstation facing towards the ASRS structure, according to an embodiment herein.
FIG. 8B illustrates a perspective view of the decanting/induction workstation shown in FIG. 8A, showing an opposing outer side of the decanting/induction workstation, according to an embodiment herein.
FIG. 9 illustrates a partial perspective view of the layout of the order fulfillment system shown in FIG. 6, showing a value-added service (VAS) and returns area positioned further down the first perimeter side of the ASRS structure from the decanting/induction area shown in FIG. 7, according to an embodiment herein.
FIG. 10A illustrates a partial top perspective view of a VAS/returns-handling workstation used at the VAS and returns area shown in FIG. 9, as viewed from outside the ASRS structure, according to an embodiment herein.
FIG. 10B illustrates a partial top perspective view of the VAS/returns-handling workstation shown in FIG. 10A as viewed from outside the ASRS structure, where upright outer walls and a top cover panel of the VAS/returns-handling workstation are shown as transparent layers to reveal internal components thereof and an internal workflow therethrough, according to an embodiment herein.
FIG. 10C illustrates a partial perspective view of the VAS/rcturns-handling workstation shown in FIGS. 10A-10B as viewed from inside the ASRS structure, according to an cmbodiment herein.
FIG. 11 illustrates a partial perspective view of the layout of the order fulfillment system shown in FIG. 6, showing a picking area positioned on a second perimeter side of the ASRS structure around a corner from the VAS and returns area, according to an embodiment herein.
FIG. 12 illustrates a partial top perspective view of a picking workstation used at the picking area shown in FIG. 11, as viewed from outside the ASRS structure, according to an embodiment herein.
FIG. 13 illustrates a top plan view of a light guidance system usable at the VAS/returns-handling workstations, the picking workstation, and a packing workstation of the order fulfillment system, according to an embodiment herein.
FIG. 14 illustrates a partial perspective view of the layout of the order fulfillment system shown in FIG. 6, showing a packing area positioned on a third perimeter side of the ASRS structure around a corner from the picking area, according to an embodiment herein.
FIG. 15A illustrates a partial perspective view of the packing area shown in FIG. 14 from another angle and closer vantage point, showing a multi-rowed layout of packing workstations therein, according to an embodiment herein.
FIG. 15B illustrates a partial perspective view of the packing area shown in FIG. 14, showing a two-level conveyor unit comprising an order bin conveyor positioned at a lower level for conveying order bins and a package feeding conveyor positioned at an upper level for conveying packaged orders, according to an embodiment herein.
FIG. 15C illustrates a top plan view showing an order bin conveyor circuit connected to the ASRS structure for serving order bins therefrom to a respective row of packing workstations in the packing area, according to an embodiment herein.
FIG. 15D illustrates an enlarged, partial perspective view of one of the rows of packing workstations in the packing area, according to an embodiment herein.
FIG. 15E illustrates an enlarged, partial perspective view of two of the packing workstations, according to an embodiment herein.
FIG. 16 illustrates a partial perspective view of the layout of the order fulfillment system shown in FIG. 6, showing a consolidation area neighboring the packing area in a cooperatively overlapping relation therewith at the third perimeter side of the ASRS structure, and a last mile sort area positioned further down the third perimeter side of the ASRS structure, according to an embodiment herein.
FIG. 17 illustrates a perspective view of a robotic package-handling vehicle used in the order fulfillment system for delivering packaged orders to shipment-consolidation containers stored proximal to the ASRS structure in the last mile sort area, according to an embodiment herein.
FIG. 18 illustrates an enlarged, partial perspective view of an intake zone of the last mile sort area of the order fulfillment system to which packaged orders from the packing area are conveyed for pickup by the robotic package-handling vehicle shown in FIG. 17, according to an embodiment herein.
FIG. 19 illustrates an enlarged, partial perspective view, showing deposit of a packaged order into a shipment-consolidation container in the last mile sort area by the robotic package-handling vehicle shown in FIG. 17, according to an embodiment herein.
FIG. 20 illustrates a top isometric view showing an alternative aisle-based configuration of the last mile sort area, in which the robotic package-handling vehicles access the shipment-consolidation containers on a navigation structure positioned outside the ASRS structure, according to an embodiment herein.
FIG. 21 illustrates a flowchart of a method for fulfilling orders using the order fulfillment system, according to an embodiment herein.
FIG. 22 illustrates a flowchart of a method for executing an induction process in the order fulfillment system, according to an embodiment herein.
FIG. 23 illustrates a flowchart of a method for executing a VAS process in the order fulfillment system, according to an embodiment herein.
FIGS. 24A-24B illustrate a flowchart of a method for executing a returns handling process in the order fulfillment system, according to an embodiment herein.
FIG. 25 illustrates a flowchart of a method for executing a picking process in the order fulfillment system, according to an embodiment herein.
FIG. 26 illustrates a flowchart of a method for executing a packing process in the order fulfillment system, according to an embodiment herein.
FIG. 27 illustrates a flowchart of a method for executing a last mile sortation process in the order fulfillment system, according to an embodiment herein.
FIG. 28 illustrates a flowchart of a method for executing an oversized item picking process in the order fulfillment system, according to an embodiment herein.
FIGS. 29A-29B illustrate a flowchart of a method for executing an oversized item packing process in the order fulfillment system, according to an embodiment herein.
FIG. 30 illustrates an architectural block diagram of the order fulfillment system for executing an order fulfillment workflow between different service areas, according to an embodiment herein.

Various aspects of the present disclosure may be embodied as a system of components and/or structures, a method, and/or non-transitory, computer-readable storage media having one or more computer-readable program codes stored thereon. Accordingly, various embodiments of the present disclosure may take the form of a combination of hardware and software embodiments comprising, for example, mechanical structures along with electronic components, computing components, circuits, microcode, firmware, software, etc.

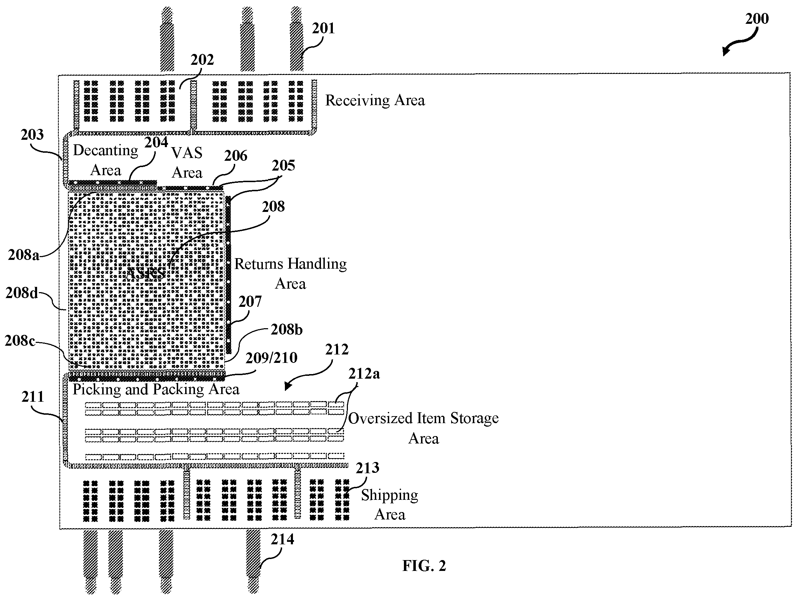

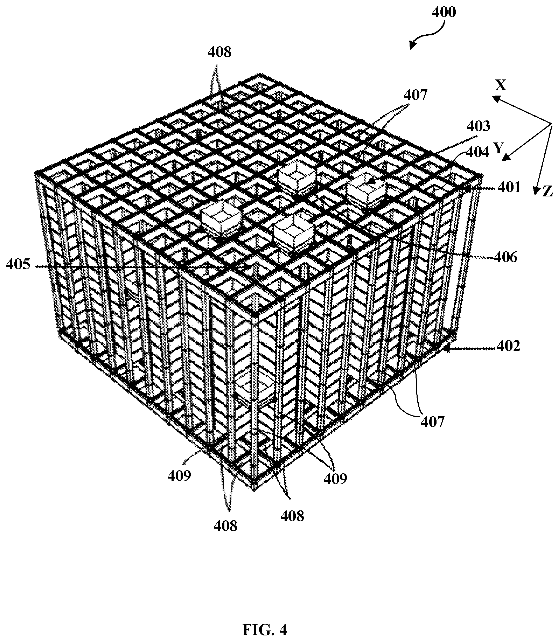

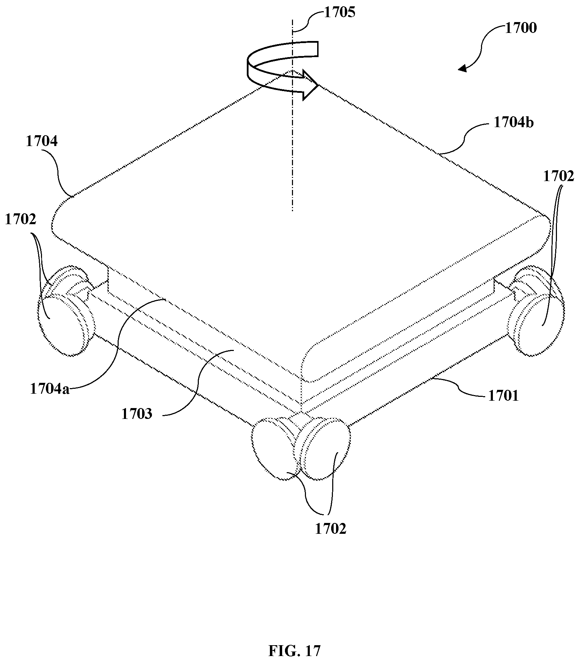

FIGS. 2-3 illustrate top plan views of two layouts of a space-efficient order fulfillment system 200, according to an embodiment herein. The layout of the order fulfillment system 200 of FIG. 2 is shown in a facility of footprint equal to that of the conventional order fulfillment center 100 shown in FIG. 1, thereby demonstrating an increased space efficiency of the order fulfillment system 200 disclosed herein compared to the space-intensive, conveyor-heavy layout of the conventional order fulfillment center 100. The space-efficient order fulfillment system 200 disclosed herein comprises an automated storage and retrieval system (ASRS) structure 208; a fleet of robotic vehicles, for example, robotic storage/retrieval vehicles (RSRVs) 406 illustrated in FIG. 4 and robotic package-handling vehicles 1700 illustrated in FIG. 17; a supply of storage units 403, for example, bins, trays, totes, etc., herein collectively referred to as "storage bins" illustrated in FIG. 4; and multiple different service areas, for example, 202, 204, 205, 209, 210, 212, 216, and 217 as illustrated in FIGS. 2-3. The ASRS structure 208 comprises a three-dimensional array of storage locations distributed throughout a two-dimensional footprint of the ASRS structure 208 at multiple storage levels within the ASRS structure 208. The robotic vehicles, for example, the RSRVs 406 are navigable within the ASRS structure 208 at least by travel in two dimensions over the two-dimensional footprint of the ASRS structure 208 at one or more service levels of the ASRS structure 208. The service level(s) is positioned above and/or below the storage levels. The storage bins 403 are of a compatible size and shape for storage in the storage locations of the ASRS structure 208. The storage bins 403 are configured to be carried by the RSRVs 406 within the ASRS structure 208 during transfer of the storage bins 403 to and from the storage locations. In an embodiment, the storage bins 403 are transportable between the different service areas, for example, 202, 204, 205, 209, 210, 216, and 217 in any order. In an embodiment, the storage bins 403 are received at a first one of the different service areas for performance of one or more tasks and subsequently stored in the storage locations of the ASRS structure 208 and retrieved from the storage locations of the ASRS structure 208 for the transfer of the storage bins 403 to a second one of the different service areas.

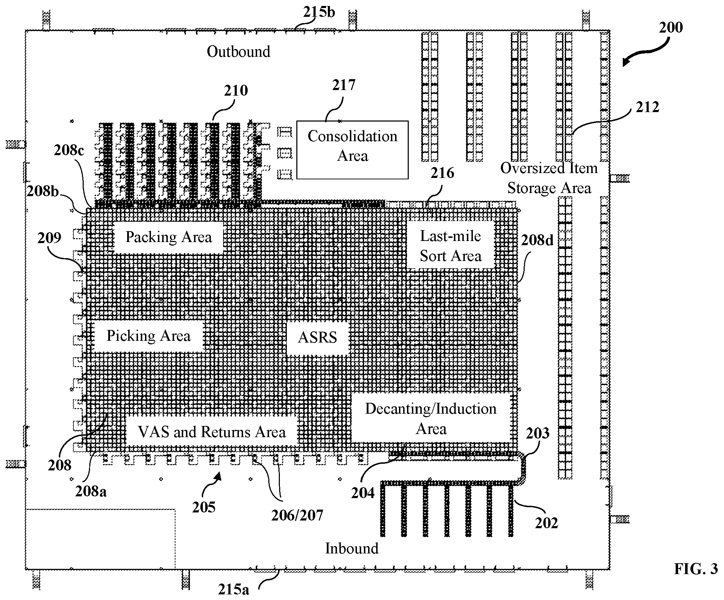

The different service areas are positioned adjacent to an outer perimeter of the two-dimensional footprint of the ASRS structure 208 at the service level(s) of the ASRS structure 208. Each of the different service areas comprises one or more workstations of a type configured for a task or a combination of tasks different from the workstation(s) at another of the different service areas. The tasks comprise, for example, decanting, value-added service (VAS) processing, returns handling, picking, packing, sorting, etc., and other tasks that constitute an order fulfillment workflow. Each of the different service areas is configured to receive a drop-off of the storage bins 403 at and/or a travel of the storage bins 403 through each of the different service areas by the RSRVs 406. In an embodiment, the different service areas are configured in a continuous arrangement around the ASRS structure 208. For example, the different service areas comprise a decanting/induction area 204, a processing area such as a VAS and returns area 205, a picking area 209, a packing area 210, and a last mile sort area 216 configured in a continuous arrangement around the ASRS structure 208 as illustrated in FIGS. 2-3. In another example, the different service areas comprise a consolidation area 217 and an oversized item storage area 212 positioned proximal to the ASRS structure 208 as illustrated in FIG. 3. In an embodiment, the storage bins 403 are configured to be transferred to and from the storage locations of the ASRS structure 208 and between the different service areas, free of identification of the storage bins 403, due to the continuous arrangement of the different service areas. In an embodiment, each of the different service areas is configured to receive the storage bins 403 multiple times for performance of one or more of the tasks.

As illustrated in FIGS. 2-3, the space-efficient order fulfillment system 200 comprises a receiving area 202 located adjacent to inbound shipping docks 215a of the facility where new inventory items and customer returns, herein collectively referred to as "inbound items", are dropped off by inbound transport service or carrier vehicles 201. At the decanting area 204 of the order fulfillment system 200, the storage bins 403 are filled in preparation for storage in the ASRS structure 208. That is, at the decanting area 204, the inbound items are placed in an originally received unprocessed condition, in unprocessed storage bins selected from the supply of storage bins 403. From the decanting area 204, the unprocessed storage bins are inducted into the ASRS structure 208. In another embodiment, the decanting area 204 is a combined decanting and induction area at which the unprocessed storage bins arc inducted directly into the ASRS structure 208 by the RSRVs 406 without transfer to, past or through any other of the different service areas. The inbound items are processed at the processing arca, for example, the VAS and returns area 205 of the order fulfillment system 200. That is, the unprocessed storage bins inducted into the ASRS structure 208 are served by the RSRVs 406 to the VAS and returns area 205 for processing the inbound items contained in the unprocessed storage bins. The processed items are returned from the VAS and returns area 205 into the ASRS structure 208 for storage therein as saleable inventory ready for order fulfillment. In an embodiment, at the VAS and returns area 205, the processed items are transferred from the unprocessed storage bins to inventory storage bins selected from the supply of storage bins 403 and returned to the ASRS structure 208 in the inventory storage bins. Inventory items in the ASRS structure 208 are served by the RSRVs 406 to the picking area 209 of the order fulfillment system 200 for order picking. At the picking area 209, orders are picked from inventory storage bins previously inducted into the ASRS structure 208. At least partially fulfilled orders, previously picked at the picking area 209, are served by the RSRVs 406 to the packing area 210 for packing the partially fulfilled orders at the packing area 210. At the packing area 210 of the order fulfillment system 200, the fulfilled orders from the picking area 209 are packaged in preparation for shipment.

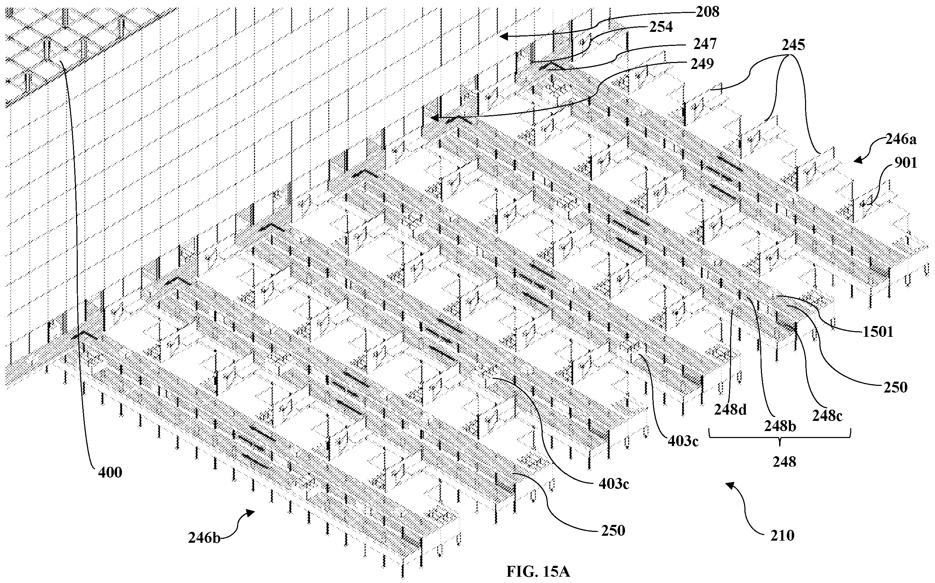

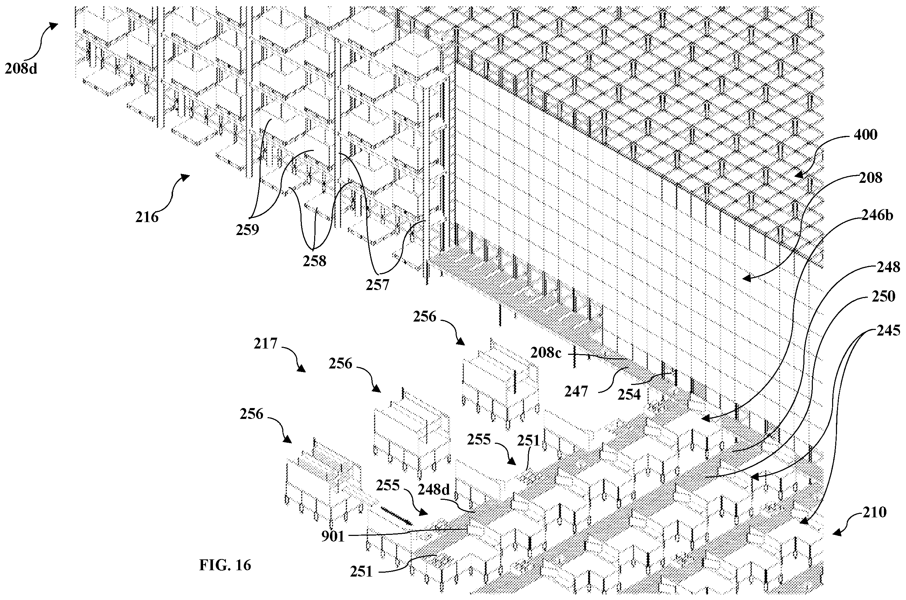

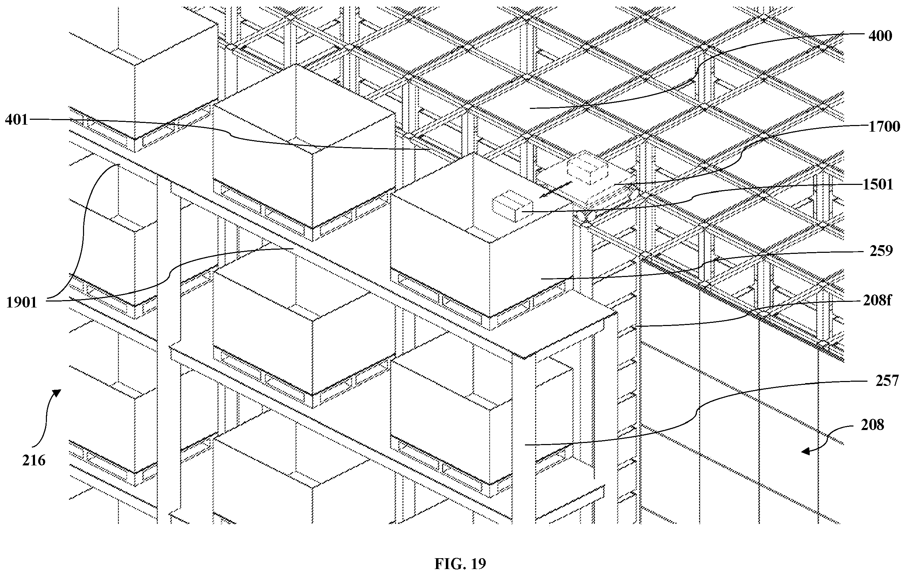

In an embodiment, large-scale items that are substantially large for storage in the ASRS structure 208 are stored in the oversized item storage area 212 of the order fulfillment system 200. The ordered large-scale items are transferred to the consolidation area 217 illustrated in FIG. 3, for consolidation with inventory items picked at the picking area 209. In an embodiment, the consolidation area 217 is positioned to neighbor or overlap the packing area 210. In an embodiment, the consolidation area 217 that overlaps the packing area 210 comprises at least one consolidated-packing workstation configured to share a common order bin conveyor 248 with another of the workstations of the packing area 210 as illustrated in FIGS. 15A-15B. At the last mile sort area 216, shipment-consolidation containers, for example, gaylord boxes or gaylords 259 illustrated in FIG. 16 and FIG. 19, of a greater capacity than the storage bins 403, are stored at positions accessible from the ASRS structure 208.

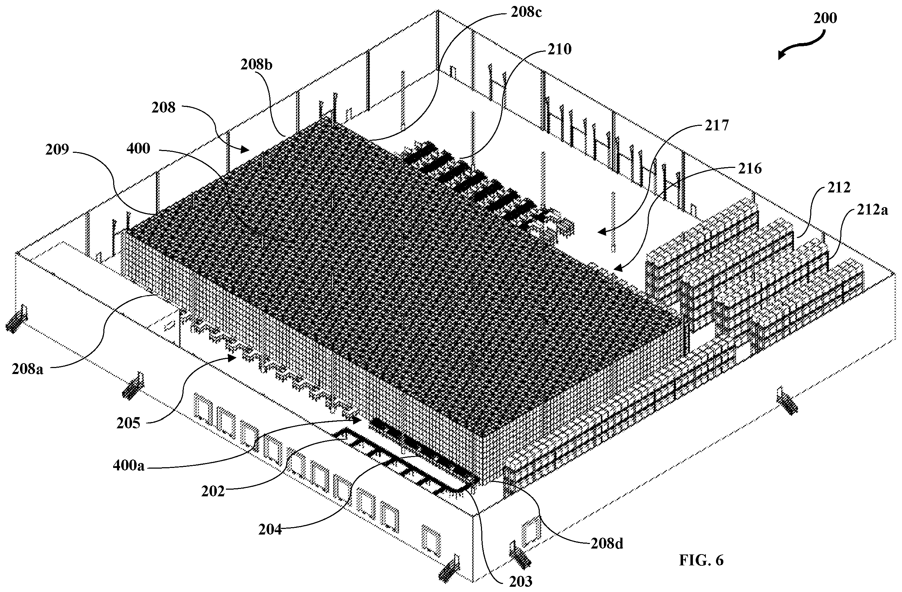

In an embodiment, one or more of the service levels of the ASRS structure 208 comprise a lower level 400a positioned below the storage levels as illustrated in FIGS. 6-7, FIG. 9, FIG. 11, and FIG. 14. The different service areas are positioned adjacent to the ASRS structure 208 at the lower level 400a thereof for service of the different service areas by the RSRVs 406 from the lower level 400a. In an embodiment, the ASRS structure 208 is the only autonomously operable bin-transfer link for the storage bins 403 between the different service areas. In an embodiment, the order fulfillment system 200 disclosed herein is free of any inter-area conveyors running between any of the different service areas.

The order of workflow through the different service areas of the order fulfillment system 200 and the equipment used to execute the workflow introduces newfound efficiencies with respect to the spatial footprint of the overall system layout, the equipment and material requirements of the order fulfillment system 200, and potentially also the workflow throughput velocity. The receiving area 202 and an intake conveyor 203 that carries the inbound items from the receiving area 202 are not directly linked to the VAS and returns area 205. Instead, the intake conveyor 203 from the receiving area 202 feeds the inbound items directly to the decanting area 204, whereby the inbound items are decanted directly and immediately into ASRS-compatible storage bins 403 in their originally received condition, without first being subject to VAS or returns processing. The storage bins 403 filled at the decanting station 204, therefore, contain freshly arrived and unprocessed inbound items, and are therefore referred to herein as "unprocessed storage bins". Moreover, the decanting area 204 is not discretely located at a spaced conveyor-linked distance from the ASRS structure 208 but is positioned in immediate adjacency to the ASRS structure 208 to allow service of the decanting area directly by the fleet of RSRVs 406 of the ASRS structure 208. Therefore, the unprocessed storage bins loaded with the inbound items are inducted directly into the ASRS structure 208 without long-range travel over an intermediary conveyor. Accordingly, the decanting area 204 is herein also referred to as a combined decanting/induction area 204.

In terms of the workflow through the facility, the VAS and returns area 205 is positioned downstream of the decanting area 204 and resides in an immediately neighboring adjacency to the ASRS structure 208 so as to be served with unprocessed inbound items not by a conveyor running from the upstream decanting area 204, but by the same fleet of RSRVs 406 that inducted the unprocessed storage bins into the ASRS structure 208. At the VAS and returns area 205, the unprocessed inbound items are removed from the unprocessed storage bins delivered to the VAS and returns area 205 by the RSRVs 406, are subjected to VAS processing or returns-inspection processing, and are placed in different storage bins that are then inducted into the ASRS structure 208 by the same fleet of RSRVs 406. The latter storage bins into which the processed items are placed are herein referred to as "inventory storage bins" to distinguish these storage bins from the unprocessed storage bins, since the items placed in these inventory storage bins have been confirmed as, or transformed into, saleable inventory-ready product through the VAS processing or returns-inspection actions or tasks performed on the items. In an cmbodiment, the inventory storage bins are stored in the ASRS structure 208 prior to performance of any downstream operations, thereby implementing buffering of storage bins 403 in the ASRS structure 208 between each process performed at the different service areas. As illustrated in FIG. 2, the VAS and returns area 205 comprises VAS workstations 206 and separate returns-handling workstations 207, which in an embodiment, are positioned at different perimeter sides, for example, 208a and 208b of the ASRS structure 208 respectively. As illustrated in FIG. 3, the VAS and returns area 205 comprises VAS/returns-handling workstations 206/207 of a singular type on a singular perimeter side, for example, 208a of the ASRS structure 208, with each VAS/returns-handling workstation 206/207 being usable for either VAS processing of new inventory items or return-inspection processing of customer returns.

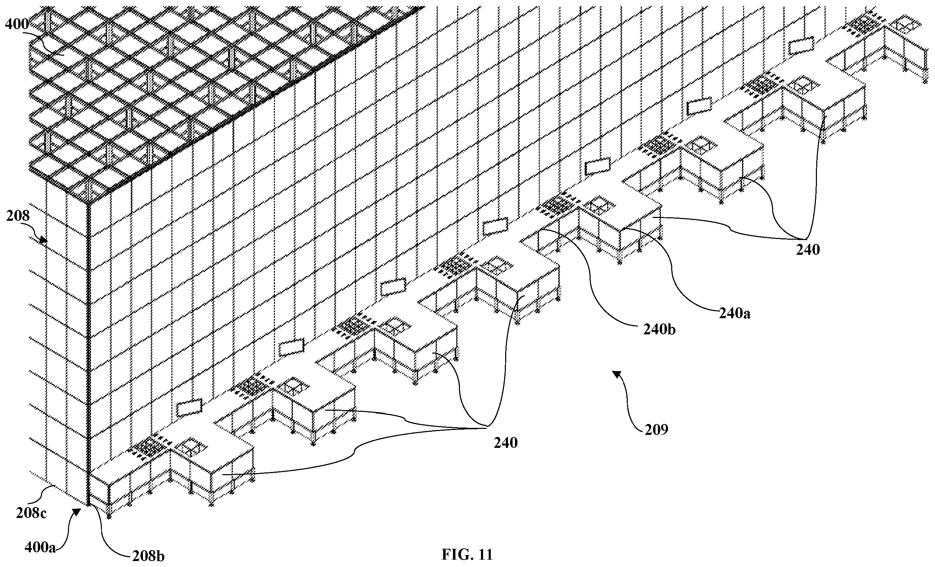

Similar to the decanting/induction area 204 and the VAS and returns area 205 of the order fulfillment system 200, the picking area 209 is also positioned in immediately neighboring adjacency to the ASRS structure 208 so as to be served with the processed storage bins not by a conveyor running from the upstream VAS and returns area 205, but by the same fleet of RSRVs 406 of the ASRS structure 208. The picking area 209 of the order fulfillment system 200 comprises one or more picking workstations 240 as illustrated in FIGS. 11-12. At the picking workstations 240 of the picking area 209, ordered items are picked from the inventory storage bins are delivered to the picking workstations 240 by the RSRVs 406 of the ASRS structure 208, and are placed in "order bins" that, similar to the unprocessed storage bins and the inventory storage bins, are compatibly shaped and sized relative to the storage locations of the ASRS structure 208 to allow storage of the order bins in the storage locations thereof. Accordingly, in an embodiment, fully or partially fulfilled orders are temporarily stored in the ASRS structure 208 prior to packaging and shipping of the orders, for example, in favor of other orders that are ranked with a higher priority. Pickup of the order bins from the picking area 209 is performed directly by the RSRVs 406 of the ASRS structure 208 due to the immediate adjacency between the picking area 209 and the ASRS structure 208.

In an embodiment as illustrated in FIG. 2, the order fulfillment system 200 comprises a combined picking and packing area 209/210 instead of a separate packing area and therefore, executes packing of orders at the picking workstations 240 of the picking area 209. From the combined picking and packing area 209/210 illustrated in FIG. 2, the packaged orders are conveyed by an outbound conveyor 211 to a shipping area 213 adjacent to the outbound shipping docks 215b of the facility, where in an embodiment, the packaged orders are consolidated into multi-order pallets, for example, in a manual last mile sort process that groups the orders by a delivery region according to a zip code or a postal code. The palletization of the orders is performed manually or in an embodiment, with automated palletization equipment, after which the multi-order pallets arc picked up by outbound transport service or carrier vehicles 214. In an embodiment, the oversized item storage area 212 of the order fulfillment system 200 comprises aisles of pallet racking 212a laid out between the combined picking and packing area 209/210 and the shipping area 213 to allow oversized items to be manually picked onto a cart or a pallet for transfer of the oversized items to the shipping area 213, and then to be consolidated with smaller scale items of the same order that were picked and packaged at the picking and packing area 209/210 as the smaller scale items arrive at the shipping area 213 on the outbound conveyor 211 that winds around the oversized item storage area 212.

In an embodiment as illustrated in FIG. 2, the decanting/induction area 204 and the VAS workstations 206 of the VAS and returns area 205 are positioned on a first perimeter side 208a of the ASRS structure 208 that faces the receiving area 202 of the facility. The returns-handling workstations 207 of the VAS and returns area 205 are positioned on a neighboring second perimeter side 208b of the ASRS structure 208, and the combined picking and packing area 209/210 is positioned on a neighboring third perimeter side 208c of the ASRS structure 208 that resides opposite the first perimeter side 208a and faces the shipping area 213. Accordingly, in various embodiments, different perimeter sides 208a, 208b, 208c, and 208d of the ASRS structure 208 are each occupied by a different combination of workstations so that each perimeter side of the ASRS structure 208 is dedicated to one particular service task or a particular combination of service tasks that differs from those performed at the other perimeter sides.

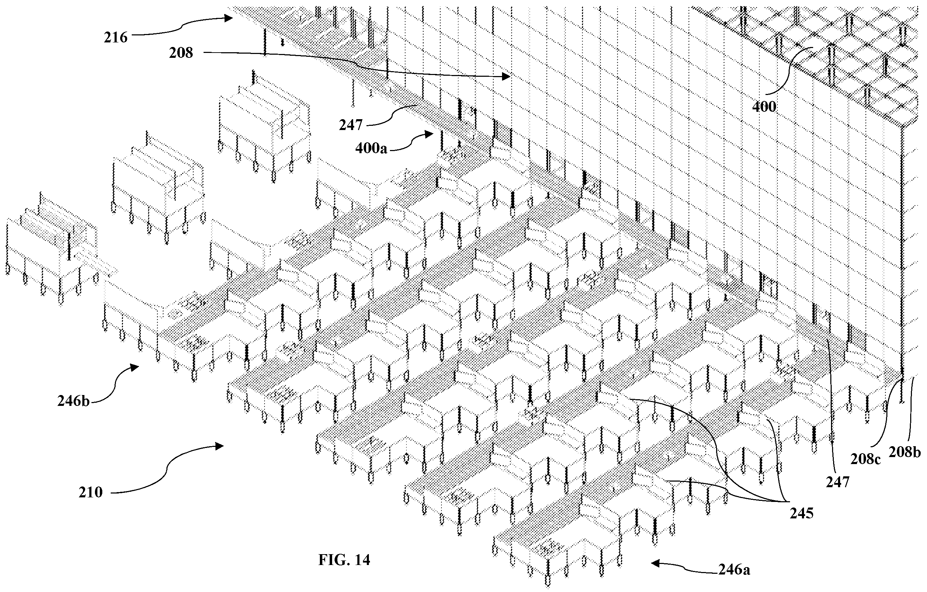

Instead of combining the picking and packing operations and tasks at workstations of a singular service area 209/210, in an embodiment, the order fulfillment system 200 comprises a dedicated packing area 210 separate from the picking area 209 as illustrated in FIG. 3. Similar to the decanting/induction area 204, the VAS and returns area 205 and the picking area 209, the packing area 210 is also positioned in an immediately neighboring adjacency to the ASRS structure 208 as illustrated in FIG. 3, so as to be served with the filled order bins not by a conveyor running from the upstream picking area 209, but by the same fleet of RSRVs 406 of the ASRS structure 208. The packing area 210 of the order fulfillment system 200 comprises one or more packing workstations 245 as illustrated in FIGS. 14-15E. Ordered items contained in one or more of the storage bins 403, that is, the order bins, are served by the RSRVs 406 to the packing workstations 245 for removal and packing of the ordered items into packaged orders at the packing workstations 245. That is, at the packing workstations 245 of the packing area 210, the partially or fully fulfilled orders are picked from the order bins delivered to the packing workstations 245 by the RSRVs 406 of the ASRS structure 208 and are placed in shipping boxes or other shipment-ready packaging with appropriate shipment labels for delivery to a customer by a transport carrier.

Through the placement of the decanting/induction area 204, the VAS and returns area 205, the picking area 209, and the packing area 210 in immediate adjacency to the ASRS structure 208 so that service of the storage bins 403 to and from and between the workstations of these different service areas is performed entirely by the same RSRVs 406 responsible for deposit and retrieval of the storage bins 403 to and from the storage locations of the ASRS structure 208, these RSRVs 406 of the ASRS structure 208 perform several different functions and omit the need for long-range conveyors running between the different service areas of the order fulfillment system 200 of the facility, thereby providing both space and material efficiencies. Operational redundancy is also achieved, in that since each RSRV 406 in the order fulfillment system 200 is operable to convey storage bins 403 to and from any service area 204 or 205 or 209 or 210, operational failure of a partial subset of the fleet of the RSRVs 406 does not cease all throughput capabilities of the order fulfillment system 200 as long as some of the RSRVs 406 remain operational, thereby avoiding expensive system-wide downtime for conveyor repair in a conveyor-heavy layout of a conventional order fulfillment center 100 as illustrated in FIG. 1. The above efficiencies are achieved even in scenarios where less than a full entirety of these different service areas are located immediately adjacent to the ASRS structure 208 and directly serviced by the fleet of RSRVs 406 of the ASRS structure 208.

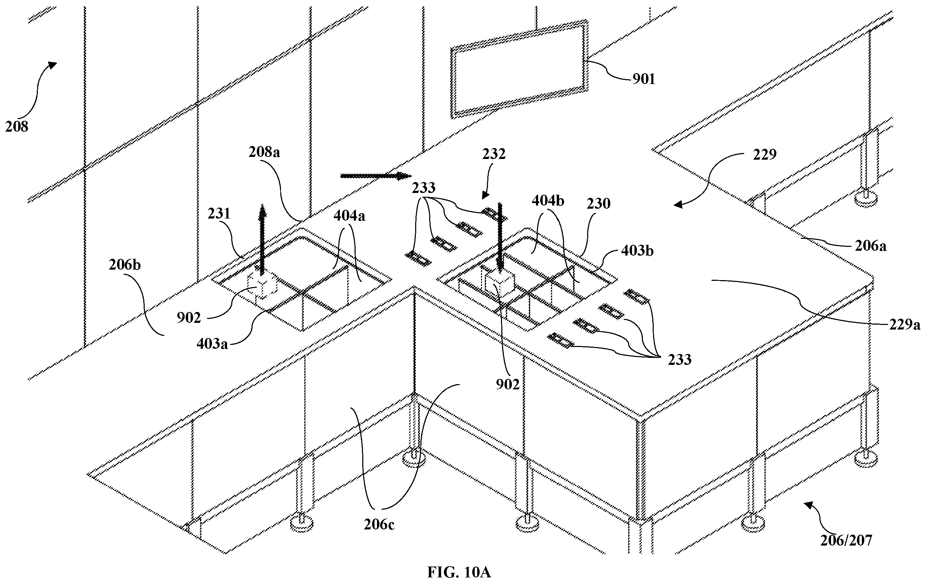

In an embodiment, at least one of the workstations at one or more of the different service areas comprises at least one travel path, an access spot, and a set of illuminable indicators as disclosed in the detailed descriptions of FIGS. 10A-10C, FIG. 12, and FIGS. 15A-15E. Internally subdivided storage bins are movable on the travel path through the workstation(s). Each of the internally subdivided storage bins is presentable at the access spot to a human worker or a robotic worker available at the workstation(s). The illuminable indicators are disposed around the access spot. At least one of the illuminable indicators is positioned in neighboring adjacency to each compartment of each of the internally subdivided storage bins. In an embodiment, the illuminable indicators are configured to border an access port that overlies the travel path at the access spot thereof. In another embodiment, each of the illuminable indicators is accompanied by a respective item quantity display configured to guide the placement or picking of items in predetermined quantities to or from one or more compartments of the internally subdivided storage bins.

In an embodiment, at least one of the workstations comprises at least one drive-through travel path on which the RSRVs 406 arc traversable through the workstation(s) to carry the storage bins therethrough. In an embodiment, at least one of the workstations is arranged to receive two different storage bins between which items received at the workstation(s) are transferred. In an embodiment, the workstation(s) receives a first storage bin via a drive-through travel path on which the RSRVs 406 are traversable through the workstation(s) to carry the first storage bin therethrough. In another embodiment, the workstation(s) receives a first storage bin via a separate conveyor-based travel path on which previously inducted storage bins traverse through the workstation(s) independent of the RSRVs 406. In an embodiment, the two different storage bins comprise internal compartments of quantities different from one another.

In an embodiment, at least one of the different service areas comprises at least one series of workstations arranged in a row extending outward from the ASRS structure 208 and served by a bin conveyor as disclosed in the detailed description of FIG. 14 and FIGS. 15A-15E. The bin conveyor comprises an outbound section extending outward from the ASRS structure 208 and passing by the series of workstations. The bin conveyor further comprises a series of offshoots, each branching off the outbound section of the bin conveyor to a respective one of the workstations to deliver a received storage bin thereto. In an embodiment, at least one series of workstations is served by a package conveyor operable to convey packaged orders from the workstations back toward the ASRS structure 208.

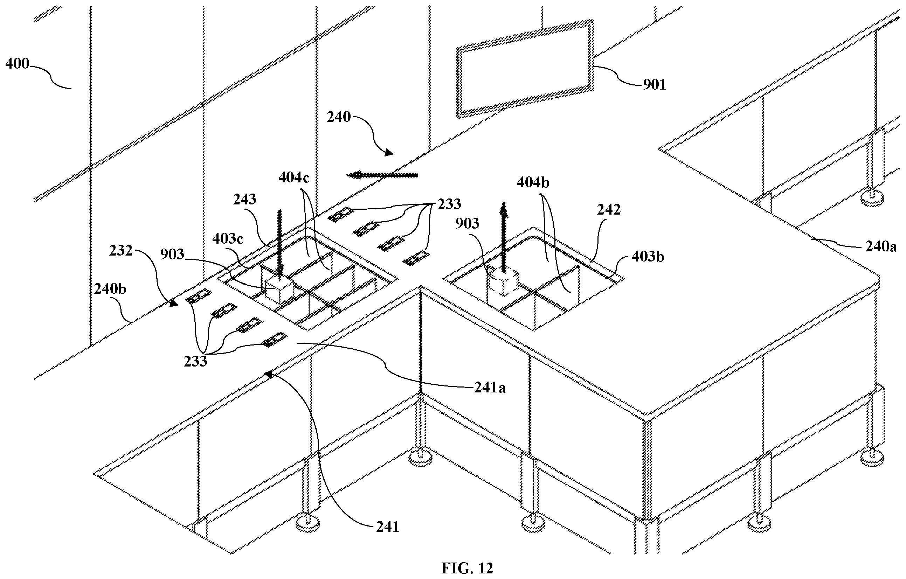

In an embodiment, at least one of the workstations comprises a picking port and a placement port as disclosed in the detailed descriptions of FIGS. 10A-10C and FIG. 12. The picking port overlies a supply bin pathway on which a supply storage bin containing one or more items to be picked is movable through the workstation(s) to allow picking of one or more items from the supply storage bin when parked on the supply bin pathway at a picking spot beneath the picking port. The placement port overlies a recipient bin pathway on which a recipient storage bin for which one or more items are destined is movable through the workstation(s) to allow placement of one or more items to the recipient storage bin when parked on the recipient bin pathway at a placement spot beneath the placement port. In an embodiment, a first one of the supply bin pathway and the recipient bin pathway is an extension track connected to a track of the ASRS structure 208 on which the fleet of RSRVs 406 navigate the ASRS structure 208, whereby a first one of the picking port and the placement port is served by one of the RSRVs 406 navigating the extension track to carry a corresponding one of the supply storage bin and the recipient storage bin to the first one of the picking port and the placement port. A second one of the supply bin pathway and the recipient bin pathway comprises a conveyor-based path running off the track of the ASRS structure 208 to receive the corresponding one of the supply storage bin and the recipient storage bin from one of the RSRVs 406 navigating the track. In an embodiment, at least one of the supply bin pathway and the recipient bin pathway is arranged to both receive and return the corresponding one of the supply storage bin and the recipient storage bin from and to the track of the ASRS structure 208. In another embodiment, both of the supply bin pathway and the recipient bin pathway are arranged to receive and return the corresponding one of the supply storage bin and the recipient storage bin from and to the track of the ASRS structure 208. At least one of the picking port and the placement port is bordered by a set of illuminable indicators occupying a layout that places at least one of the illuminable indicators in neighboring adjacency to each compartment of a respective one of the supply storage bin and the recipient storage bin.

In an embodiment as illustrated in FIG. 3, the layout of the order fulfillment system 200 further comprises a last mile sort area 216. The last mile sort area 216 comprises storage racking integrated into or added adjacently onto the ASRS structure 208 for storing larger multi-order shipment-consolidation containers, for example, pallet boxes or gaylords, into which packaged orders from the packing area 210 are autonomously compiled for later consolidated pickup by the outbound transport service or carrier vehicles 214 at the outbound shipping docks 215b of the facility. The storage racking of the last mile sort area 216 delimits storage spaces of a greater size than the storage locations of the ASRS structure 208. For example, the last mile sort area 216 comprises at least one row of storage racking running along the outer perimeter of the ASRS structure 208. The shipment-consolidation containers are compatible in size and shape with the storage spaces of the storage racking. In an embodiment, the storage spaces of the storage racking are defined at positions accessible from the three-dimensional grid structure, and at least one of the robotic vehicles is operable to receive the packaged orders from at least one packing workstation and compile the packaged orders into the shipment-consolidation containers. The last mile sort area 216, therefore, replaces or reduces the requirements for conventional shipping areas 114 and 213 as illustrated in FIG. 1 and FIG. 2, since palletization of completed orders into consolidated multi-order pallets is completed autonomously in the last mile sort area 216.

In an embodiment, the storage racking is served by a combination of a navigation structure and at least one package-handling robotic vehicle as disclosed in the detailed description of FIGS. 19-20. The navigation structure comprises assembled track rails and upright frame members of a same type and relative spacing used in the three-dimensional grid structure to form the two-dimensional gridded track layout, the storage columns, and the upright shaft neighboring each of the storage columns. The package-handling robotic vehicle is navigable within the navigation structure by travel in two dimensions on the assembled track rails and by travel in an ascending direction and a descending direction in a third dimension on the upright frame members. The package-handling robotic vehicle is operable to receive the packaged orders from at least one packing workstation, carry the packaged orders through the navigation structure to the storage spaces, and compile the packaged orders into the shipment-consolidation containers located in the storage spaces.

As disclosed in more detail below, the last mile sort area 216 employs the same type of track construction used within the ASRS structure 208 such that robotic package-handling vehicles 1700 as illustrated in FIG. 17, operable to receive the packaged orders from the packing area 210 and transfer the packaged orders into the larger multi-order shipment-consolidation containers, can share the same locomotive configuration as the RSRVs 406 of the ASRS structure 208. In various embodiments, access to the larger multi-order shipment-consolidation containers is achieved from the ASRS structure 208 itself, whereby the RSRVs 406 operable to handle the storage bins 403 in the ASRS structure 208 and the robotic package-handling vehicles 1700 operable to transfer the packaged orders to the larger multi-order shipment-consolidation containers, both navigate these tasks within the same ASRS structure 208 as one another. Such resource sharing among these different service areas of the order fulfillment system 200 contributes to the spatial and material efficiency of the facility.

As illustrated in FIG. 3, the decanting/induction area 204 and the VAS and returns area 205 of the order fulfillment system 200 are positioned at the first perimeter side 208a of the ASRS structure 208 that faces the receiving area 202 and the neighboring inbound shipping docks 215a of the facility. The picking area 209 is positioned at the neighboring second perimeter side 208b of the ASRS structure 208, and the packing area 210 and the last mile sort area 216 are positioned at the third perimeter side 208c of the ASRS structure 208 that opposes the first perimeter side 208a and faces toward the outbound shipping docks 215b of the facility. Accordingly, in various embodiments, different perimeter sides 208a, 208b, 208c, and 208d of the ASRS structure 208 are each occupied by a different combination of workstations so that each perimeter side of the ASRS structure 208 is dedicated to one particular service task or a particular combination of service tasks that differs from those performed at the other perimeter sides. Furthermore, the oversized item storage area 212 illustrated in FIG. 3 occupies a corner of the facility just outside the last mile sort area 216 at the third perimeter side 208c of the ASRS structure 208, and from this corner, continues along the fourth remaining perimeter side 208d of the ASRS structure 208 that opposes the second perimeter side 208b at which the picking area 209 resides. In an embodiment as illustrated in FIG. 3, the consolidation area 217 is positioned between the oversized item storage area 212 and the packing area 210 at the third perimeter side 208c of the ASRS structure 208. Customer ordered large-scale items are pulled from the pallet racking or other organizational structure of the oversized item storage area 212 and are consolidated with small-scale items of the same order that are pulled from the ASRS structure 208 at the picking area 209, and transferred onward therefrom to the consolidation area 217 in an order bin.

In an embodiment, the ASRS structure 208 of the order fulfillment system 200 disclosed herein comprises a three-dimensional gridded storage structure and associated RSRVs and storage bins of the type disclosed in Applicant's US Patent Application Numbers 15/568,646, 16/374,123, 16/374,143, and 16/354,539, each of which is incorporated herein by reference in its entirety.

FIG. 4 illustrates a top isometric view of an automated storage and retrieval system (ASRS) structure 208 comprising a three-dimensional (3D) gridded storage structure 400 used in the space-efficient order fulfillment system 200 shown in FIGS. 2-3, according to an embodiment herein. A small-scale example of the 3D gridded storage structure 400 is illustrated in FIG. 4. As illustrated in FIG. 4, the gridded storage structure 400 comprises two-dimensional gridded track layouts, that is, a gridded upper track layout 401 positioned in an elevated horizontal plane above a matching and aligned gridded lower track layout 402 situated in a lower horizontal plane closer to a ground level. Between the aligned gridded upper track layout 401 and gridded lower track layout 402 is a three-dimensional array of storage locations, each capable of holding a respective storage bin 403 therein. The storage locations are arranged in vertical storage columns 404, in which storage locations of equal square footprint are aligned over one another. Each vertical storage column 404 is neighbored by a vertically upright shaft 405 through and from which the storage locations of the vertical storage column 404 are accessible. The vertically upright shaft 405 neighboring each of the storage locations is accessible from the gridded lower track layout 402. A fleet of robotic vehicles, for example, the robotic storage/retrieval vehicles (RSRVs) 406, is navigable within the three-dimensional array of storage locations by travel in two dimensions on at least one two-dimensional gridded track layout, for example, the gridded lower track layout 402, to access the vertically upright shaft 405 neighboring any of the storage columns 404, and by travel in an ascending direction and a descending direction in a third dimension through the vertically upright shaft 405 neighboring any of the storage columns 404. The fleet of RSRVs 406 is configured to horizontally traverse each track layout 401 and 402 in two dimensions, and traverse vertically between the two track layouts 401 and 402 in a third dimension via the open upright shafts 405.

Each track layout 401 and 402 comprises a set of X-direction rails 407 lying in the X-direction of the respective horizontal plane, and a set of Y-direction rails 408 perpendicularly crossing the X-direction rails 407 in the Y-direction of the same horizontal plane. The crossing X-direction rails 407 and Y-direction rails 408 define a horizontal reference grid of the 3D gridded storage structure 400, where each horizontal grid row is delimited between an adjacent pair of the X-direction rails 407 and each horizontal grid column is delimited between an adjacent pair of the Y-direction rails 408. Each intersection point between one of the horizontal grid columns and one of the horizontal grid rows denotes a position of a respective vertical storage column 404 or a respective upright shaft 405. That is, each vertical storage column 404 and each upright shaft 405 resides at a respective Cartesian coordinate point of the horizontal reference grid at a respective area bound between two of the X-direction rails 407 and two of the Y-direction rails 408. Each such area bound between four rails in either track layout 401 or 402 is herein referred to as a respective "spot" of the track layout 401 or 402. The three-dimensional addressing of each storage location in the 3D gridded storage structure 400 is completed by a given vertical level at which a given storage location resides within the respective vertical storage column 404. That is, a three-dimensional address of each storage location is defined by the horizontal grid row, the horizontal grid column, and the vertical storage column level of the storage location in the 3D gridded storage structure 400.

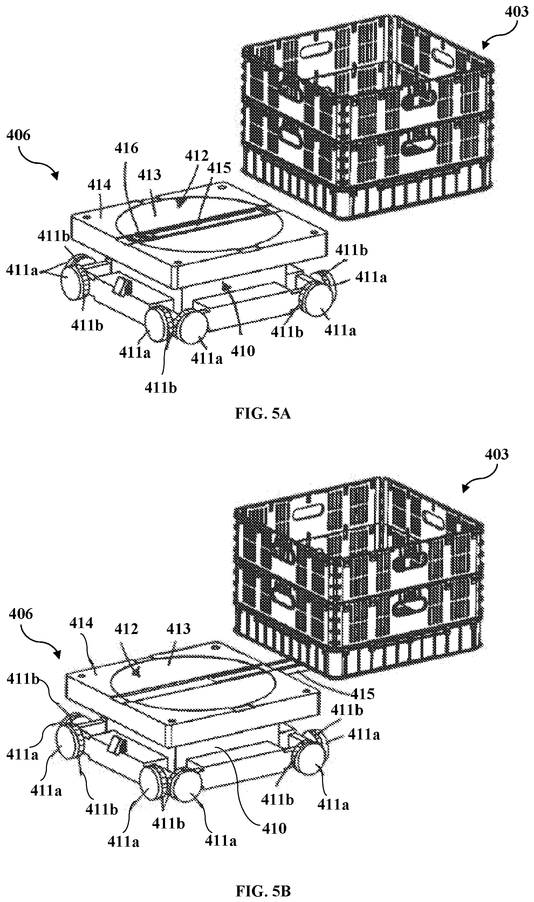

A respective upright frame member 409 spans vertically between the gridded upper track layout 401 and the gridded lower track layout 402 at each intersection point between the X-direction rails 407 and the Y-direction rails 408, thereby cooperating with the track rails 407 and 408 to define a framework of the 3D gridded storage structure 400 for containing and organizing a 3D array of storage bins 403 within this framework. As a result, each upright shaft 405 of the 3D gridded storage structure 400 comprises four vertical frame members 409 spanning the full height of the upright shaft 405 at the four corners thereof. Each vertical frame member 409 comprises respective sets of rack teeth arranged in series in the vertical Z-direction of the 3D gridded storage structure 400 on two sides of the vertical frame member 409. Each upright shaft 405, therefore, comprises eight sets of rack teeth in total, with two sets of rack teeth at each corner of the upright shaft 405, which cooperate with eight pinion wheels 411a, 411b on each of the RSRVs 406 illustrated in FIGS. 5A-5B, to enable traversal of the RSRV 406 on and between the gridded upper and lower track layouts 401 and 402 in an ascending direction and a descending direction through the upright shafts 405 of the 3D gridded storage structure 400.

FIG. 5A illustrates a robotic storagc/rctricval vehicle (RSRV) 406 and a compatible storage bin 403 employed in the automated storage and retrieval system (ASRS) structure 208 of the space-efficient order fulfillment system 200 shown in FIGS. 2-3, according to an embodiment herein. The fleet of RSRVs 406 of the type shown in FIGS. 5A-5B is navigable within the three-dimensional (3D) array of storage locations in the 3D gridded storage structure 400 illustrated in FIG. 4, by both a travel in two dimensions over the two-dimensional footprint of the 3D gridded storage structure 400 and a travel in an ascending direction and a descending direction in a third dimension through the upright shaft 405 neighboring each of the storage columns 404 illustrated in FIG. 4, whereby the transfer of the storage bins 403 between the storage locations and any of the different service areas of the order fulfillment system 200 is performed entirely by the RSRVs 406. Each RSRV 406 comprises a wheeled frame or chassis 410 comprising round conveyance wheels 411a and toothed pinion wheels 411b. The conveyance wheels 411a are configured for conveyance of the RSRV 406 over the gridded upper and lower track layouts 401 and 402 in a track-riding mode. The toothed pinion wheels 411b are positioned inwardly of the conveyance wheels 411a for traversal of the RSRV 406 through the rack-equipped shafts in an ascending direction and a descending direction in a shaft-traversing mode. Each toothed pinion wheel 411b and a respective conveyance wheel 411a are part of a combined singular wheel unit, of which the entirety, or at least the conveyance wheel 411a, is horizontally extendable in an outboard direction from the RSRV 406 for use of the conveyance wheels 411a in the track-riding mode on either track layout 401 or 402, and horizontally retractable in an inboard direction of the RSRV 406 for use of the toothed pinion wheels 411b in the shaft-traversing mode where the toothed pinion wheels 411b engage with the rack teeth of the vertical frame members 409 of the upright shaft 405.

A set of four X-direction wheel units are arranged in pairs on two opposing sides of the RSRV 406 to drive the RSRV 406 on the X-direction rails 407 of either track layout 401 or 402 of the 3D gridded storage structure 400. A set of four Y-direction wheel units are arranged in pairs on the other two opposing sides of the RSRV 406 to drive the RSRV 406 on the Y-direction rails 408 of either track layout 401 or 402. One set of wheel units is raiseable/lowerable relative to the other set of wheel units to switch the RSRV 406 between an X-direction travel mode and a Y-direction travel mode. Raising the one set of wheel units when in the outboard positions seated on the gridded upper track layout 401 is also operable to lower the other set of wheel units into an engagement with the rack teeth of an upright shaft 405, after which the raised wheel units are then also shifted inboard, thereby completing transition of the RSRV 406 from the gridded upper track layout 401 into an upright shaft 405 for descending travel therethrough. Similarly, lowering the one set of wheel units when in the outboard positions seated on the gridded lower track layout 402 is also operable to raise the other set of wheel units into an engagement with the rack teeth of an upright shaft 405, after which the lowered wheel units are then also shifted inboard, thereby completing transition of the RSRV 406 from the gridded lower track layout 402 into an upright shaft 405 for ascending travel therethrough. In an embodiment, an external lifting device in the gridded lower track layout 402 is additionally or alternatively used to air lift or perform lifting of the RSRV 406 from the gridded lower track layout 402 into an overlying shaft.

Each RSRV 406 comprises an upper support platform 412 on which the storage bin 403, for example, an unprocessed storage bin, an inventory storage bin, or an order bin, is receivable for carrying by the RSRV 406. The upper support platform 412 comprises a rotatable turret 413 surrounded by a stationary outer deck surface 414. The rotatable turret 413 comprises an extendable/retractable arm 415, herein referred to as a "turret arm", mounted in a diametric slot of the rotatable turret 413 and movably supported therein for linear movement into and out of a deployed position extending outwardly from an outer circumference of the rotatable turret 413.

FIG. 5B illustrates the RSRV 406 and the compatible storage bin 403 of FIG. 5A, showing an extension of a turret arm 415 of the RSRV 406 for engaging with the storage bin 403 to push or pull the storage bin 403 off of or onto the RSRV 406, according to an embodiment herein. The turret arm 415 carries a catch member 416 thereon, for example, on a shuttle movable back and forth along the turret arm 415 for engaging with mating catch features on an underside of the storage bin 403. Together with the rotatable function of the turret 413, the turret arm 415 with the catch member 416 allows pulling of a storage bin 403 onto the upper support platform 412 and pushing of the storage bin 403 off the upper support platform 412 at all four sides of the RSRV 406, thereby allowing each RSRV 406 to access a storage bin 403 on any side of any upright shaft 405 in the 3D gridded storage structure 400, including fully-surrounded upright shafts 405 that are each surrounded by storage columns 404 on all four sides of the upright shaft 405 for optimal storage density in the 3D gridded storage structure 400. That is, each RSRV 406 is operable in four different working positions inside any of the upright shafts 405 to access any of the storage locations on any of the four different sides of the upright shaft 405 to deposit or retrieve a respective storage bin 403 to or from a selected storage location.

In an embodiment, the framework of the 3D gridded storage structure 400 illustrated in FIG. 4, comprises a set of shelving brackets at each storage location to cooperatively form a shelf for the storage bin 403 currently stored at the storage location, whereby any given storage bin 403 can be removed from its storage location by one of the RSRVs 406 without disrupting the storage bin 403 above and below the given storage bin 403 in the same storage column 404. Similarly, the shelf defined by the set of shelving brackets allows a storage bin 403 to be returned to a prescribed storage location at any storage level in the 3D array of storage locations in the 3D gridded storage structure 400. Accordingly, through two-dimensional horizontal navigation of the track layouts 401 and 402, each RSRV 406 is able to access any of the upright shafts 405 and is able to travel vertically therethrough in an ascending direction or a descending direction in the third dimension to access any of the storage locations and deposit or retrieve a storage bin 403 therefrom.

The decanting area 204, the VAS and returns area 205, the picking area 209, and the packing area 210 of the order fulfillment system 200 illustrated in FIGS. 2-3, are installed in immediate adjacency to the outer perimeter of one of the track layouts, for example, the gridded lower track layout 402 of the 3D gridded storage structure 400 that defines the ASRS structure 208 such that the transfer of items to and from each of these service areas is performed by the same fleet of RSRVs 406 responsible for depositing and retrieving the storage bins 403 to and from the storage locations in the 3D gridded storage structure 400, thereby avoiding the use of long-range inter-area conveyors. Moreover, in transferring items from one service area to another, an orchestrated movement of the fleet of RSRVs 406 carrying these items from one service area to another or a temporary deposit of the storage bins 403 carrying some of these items into respective storage locations in the 3D gridded storage structure 400, can be used for buffering or sorting purposes without use of conventional, space-intensive sorting conveyors.

FIG. 6 illustrates a top isometric view of the layout of the order fulfillment system 200 shown in FIG. 3, according to an embodiment herein. The different service areas, for example, the decanting/induction area 204, the value-added service (VAS) and returns area 205, the picking area 209, the packing area 210, the last mile sort area 216, the consolidation area 217, and the oversized item storage area 212 of the order fulfillment system 200 are positioned adjacent to an outer perimeter constituted by the perimeter sides 208a, 208b, 208c, and 208d of the two-dimensional footprint of the automated storage and retrieval system (ASRS) structure 208 as illustrated in FIG. 6.

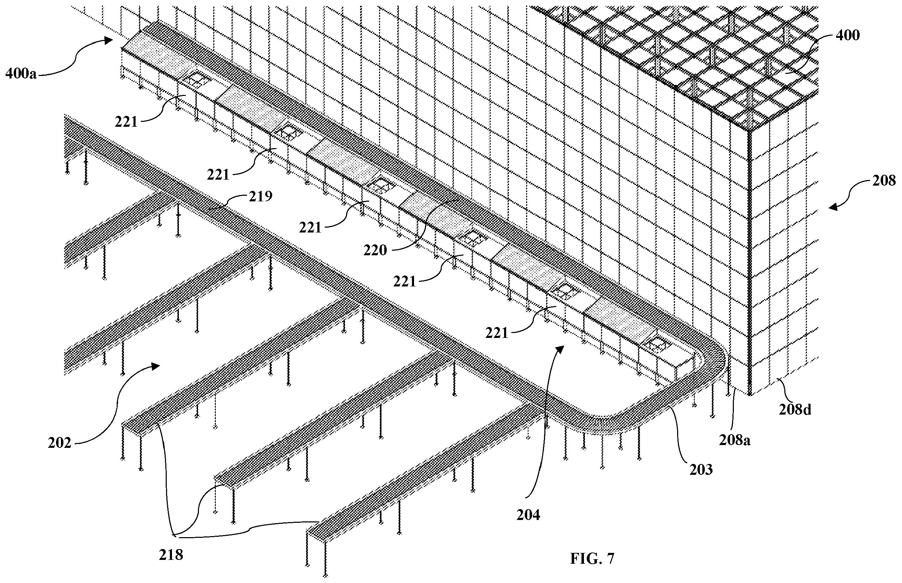

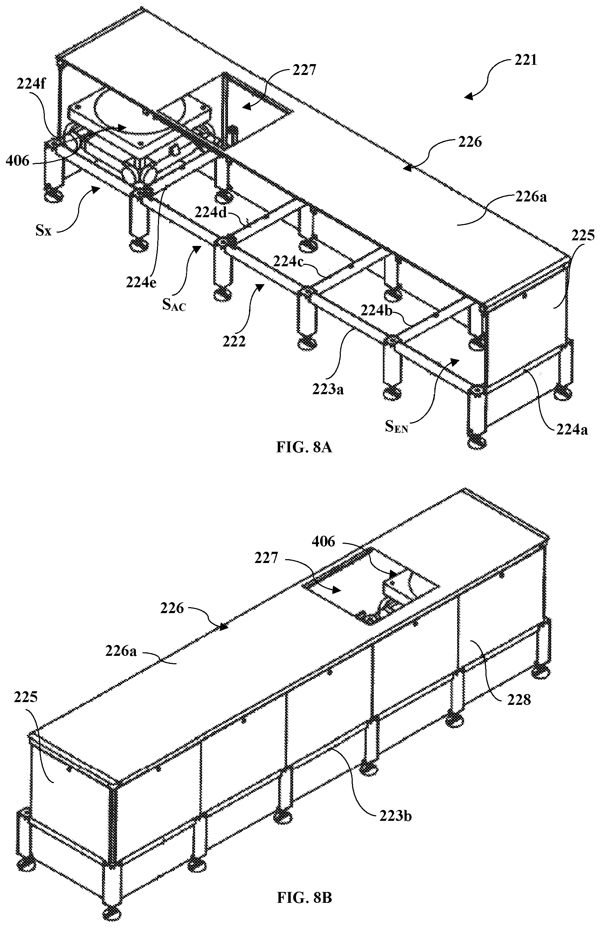

FIG. 7 illustrates a partial perspective view of the layout of the order fulfillment system 200 shown in FIG. 6, showing a receiving area 202 and a decanting/induction area 204 positioned on a first perimeter side 208a of the automated storage and retrieval system (ASRS) structure 208 of the order fulfillment system 200, according to an embodiment herein. The partial perspective view in FIG. 7 illustrates a corner of the ASRS structure 208 where the first perimeter side 208a and the fourth perimeter side 208d intersect. In an embodiment, the receiving area 202 is populated by a series of parallel feed conveyors 218 on which depalletized or loose cases of incoming new inventory items and customer returns, herein referred to as "inbound items", are placed after unloading of such palletized or loose case inbound shipments from the inbound transport service or carrier vehicles 201 illustrated in FIG. 2. The parallel feed conveyors 218 feed into the intake conveyor 203. In an embodiment, the intake conveyor 203 is configured in a U-shaped layout comprising a first leg 219 and a second leg 220. The first leg 219 of the intake conveyor 203 passes by the parallel feed conveyors 218 in perpendicular relation to the parallel feed conveyors 218. The second leg 220 of the intake conveyor 203 runs opposite the first leg 219 in a parallel relationship to the first perimeter side 208a of the ASRS structure 208. Between the second leg 220 of the intake conveyor 203 and the ASRS structure 208, in an embodiment, the decanting/induction area 204 comprises a singular row of decanting/induction workstations 221. In an embodiment, the decanting/induction workstations 221 are of the type illustrated in FIGS. 8A-8B and disclosed in Applicant's US Patent Application Numbers 16/374,123 and 16/374,143.

FIG. 8A illustrates a perspective view of a decanting/induction workstation 221 used at the decanting/induction area 204 shown in FIG. 7, showing an inner side of the decanting/induction workstation 221 facing towards the automated storage and retrieval system (ASRS) structure 208, according to an embodiment herein. The ASRS structure 208 comprises the three-dimensional (3D) gridded storage structure 400 illustrated in FIG. 4. FIG. 8B illustrates a perspective view of the decanting/induction workstation 221 shown in FIG. 8A, showing an opposing outer side of the decanting/induction workstation 221, according to an embodiment herein. Each decanting/induction workstation 221 in the decanting/induction area 204 comprises a gridded lower track 222. The gridded lower track 222 comprises a pair of longitudinal rails 223a, 223b running a length of the decanting/induction workstation 221 in parallel relation to the first perimeter side 208a of the ASRS structure 208. The gridded lower track 222 further comprises a set of cross rails 224a-224f perpendicularly interconnecting the longitudinal rails 223a, 223b with one another at regularly spaced intervals therealong. In an embodiment, the longitudinal rails 223a, 223b and the cross rails 224a-224f are of the same type used in the gridded upper track layout 401 and the gridded lower track layout 402 of the 3D gridded storage structure 400. The spacing between the longitudinal rails 223a, 223b matches the spacing between the cross rails 224a-224f and is equal to the inter-rail spacing employed between the rails 407 and 408 of the gridded upper track layout 401 and the gridded lower track layout 402 of the 3D gridded storage structure 400 in both the X direction and the Y direction thereof. Accordingly, the gridded lower track 222 of the decanting/induction workstation 221 is traversable by the robotic storage/retrieval vehicles (RSRVs) 406 in the same manner as the gridded upper track layout 401 and the gridded lower track layout 402 of the 3D gridded storage structure 400. The gridded lower track 222 of the decanting/induction workstation 221 is positioned at the same elevation as the gridded lower track layout 402 of the 3D gridded storage structure 400 to form a coplanar extension track extending therefrom.

The decanting/induction workstation 221 comprises a chute 225 mounted to the gridded lower track 222 and spanning longitudinally end-to-end thereof. The chute 225 comprises an outer side wall 228 illustrated in FIG. 8B, standing upright from an outer one of the longitudinal rails, that is, 223b, and spanning the full length of the decanting/induction workstation 221. The chute 225 further comprises a top cover panel 226 spanning the full length of the decanting/induction workstation 221. The inner longitudinal rail 223a of the decanting/induction workstation 221 is a shared rail that also defines an outermost rail of the gridded lower track layout 402 of the 3D gridded storage structure 400 at the respective perimeter side 208a thereof. An underside of the top cover panel 226 defines an interior ceiling of the chute 225, while an opposing topside of the top cover panel 226 defines an external countertop worksurface 226a on which the cases of inbound items received at the second leg 220 of the intake conveyor 203 are placed for picking of inbound items therefrom during the decanting process. Each square area delimited between the two longitudinal rails 223a, 223b and any adjacent pair of the cross rails 224a-224f is herein referred to as a respective "spot" along the gridded lower track 222 of the decanting/induction workstation 221. A spot at a first end of the chute 225 is referred to as an entrance spot S_{FN} of the decanting/induction workstation 221. An RSRV 406 enters the chute 225 at the entrance spot S_{EN} by riding onto the first and second cross rails 224a, 224b from a respective pair of rails aligned therewith in the gridded lower track layout 402 of the 3D gridded storage structure 400. The spot at the opposing second end of the chute 225 is referred to as an exit spot Sx. The RSRV 406 exits the chute 225 at the exit spot Sx and re-enters the 3D gridded storage structure 400 by riding off the last and second-last cross-rails 224f, 224e onto another respective pair of rails aligned therewith in the gridded lower track layout 402 of the 3D gridded storage structure 400.

Of a number of intermediate spots between the entrance spot S_{EN} and the exit spot Sx of the decanting/induction workstation 221, one spot is designated as an "access spot" S_{AC} at which the RSRV 406 is accessible by a human worker or a robotic worker via an access opening 227 penetrating through the top cover panel 226 of the chute 225 from the countertop worksurface 226a thereof into an interior space of the chute 225. Accordingly, when an RSRV 406 traveling longitudinally through the chute 225 from the entrance spot S_{EN} to the exit spot Sx arrives and stops at the access spot S_{AC}, a human worker or a robotic worker at the decanting/induction workstation 221 can interact with an empty or less-than full storage bin carried atop the RSRV 406 to place therein the unprocessed inbound items from the case being decanted. In an embodiment, the empty or less-than full storage bin is delivered to the access spot S_{AC} by the RSRV 406 from a storage location at which the empty or less-than full storage bin 403 was previously stored in the 3D gridded storage structure 400. In another embodiment, the empty or less-than full storage bin is placed atop the RSRV 406 through the access opening 227 upon the arrival of the RSRV 406 at the access spot S_{AC}. Having received the unprocessed inbound items, the RSRV 406 then inducts the unprocessed storage bin into the 3D gridded storage structure 400. The RSRV 406 carries the unprocessed storage bin from the access spot S_{AC}, onward to the exit spot Sx, from where the RSRV 406 rides back onto the gridded lower track layout 402 of the 3D gridded storage structure 400, and either stores the unprocessed storage bin at any available storage location in the storage columns 404 of the 3D gridded storage structure 400 illustrated in FIG. 4, or transports the unprocessed storage bin directly onward to the VAS and returns area 205 for processing of the unprocessed items in the unprocessed storage bin. In the embodiment illustrated in FIG. 8A, the chute 225 of each decanting/induction workstation 221 is open over the entire inner side that faces into the 3D gridded storage structure 400, and therefore, any of the spots on the gridded lower track 222 of the decanting/induction workstation 221, including the access spot S_{AC} thereof, serves as an entrance spot and/or an exit spot by which the RSRVs 406 can enter and exit the decanting/induction workstation 221.

The decanting/induction workstations 221 are, therefore, directly coupled to the gridded lower track layout 402 of the 3D gridded storage structure 400 at positions immediately adjacent thereto by extension tracks on which the RSRVs 406 can enter and exit the decanting/induction workstations 221 to receive the inbound items being decanted from the cases in which the inbound items arrived at the facility into unprocessed storage bins carried or placed atop the RSRVs 406, which are then inducted immediately and directly into the 3D gridded storage structure 400 without use of any conveyors between the decanting/induction area 204 and the 3D gridded storage structure 400.

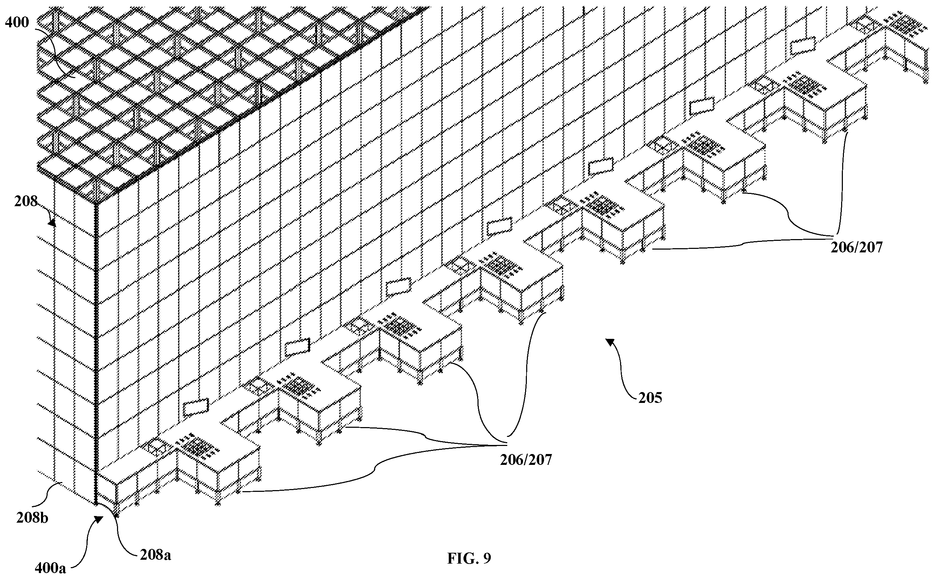

FIG. 9 illustrates a partial perspective view of the layout of the order fulfillment system 200 shown in FIG. 6, showing a value-added service (VAS) and returns arca 205 positioned further down the first perimeter side 208a of the automated storage and retrieval system (ASRS) structure 208 from the decanting/induction area 204 shown in FIG. 7, according to an embodiment herein. The partial perspective view in FIG. 9 illustrates the first perimeter side 208a of the ASRS structure 208 toward a corner at which the first perimeter side 208a and the second perimeter side 208b of the ASRS structure 208 intersect. From this vantage point, FIG. 9 illustrates the VAS and returns area 205 populated by a series of VAS/returns-handling workstations 206/207 distributed along the first perimeter side 208a of the ASRS structure 208. Each of the VAS/returns-handling workstations 206/207 is individually and directly connected to the gridded lower track layout 401 of the three-dimensional (3D) gridded storage structure 400 constituting the ASRS structure 208 for service of these VAS/returns-handling workstations 206/207 by the same fleet of robotic storage/retrieval vehicles (RSRVs) 406 that serve the decanting/induction workstations 221 illustrated in FIG. 7 and deposit and retrieve storage bins 403 to and from the storage locations of the 3D gridded storage structure 400.

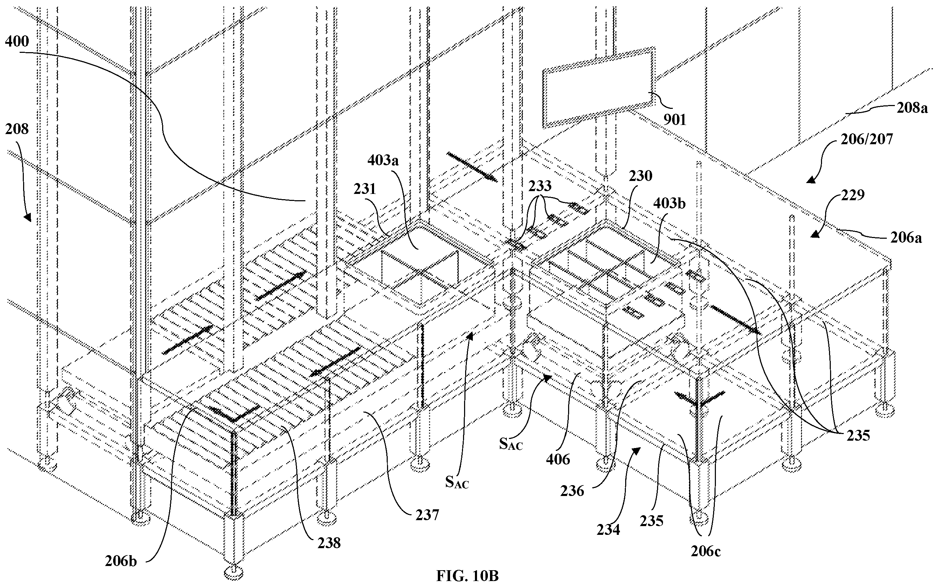

FIG. 10A illustrates a partial top perspective view of a VAS/returns-handling workstation 206/207 used at the VAS and returns area 205 shown in FIG. 9, as viewed from outside the automated storage and retrieval system (ASRS) structure 208, according to an embodiment herein. In an embodiment as illustrated in FIG. 10A, the VAS/returns-handling workstation 206/207 is of an L-shaped configuration and comprises a first leg 206a and a second leg 206b. The first leg 206a of the VAS/returns-handling workstation 206/207 projects outwardly from the first perimeter side 208a of the ASRS structure 208. The second leg 206b of the VAS/returns-handling workstation 206/207 extends parallel to the first perimeter side 208a of the ASRS structure 208. An interior of each VAS/returns-handling workstation 206/207 comprises an enclosure similar to the chute-like structure of the decanting/induction workstations 221. Accordingly, each VAS/returns-handling workstation 206/207 comprises upright outer walls 206c that enclose the VAS/returns-handling workstation 206/207 at sides thereof other than the inner side that opens into the three-dimensional (3D) gridded storage structure 400 that constitutes the ASRS structure 208 at the gridded lower track layout 402 thereof illustrated in FIG. 4. Each VAS/returns-handling workstation 206/207 further comprises a top cover panel 229, the underside of which defines an interior ceiling of the VAS/returns-handling workstation 206/207, and the opposing topside of which defines an external countertop worksurface 229a. Inside the first leg 206a of each VAS/returns-handling workstation 206/207, is a gridded lower track 234 illustrated in FIG. 10B which, similar to that of the decanting/induction workstations 221, is an extension of the gridded lower track layout 402 of the 3D gridded storage structure 400. Instead of a one-way track that is one-spot wide and runs parallel to the first perimeter side 208a of the ASRS structure 208, the gridded lower track 234 of each VAS/returns-handling workstation 206/207 is a two-way track that is two spots wide and runs perpendicular to the first perimeter side 208a of the ASRS structure 208.

FIG. 10B illustrates a partial top perspective view of the VAS/returns-handling workstation 206/207 shown in FIG. 10A as viewed from outside the automated storage and retrieval system (ASRS) structure 208, where the upright outer walls 206c and the top cover panel 229 of the VAS/returns-handling workstation 206/207 are shown as transparent layers to reveal internal components thereof and an internal workflow therethrough, according to an embodiment herein. The gridded lower track 234 in the first leg 206a comprises three longitudinal rails 235 running a length of the first leg 206a in a perpendicular relation to the first perimeter side 208a of the ASRS structure 208. The gridded lower track 234 in the first leg 206a further comprises a series of cross-rails 236 perpendicularly interconnecting the longitudinal rails 235 at regularly spaced intervals, thereby delimiting square spots of the gridded lower track 234. A first series of spots running along on an outer side of the first leg 206a, that is, the side thereof opposite the second leg 206b, denotes an outbound half of the two-way gridded lower track 234 of the first leg 206a, on which a robotic storage/retrieval vehicle (RSRV) 406 exits the three-dimensional (3D) gridded storage structure 400 at the gridded lower track layout 402 thereof illustrated in FIG. 4, and travels away from the 3D gridded storage structure 400 inside the first leg 206a of the VAS/returns-handling workstation 206/207. A second series of spots running along the opposing inner side of the first leg 206a denotes an inbound half of the two-way gridded lower track 234 of the first leg 206a on which the RSRV 406 can travel back into the 3D gridded storage structure 400 on the gridded lower track layout 402 thereof.

Above an access spot S_{AC} on the inbound half of the gridded lower track 234, a placement port or a placement-access port 230 opens through the top cover panel 229 from the countertop worksurface 229a thereof into the interior space of the first leg 206a of the VAS/returns-handling workstation 206/207. Accordingly, when an RSRV 406 traveling through the first leg 206a of the VAS/returns-handling workstation 206/207 stops at the access spot S_{AC} on the inbound half of its travel therethrough, a human worker or a robotic worker of the VAS/returns-handling workstation 206/207 can interact with an initially empty or less than full inventory storage bin 403b placed or already carried atop the RSRV 406 to place processed items in the inventory storage bin 403b once the inbound items 902 have been processed at this VAS/returns-handling workstation 206/207. Having received the processed items, the inventory storage bin 403b is then advanced onward from the access spot S_{AC} of the gridded lower track 234 of the VAS/returns-handling workstation 206/207 back into the 3D gridded storage structure 400 on the gridded lower track layout 402 thereof. The second leg 206b of the VAS/returns-handling workstation 206/207 similarly comprises a picking port or a picking-access port 231 penetrating through the top cover panel 229 from the countertop worksurface 229a thereof at a position overlying another access spot S_{AC} at which an unprocessed storage bin 403a is received to allow access to that unprocessed storage bin 403a for picking of the unprocessed inbound items 902 therefrom for processing and subsequent placement of the processed items into the inventory storage bin 403b through the placement-access port 230.

In an embodiment as illustrated in FIGS. 10A-10B, the unprocessed storage bins 403a are subdivided storage bins, each having multiple separated compartments 404a therein of a different quantity than the number of compartments 404b found in each inventory storage bin 403b, which in an embodiment, is also subdivided into multiple compartments 404b. As illustrated in FIGS. 10A-10B, each of the unprocessed storage bins 403a comprises four compartments 404a of a large size, while each of the inventory storage bins 403b comprises eight compartments 404b of a small size. In an embodiment, the overall outer dimensions of the different storage bins 403a, 403b are identical, thereby providing a universal fit of the storage bins 403a, 403b on the upper support platforms 412 of the RSRVs 406 illustrated in FIGS. 5A-5B, and in the storage locations of the 3D gridded storage structure 400. In an embodiment, the unprocessed storage bins 403a contain a greater quantity of items or stock keeping units (SKUs) than what is destined for a single inventory storage bin 403b, whereby the contents of an unprocessed storage bin 403a is transferred to multiple inventory storage bins 403b, whereby multiple inventory storage bins 403b are circulated past the placement-access port 230 of the first leg 206a of the VAS/returns-handling workstation 206/207 while the same unprocessed storage bin 403a sits statically at the picking-access port 231 of the second leg 206b of the VAS/returns-handling workstation 206/207.

Long term static parking of an RSRV 406 at the picking-access port 231 may be considered a wasted resource, preventing assignment of that particular RSRV 406 to other tasks in the meantime, and therefore, the second leg 206b of the VAS/returns-handling workstation 206/207 does not include a vehicle track for vehicle-carried travel of storage bins 403 through the second leg 206b of the VAS/returns-handling workstation 206/207. In an embodiment as illustrated in FIGS. 10B-10C, the second leg 206b of the VAS/returns-handling workstation 206/207 instead cmploys a conveyor-based travel path with a small-sized inlet conveyor 239 positioned inside the 3D gridded storage structure 400 at a perimeter-adjacent spot of the gridded lower track layout 402; a transfer table 237 occupying the access spot S_{AC} beneath the picking-access port 231; and a small-sized outlet conveyor 238 occupying an exit spot that neighbors the transfer table 237 on a side thereof opposite the first leg 206a of the VAS/returns-handling workstation 206/207.

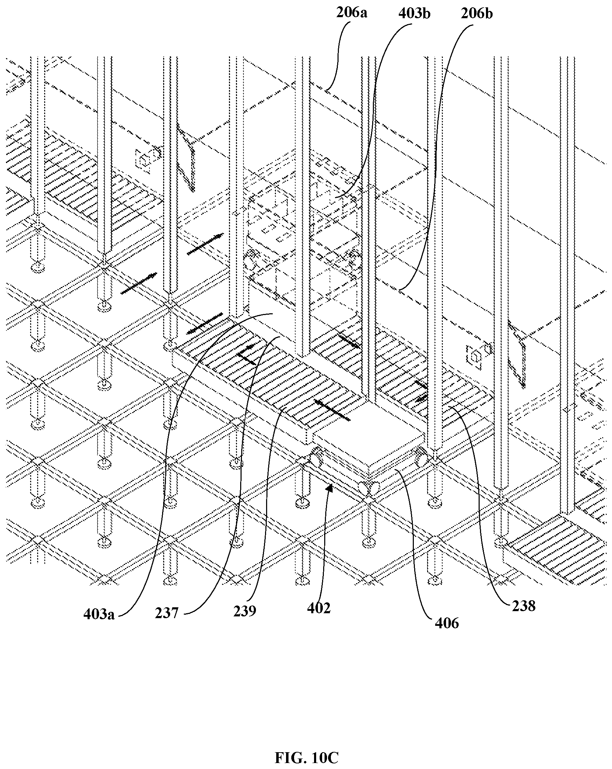

FIG. 10C illustrates a partial perspective view of the VAS/returns-handling workstation 206/207 shown in FIGS. 10A-10B as viewed from inside the automated storage and retrieval system (ASRS) structure 208, according to an embodiment herein. A robotic storage/retrieval vehicle (RSRV) 406 delivering an unprocessed storage bin 403a to the VAS/returns-handling workstation 206/207 parks beside the inlet conveyor 239 on the gridded lower track layout 402 of the 3D gridded storage structure 400, lowers its height-adjustable wheel set to lift the unprocessed storage bin 403a to an elevation slightly exceeding a topside of the inlet conveyor 239 of the VAS/returns-handling workstation 206/207, extends its turret arm 415 to deposit the unprocessed storage bin 403a onto the inlet conveyor 239, and then lowers its height-adjustable wheel set to lower the turret arm 415 out of engagement with the catch member in the unprocessed storage bin 403a to allow retraction of the turret arm 415 while leaving the unprocessed storage bin 403a behind on the inlet conveyor 239 of the VAS/returns-handling workstation 206/207. In an embodiment, one or more buffer conveyors (not shown) are added between the inlet conveyor 239 and the access spot S_{AC} below the picking-access port 231 to allow queuing of multiple unprocessed storage bins 403a. Provided that the neighboring access spot S_{AC} or a buffer conveyor spot is unoccupied by a previously delivered unprocessed storage bin 403a, the inlet conveyor 239 is activated to roll the newly arrived unprocessed storage bin 403a into or toward the access spot S_{AC} below the picking-access port 231.

After conveyance to the access spot S_{AC} below the picking-access port 231, and once all the inbound items 902 processed in the current VAS/returns processing task have been picked, the fully or partially emptied unprocessed storage bin 403a is shifted over onto an outlet conveyor 238. In an embodiment, at the outlet conveyor 238, an RSRV 406, whether the same one or another one different from the one that dropped the fully or partially emptied unprocessed storage bin 403a off, picks up the fully or partially emptied unprocessed storage bin 403a by extending its turret arm 415 to engage the fully or partially emptied unprocessed storage bin 403a, lowering its height-adjustable wheel set to lift the turret arm 415 into engagement with the catch member in the underside of the fully or partially emptied unprocessed storage bin 403a, and then retracts the turret arm 415 to pull the fully or partially emptied unprocessed storage bin 403a onto the RSRV 406. The RSRV 406 can then traverse the gridded lower track layout 402 of the 3D gridded storage structure 400 to a decanting/induction station 221 in need of an empty unprocessed storage bin, or can traverse the gridded lower track layout 402 to an upright shaft 405 neighbored by a storage column 404 illustrated in FIG. 4, with an unoccupied storage location in which the fully or partially emptied unprocessed storage bin 403a can be stored until later needed.

The VAS/returns-handling workstation 206/207, therefore, comprises two travel paths on which the inventory storage bins 403b and the unprocessed storage bins 403a are respectively transferable through the VAS/returns-handling workstation 206/207 past respective access ports at which interiors of the inventory storage bins 403b and the unprocessed storage bins 403a are accessible for respective placement and picking of items 902 to and from the respective storage bins 403b, 403a transitioning through the VAS/returns-handling workstation 206/207. One travel path involves vehicle-carried travel of the respective storage bin over an extension track of the 3D gridded storage structure 400, while the other travel path is a short conveyor-based path at which drop-off and pickup of the respective storage bin is also performed by the fleet of RSRVs 406.

In an embodiment as illustrated in FIGS. 10A-10B, the VAS/returns-handling workstation 206/207 further comprises a light guidance system, for example, a put-to-light worker guidance system 232. The put-to-light worker guidance system 232 comprises multiple illuminable indicators 233 mounted to the top cover panel 229 of the VAS/returns-handling workstation 206/207 in close adjacency to a border of the placement-access port 230. In an embodiment, the quantity and layout of the illuminable indicators 233 match the layout of the compartments 404b of the inventory storage bins 403b, whereby each illuminable indicator 233 closely neighbors a respective compartment 404b of the inventory storage bin 403b when the inventory storage bin 403b is seated at the access spot of the first leg 206a of the VAS/returns-handling workstation 206/207. In other embodiments, at minimum, the quantity and layout of the illuminable indicators 233 are such that at least one illuminable indicator 233 neighbors each compartment 404c of the inventory storage bin 403b. In the embodiment illustrated in FIGS. 10A-10B, the inventory storage bin 403b comprises, for example, eight compartments 404b, and the put-to-light worker guidance system 232 comprises, for example, eight illuminable indicators 233, laid out in a one-to-one ratio with the compartments 404b of the inventory storage bin 403b, where indication of one of the compartments 404b is provided by illumination of a respective illuminable indicator 233 that neighbors that compartment 404b. This allows alternative use of the same put-to-light worker guidance system 232 with more subdivided inventory storage bins 403b having eight compartments 404b, where the one-to-one illuminable indicator to compartment ratio means that illumination of only one neighboring illuminable indicator is used to indicate a respective compartment 404b. The same put-to-light worker guidance system 232 also allows optional use with a two-compartment inventory storage bin, of which each compartment neighbors a respective illuminable indicator-bordered side of the placement-access port 230, and where each compartment is neighbored by a set of four illuminable indicators 233 residing along that side of the placement-access port 230, and all of the four illuminable indicators 233 are illuminated to indicate that compartment of the inventory storage bin.

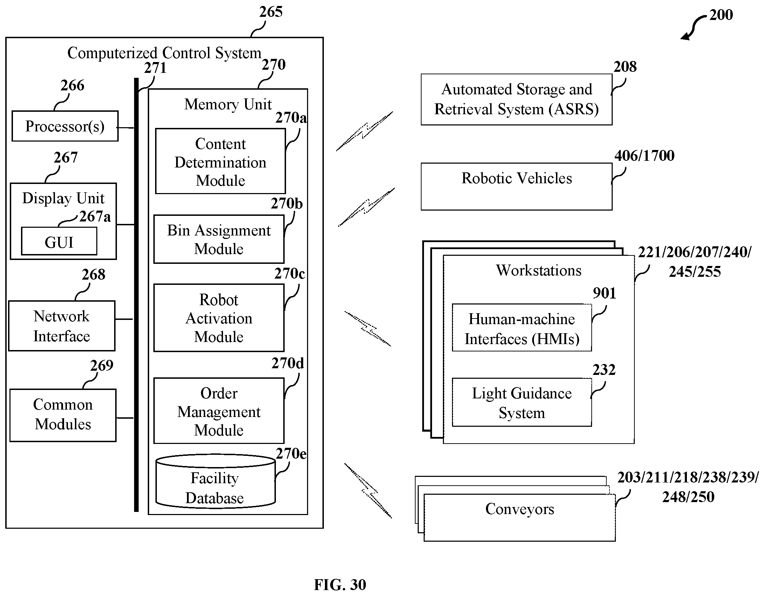

Under command by a computerized control system (CCS) 265 of the facility illustrated in FIG. 30, that also wirelessly communicates with the fleet of RSRVs 406 to control conveyance thereof throughout the ASRS structure 208 to perform various tasks based on inventory and order information stored or retrieved by the CCS 265, the put-to-light worker guidance system 232 is operable to display a selective illumination of the neighboring illuminable indicator(s) at the countertop worksurface 229a to identify a compartment or compartments 404b of the inventory storage bin 403b currently parked at the access spot of the first leg 206a of the VAS/returns-handling workstation 206/207. Items picked from the compartment(s) 404a of the unprocessed storage bin 403a at the second leg 206b of the VAS/returns-handling workstation 206/207 should be placed into the compartment or compartments 404b of the inventory storage bin 403b currently parked at the access spot of the first leg 206a of the VAS/returns-handling workstation 206/207 after VAS or returns processing thereof. In an embodiment, the illuminable indicators 233 are illuminable push-buttons configured to be pushed by a human worker once the indicated placement task has been completed. In another embodiment, the illuminable indicators 233 are accompanied by a separate neighboring push-button or another worker-activated input device employed for such confirmation of a completed placement task.

A human-machine interface (HMI) at each VAS/returns-handling workstation 206/207 comprises a display screen 901 for displaying instructions related to the necessary VAS actions to be taken or tasks to be performed on the contents of the arrived unprocessed storage bin 403a, for example, based on an optical scan of the unprocessed storage bin 403a or an order identifier code found on or carried in the unprocessed storage bin 403a, or a wireless transmission of a bin or order identifier by a radio frequency identification (RFID) tag or other means upon arrival of the unprocessed storage bin 403a at the VAS/returns-handling workstation 206/207. Once all the processed items destined for the particular inventory storage bin 403b currently parked at the placement-access port 230 have been placed in that inventory storage bin 403b, the RSRV 406 carrying that inventory storage bin 403b autonomously drives out of the VAS/returns-handling workstation 206/207 back into the ASRS structure 208 and carries the filled inventory storage bin 403b to an available storage location, where the inventory storage bin 403b is offloaded from the RSRV 406 into the available storage location for storage therein until later called for as part of an order picking task. In an embodiment, if an active order picking task is awaiting the newly processed items just placed in that inventory storage bin 403b, the RSRV 406 transports the inventory storage bin 403b directly to the picking area 209 illustrated in FIG. 6, via the gridded lower track layout 402 of the 3D gridded storage structure 400 illustrated in FIG. 4.

Processing of customer returns arriving in an unprocessed storage bin 403a is similar to processing of new inventory items, except that the returns processing involves inspection of the customer returns to confirm the saleable condition of the customer returns before inducting the customer returns into the ASRS structure 208 as inventory, and only placing the returned items into the inventory storage bin 403b if the inspection results are positive. If the condition of the returned items is confirmed sufficient to qualify as saleable inventory, but packaging or labeling of the returned items is damaged or outdated, then in an embodiment, the returns processing comprises relabeling or repackaging, for example, using the same labels/packaging defined by prescribed VAS requirements of a vendor. In an embodiment, the same inspection process is used as a basis for determining whether to refund the customer for each returned item, and optionally, whether to issue a full or partial refund depending on the condition of the returned item. In an embodiment, the human-machine interface, therefore, presents the human worker or the robotic worker with selectable refund commands operable to authorize, decline, or set a type or amount of refund, for example, a full or partial refund in order return records of the CCS 265 of the facility.

FIG. 11 illustrates a partial perspective view of the layout of the order fulfillment system 200 shown in FIG. 6, showing a picking area 209 positioned on a second perimeter side 208b of the automated storage and retrieval system (ASRS) structure 208 around a corner from the VAS and returns area 205 shown in FIG. 9, according to an embodiment herein. The partial perspective view in FIG. 11 illustrates the second perimeter side 208b of the ASRS structure 208 toward a corner at which the second perimeter side 208b and the third perimeter side 208c of the ASRS structure 208 intersect. From this vantage point, FIG. 11 illustrates the picking area 209 populated by a series of picking workstations 240 distributed along the second perimeter side 208b of the ASRS structure 208. Each of the picking workstations 240 is individually and directly connected to the gridded lower track layout 402 of the three-dimensional (3D) gridded storage structure 400 illustrated in FIG. 4 that constitutes the ASRS structure 208, for service of these picking workstations 240 by the same fleet of robotic storage/retrieval vehicles (RSRVs) 406 that serves the decanting/induction workstations 221 and the VAS/returns-handling workstations 206/207. In an embodiment, the picking workstations 240 are of an L-shaped, dual-port configuration, each comprising a first leg 240a and a second leg 240b.

FIG. 12 illustrates a partial top perspective view of a picking workstation 240 used at the picking area 209 shown in FIG. 11, as viewed from outside the automated storage and retrieval system (ASRS) structure 208, according to an embodiment herein. In an embodiment as illustrated in FIG. 12, the picking workstations 240 are of the same L-shaped, dual-port configuration as the VAS/returns-handling workstations 206/207, and therefore comprise a first track-based two-way travel path passing by a first access port 242 in the first leg 240a of the L-shaped picking workstation 240, and a conveyor-based one-way travel path passing by a second access port 243 in the second leg 240b of the L-shaped picking workstation 240. In this embodiment, the first access port 242 serves as a picking port or a picking-access port through which items 903 are picked from vehicle-carried inventory storage bins 403b transitioning through the first leg 240a. Furthermore, in this embodiment, the second access port 243 serves as a placement port or a placement-access port through which items 903 are placed in conveyor-carried order bins 403c transitioning through the second leg 240b. At the picking workstations 240, the storage bins 403 carried on the robotic storage/retrieval vehicles (RSRVs) 406 moving through the first leg 240a are inventory storage bins 403b. In an embodiment, these inventory storage bins 403b are delivered to the picking workstation 240 from a shaft-accessed storage location in the three-dimensional (3D) gridded storage structure 400 illustrated in FIG. 4 that constitutes the ASRS structure 208, in which the inventory storage bin 403b was stored. In another embodiment, these inventory storage bins 403b are delivered to the picking workstation 240 directly from a VAS/returns-handling workstation 206/207 if an order being picked at the picking workstation 240 is waiting on a freshly processed inventory item illustrated in FIG. 10A, just processed at the VAS and returns area 205. In another embodiment, these inventory storage bins 403b are delivered to the picking workstation 240 from another picking workstation 240 at which another order containing the same item stock keeping unit (SKU) was being picked. The storage bins 403 carried on the conveyor-based one-way travel path of the second leg 240b of the picking workstation 240 are order bins 403c into which ordered items 903 of one or more orders are placed after picking them from one or more inventory storage bins 403b received at the first leg 240a of the picking workstation 240.

In an cmbodiment, the order bins 403c arc subdivided bins, each comprising multiple separated compartments 404c therein that exceed, in quantity, the number of compartments 404b found in each inventory storage bin 403b, which as disclosed above are also subdivided into multiple compartments 404b. In an embodiment, each of the order bins 403c comprises, for example, eight compartments 404c, while each of the inventory storage bins 403b comprises, for example, four compartments 404b of a larger size than that of those of the order bins 403c as illustrated in FIG. 12. In an embodiment, the outer dimensions of the unprocessed storage bins 403a, the inventory storage bins 403b, and the order bins 403c as illustrated in FIG. 10A and FIG. 12, are identical among the different bin types for universal compatibility with the ASRS structure 208 and the fleet of RSRVs 406. Since a multi-item order typically requires items from multiple inventory storage bins 403b, the inventory storage bins 403b are circulated past the picking-access port 242 by the RSRVs 406 traveling through the picking workstation 240, while the order bin 403c sits statically beneath the placement-access port 243 on the conveyor-based one-way travel path of the second leg 240b of the picking workstation 240.

In an embodiment, the picking workstation 240 further comprises a light guidance system, for example, a put-to-light worker guidance system 232 similar to that of the VAS/returns-handling workstations 206/207. The put-to-light worker guidance system 232 comprises multiple illuminable indicators 233 mounted to the top cover panel 241 of the picking workstation 240 in close adjacency to the border of the placement-access port 243. In this embodiment, the put-to-light worker guidance system 232 resides at the conveyor-equipped second leg 240b of the picking workstation 240 rather than on the track-equipped first leg 240a thereof. In an embodiment as illustrated in FIG. 12, the quantity and layout of the illuminable indicators 233 matches the compartment layout of the order bins 403c, whereby each illuminable indicator 233 closely neighbors a respective compartment 404c of the order bin 403c when the order bin 403c is seated at the access spot of the second leg 240b of the picking workstation 240. In other embodiments, at minimum, the quantity and layout of the illuminable indicators 233 are such that at least one illuminable indicator 233 neighbors each compartment 404c of the order bin 403c. In the embodiment illustrated in FIG. 12, the order bin 403c comprises, for example, eight compartments 404c, and the put-to-light worker guidance system 232 comprises eight illuminable indicators 233 laid out in a one-to-one ratio with the compartments 404c of the order bin 403c. In another embodiment, the put-to-light worker guidance system 232 comprises eight illuminable indicators 233 even if the order bins 403c contain only four compartments 404c. In this embodiment, each compartment 404c is neighbored by two illuminable indicators 233, both of which would be illuminated to indicate placement of one or more items 903 in that compartment 404c. In another example with eight illuminable indicators 233 and two compartments 404c per order bin 403c, where each compartment 404c neighbors a respective side of the placement-access port 243, all four illuminable indicators 233 on the respective side of the placement-access port 243 are illuminated to indicate the respective one of the two compartments 404c in which one or more items 903 are to be placed. Accordingly, in an embodiment, the number of illuminable indicators 233 is selected based on the number of compartments 404c found in a subdivided bin type with the most subdivisions among predetermined bin types of varying compartment quantity. For example, if a manufacturer of the storage bins 403 offers two-compartment storage bins, four-compartment storage bins, and eight-compartment storage bins, then the put-to-light worker guidance system 232 employs eight illuminable indicators 233 for accommodating use of any of the different subdivided bin types. Under command of the computerized control system (CCS) 265 of the facility illustrated in FIG. 30, the put-to-light worker guidance system 232 is operable to display a selective illumination of the appropriate neighboring illuminable indicator(s) at the countertop worksurface 241a according to which compartment or compartments 404c of the order bin 403c a human worker should place the item(s) 903 being picked from the inventory storage bin 403b currently parked at the access spot of the first leg 240a of the picking workstation 240. After placement of the item(s) 903, the human worker provides a confirmation of the placement task by a depression of the illuminated indicator 233, if a push-button indicator is used, or a depression of an accompanying confirmation button or another worker-activated input device located closely adjacent to the illuminable indicator 233.

A human-machine interface (HMI) at each picking workstation 240 comprises a display screen 901 for displaying instructions concerning, for the given order currently being filled, which item(s) 903 to pick from the inventory storage bin 403b currently parked on an RSRV 406 at the access spot of the first leg 240a of the picking workstation 240, and which compartment(s) 403c of that inventory storage bin 403b the item(s) 903 is/are found in. The put-to-light worker guidance system 232 indicates into which compartment or compartments 404c of the order bin 403c the picked items for the current order are to be placed. Once all the ordered items from the particular inventory storage bin 403b currently parked at the picking-access port 242 of the first leg 240a have been picked therefrom, the RSRV 406 carrying that inventory storage bin 403b autonomously drives out of the picking workstation 240 back into the ASRS structure 208, and carries the inventory storage bin 403b either to an available storage location at which the inventory storage bin 403b is offloaded for storage therein until later called for as part of another order picking task, or to another picking workstation 240 at which the inventory items of that inventory storage bin 403b are required for another order.

If additional items are needed to fulfill the order, the next RSRV 406 carrying a respective inventory storage bin 403b with one or more of those additional items is advanced to the picking-access port 242, and the display screen 901 guides the picking task to be performed on this inventory storage bin 403b, while the put-to-light worker guidance system 232 guides placement of the picked items into one or more compartments 404c of the waiting order bin 403c. This picking of ordered inventory items from the inventory storage bins 403b and placement thereof into the order bin 403c is repeated for the given number of orders assigned to the order bin 403c currently parked at the placement-access port 243 of the second leg 240b. Once the order bin 403c is filled, the order bin 403c is advanced from the access spot to a pickup spot on the outlet conveyor 238 illustrated in FIG. 10C, where the order bin 403c is loaded onto a waiting or arriving RSRV 406 for transport thereby to the packing area 210 via the gridded lower track layout 402 of the 3D gridded storage structure 400, or for optional storage in a storage location of the 3D gridded storage structure 400 if the filled order bin 403c is to be temporarily buffered in favor of other higher priority orders that need to be packed more urgently.

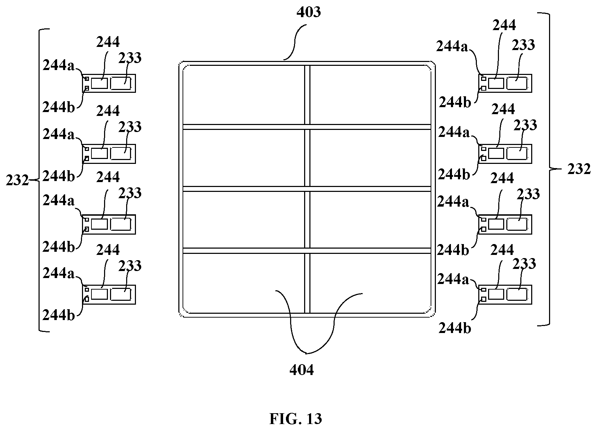

FIG. 13 illustrates a top plan view of a light guidance system, for example, a put-to-light worker guidance system 232, usable at the VAS/returns-handling workstations 206/207, the picking workstation 240, and a packing workstation 245 of the order fulfillment system 200 illustrated in FIGS. 2-3, FIG. 9, FIG. 11, and FIG. 14, according to an embodiment herein. In an embodiment, each illuminable indicator 233 is accompanied by a respective item quantity display 244, for example, in the form of a respective small liquid crystal display (LCD) screen positioned closely adjacent to the illuminable indicator 233. The item quantity display 244 is accompanied by up and down push-buttons 244a, 244b or other worker-activated quantity adjustment input devices operable to increment and decrement the number shown on the item quantity display 244. The computerized control system (CCS) 265 illustrated in FIG. 30, is operable to display the quantity of items to be placed in the compartment 404 of the storage bin 403, herein referred to as a "bin compartment", being identified by an illuminated state of the respective illuminable indicator 233 according to the assigned processing, pick, or pack task. In an embodiment, each illuminable indicator 233 comprises multiple operational states, for example, states varying in color, intensity, continuity, that is, solid or flashing, etc., to reflect the status of a particular placement task to which the illuminable indicator 233 is assigned by the CCS 265. For example, a solid green illumination is employed to identify the compartment 404 in question and is maintained until the placement task at hand is completed. When the placement task is completed, a worker confirms completion of the assigned placement task, for example, by depression of the illuminable indicator 233, if a push-button type of illuminable indicator is used, or by activation of a separate confirmation push-button or another worker-activated input device near the illuminable indicator 233. This action of depression or activation serves to signal the CCS 265 of the completion of the placement task so that the next placement task can be executed. In another embodiment, confirmation of the appropriate number of placement actions or tasks by the worker is performed, for example, with visual recognition tools or a light curtain or similar sensing mechanism at the placement-access port 230 or 243 illustrated in FIG. 10A and FIG. 12, to detect and count the number of times the worker's hand enters and exits the placement-access port 230 or 243. With each detected placement, in an embodiment, the quantity displayed on the item quantity display 244 is decremented to indicate the number of remaining items to be placed according to the current placement task.

The inclusion of up and down push-buttons 244a, 244b or other worker-activated quantity adjustment input devices allows the worker to inform the CCS 265 of discrepancies between the assigned quantity of items to be placed in a recipient storage bin at the placement-access port 230 or 243 and the available quantity of items in the supply storage bin from which the items are being picked at the picking-access port 231 or 242 illustrated in FIG. 10A and FIG. 12. For example, if the item quantity display 244 displays that five items are to be placed in the recipient storage bin, but only four of that item are present in the supply storage bin, the worker uses a down arrow or push-button 244b to decrement the displayed item quantity by one, and then presses the push-button indicator or a separate confirmation push-button or input device to inform the CCS 265 that placement of the displayed quantity of items has been completed. The CCS 265 compares the confirmed quantity against the originally assigned quantity, and recognizing the discrepancy therebetween, calls for robotic storage/retrieval vehicle-delivery of another storage bin containing the same item stock keeping unit (SKU) to the VAS/returns-handling workstation 206/207, the picking workstation 240, or the packing workstation 245 to fulfill the item shortage of the current task. This inventory discrepancy is also recorded in the CCS 265. The up push-button 244a is included in case the worker inadvertently pushes the down push-button 244b too many times and decreases the displayed item quantity too far, whereupon the up push-button 244a can be used to correct the error to accurately reflect the placed quantity on the item quantity display 244.

FIG. 14 illustrates a partial perspective view of the layout of the order fulfillment system 200 shown in FIG. 6, showing a packing area 210 positioned on a third perimeter side 208c of the automated storage and retrieval system (ASRS) structure 208 around a corner from the picking area 209, according to an embodiment herein. The partial perspective view in FIG. 14 illustrates the third perimeter side 208c of the ASRS structure 208 from near a corner thereof at which the second perimeter side 208b and the third perimeter side 208c intersect. From this vantage point, FIG. 14 illustrates the packing area 210 populated by a number of packing workstations 245 positioned beside the third perimeter side 208c of the ASRS structure 208. In an embodiment as illustrated in FIG. 14, instead of each packing workstation 245 being individually and directly connected to the gridded lower track layout 402 of the three-dimensional (3D) gridded storage structure 400 illustrated in FIG. 4, that constitutes the ASRS structure 208, the packing workstations 245 are grouped together in a number of rows. Each row comprises a respective series of packing workstations 245 arranged in a linear array emanating perpendicularly outward from the third perimeter side 208c of the ASRS structure 208. A package transport conveyor 247 runs along the third perimeter side 208c of the ASRS structure 208 in immediate or close adjacency thereto from the first row 246a of packing workstations 245 nearest the corner of the ASRS structure 208 closest to the picking area 209, past a last row 246b of packing workstations 245, and onward to an intake of the last mile sort area 216.

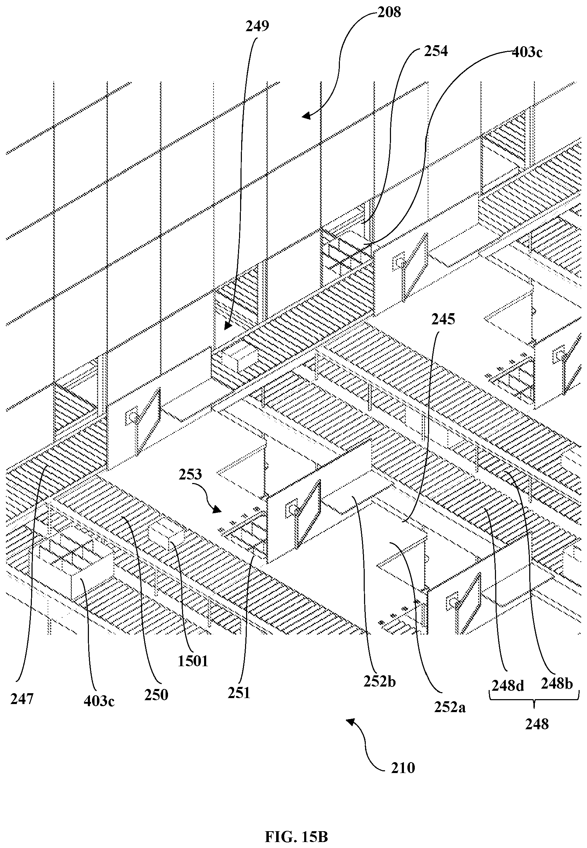

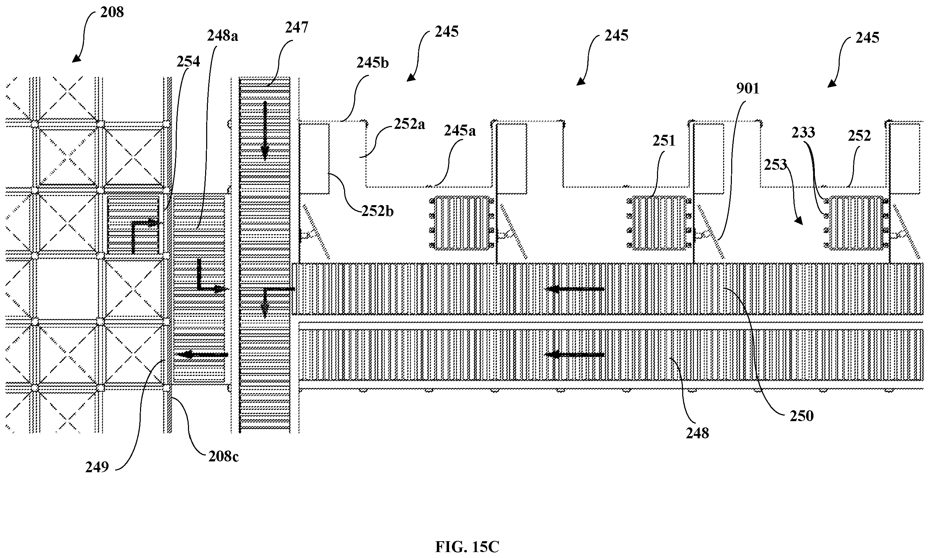

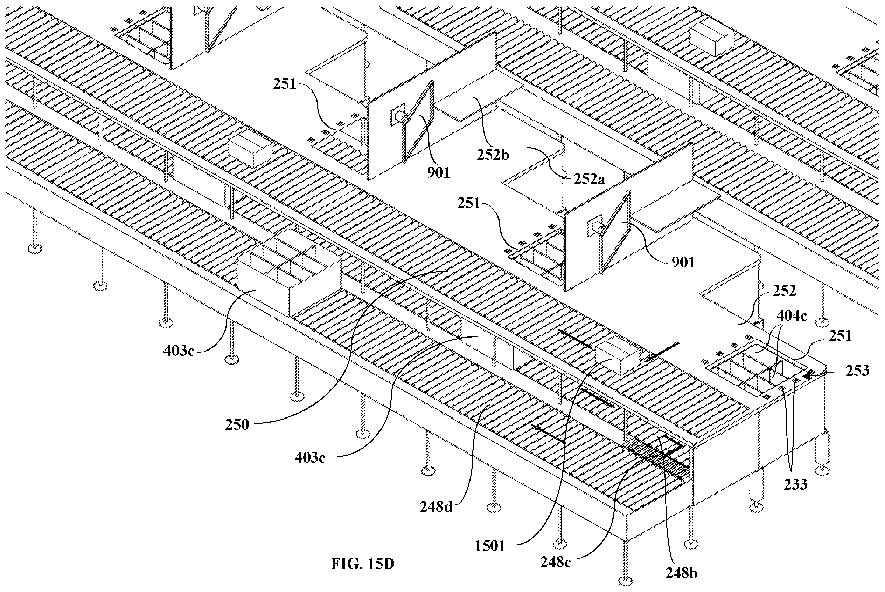

FIG. 15A illustrates a partial perspective view of the packing area 210 shown in FIG. 14 from another angle and closer vantage point, showing a multi-rowed layout of packing workstations 245 therein, according to an embodiment herein. Each row of packing workstations 245 comprises a respective order bin conveyor 248 on which order bins 403c from the ASRS structure 208 are conveyed to the different packing workstations 245 in the row, and then returned back into the ASRS structure 208. The order bin conveyor 248 comprises an initial conveyor section 248a illustrated in FIG. 15C, positioned outside the ASRS structure 208 in parallel adjacency to the third perimeter side 208c thereof and running therealong from a respective outlet port 254 of the ASRS structure 208 to an outbound conveyor section 248b of the order bin conveyor 248. In an embodiment, the initial conveyor section 248a extends outwardly from below the outlet port 254 as illustrated in FIG. 15C. The outbound conveyor section 248b of the order bin conveyor 248 runs perpendicularly from the initial conveyor section 248a down to the last packing workstation 245 of the row furthest from the ASRS structure 208 as illustrated in FIGS. 15B-15C. At the distal end of the outbound conveyor section 248b furthest from the ASRS structure 208, a transition section 248c illustrated in FIG. 15A and FIG. 15D, transfers the order bins 403c through a 180-degree turn onto an inbound return section 248d that runs back to the ASRS structure 208 in parallel relation to the outbound conveyor section 248b to return the order bins 403c back into the ASRS structure 208 through a return port 249 as illustrated in FIGS. 15A-15C. In an embodiment, the transition section 248c is a cross conveyor configured to convey an order bin 403c from the outbound conveyor section 248b to the inbound return section 248d as illustrated in FIG. 15D for redirection of the order bin 403c back into the ASRS structure 208. The transition section 248c connects the outbound conveyor section 248b to the inbound return section 248d at the distal end of the outbound conveyor section 248b furthest from the ASRS structure 208.

FIG. 15B illustrates a partial perspective view of the packing area 210 shown in FIG. 14, showing a two-level conveyor unit comprising the order bin conveyor 248 positioned at a lower level for conveying order bins 403c and a package feeding conveyor 250 positioned at an upper level for conveying packaged orders 1501, according to an embodiment herein. The robotic storage/retrieval vehicles (RSRVS) 406 deliver the order bins 403c from the ASRS structure 208 via the order bin conveyor 248 at the lower level of the two-level conveyor unit. As illustrated in FIG. 15B, the order bin conveyor 248 comprises the outbound conveyor section 248b and the inbound return section 248d positioned in a parallel configuration at the lower level of the two-level conveyor unit. The RSRVs 406 traverse the outbound conveyor section 248b of the order bin conveyor 248 and present the order bins 403c to the access ports 251 of the packing workstations 245 for packaging items into parcels or packaged orders 1501 and return the order bins 403c to the ASRS structure 208 via the inbound return section 248d of the order bin conveyor 248. The packaged orders 1501 are conveyed to the last mile sort area 216 as illustrated in FIG. 16, via the package feeding conveyor 250 positioned at the upper level of the two-level conveyor unit.

FIG. 15C illustrates a top plan view showing an order bin conveyor circuit connected to the ASRS structure 208 for serving order bins 403c therefrom to a respective row of packing workstations 245 in the packing area 210, according to an embodiment herein. At each packing workstation 245 in a row, the outbound conveyor section 248b of the order bin conveyor 248 comprises an offshoot operable to redirect an order bin 403c from the outbound conveyor section 248b to an access spot of the packing workstation 245 that underlies an access port 251 in a countertop worksurface 252 of the packing workstation 245. This part of the countertop worksurface 252 comprising the access port 251 is positioned beside and above the outbound conveyor section 248b of the order bin conveyor 248. In an embodiment as illustrated in FIGS. 15A-15E, the packing workstation 245 is of an L-shaped configuration comprising one leg 245a that lies parallel to the outbound conveyor section 248b and comprises the access port 251 therein, and another other leg 245b that extends perpendicularly away from the outbound conveyor section 248b as illustrated in FIG. 15C. The other leg 245b of the packing workstation 245 comprises an extension 252a of the countertop worksurface 252 and an overlying shelf 252b as illustrated in FIGS. 15B-15E. A worker may use the extension 252a and the overlying shelf 252b to place and store packaging materials, for example, parcel boxes for packaging the items, shipping labels for labeling the parcels, etc., at the packing workstation 245.

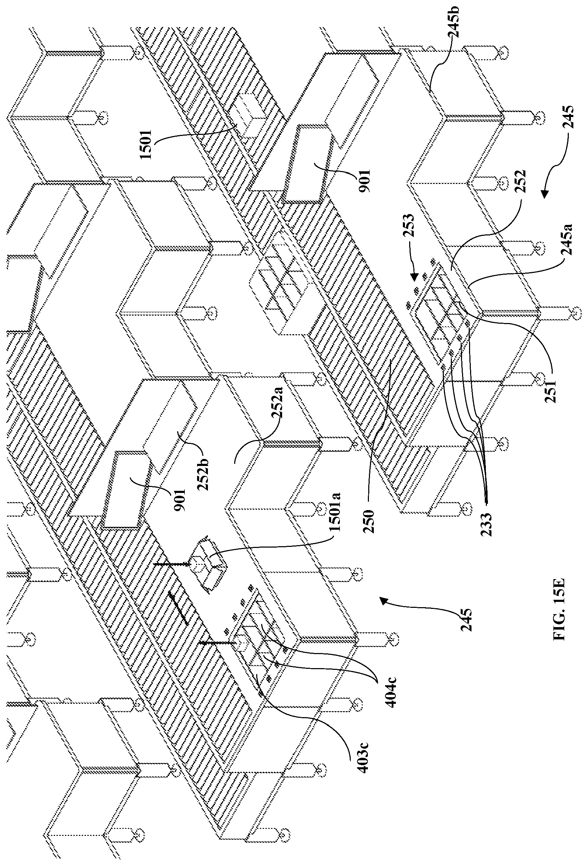

FIG. 15D illustrates an enlarged, partial perspective view of one of the rows of packing workstations 245 in the packing area 210, according to an embodiment herein. FIG. 15E illustrates an enlarged, partial perspective view of two of the packing workstations 245, according to an embodiment herein. Each packing workstation 245 further comprises a human-machine interface (HMI) with a display screen 901. The package feeding conveyor 250 overlies the outbound conveyor section 248b of the order bin conveyor 248 and runs parallel thereto. The package feeding conveyor 250 runs from the last packing workstation 245 of a row furthest from the ASRS structure 208 toward and past the first packing workstation 245 of the row nearest the ASRS structure 208 in order to deliver the packaged orders 1501 from all of the packing workstations 245 of the row to the package transport conveyor 247 that runs alongside the ASRS structure 208.

Order bins 403c containing ordered items placed therein at the picking workstations 240 illustrated in FIG. 11 are brought by the robotic storage/retrieval vehicles (RSRVs) 406 to a perimeter-adjacent drop-off spot on the gridded lower track layout 402 of the three-dimensional (3D) gridded storage structure 400 that constitutes the ASRS structure 208, where the outlet port 254 opens through what otherwise may be a substantially cladded exterior of the ASRS structure 208. At this drop-off spot, the RSRV 406 offloads the order bin 403c onto the initial conveyor section 248a, from which the order bin 403c is transferred onto the outbound conveyor section 248b, and conveyed onward to the conveyor offshoot of a respective packing workstation 245, where the order bin 403c is redirected into the access spot that underlies the access port 251 of the packing workstation 245. In an embodiment, the countertop worksurface 252 of the packing workstation 245 comprises a pick-to-light worker guidance system 253 employing the same illuminable indicators 233 as illustrated in FIGS. 15B-15E and optional item quantity displays 244 illustrated in FIG. 13, as the put-to-light worker guidance system 232 at the picking workstations 240 and the VAS/rcturns-handling workstations 206/207. Accordingly, the illuminable indicators 233 and optional item quantity displays 244 are laid out such that at least one illuminable indictor neighbors each compartment 404c of the order bin 403c received at the packing workstation 245. The pick-to-light guidance system 253 is operated by the computerized control system (CCS) 265 illustrated in FIG. 30, to guide a worker to pick the contents of a particular order or orders from one or more compartments 404c of the order bin 403c, while the display screen 901 displays any order-specific packaging instructions, for example, packaging of items in branded packaging of a particular vendor from whose inventory the order was purchased, etc., applicable to the order being packaged. The pick-to-light guidance system 253 illuminates the neighboring illuminable indicator(s) 233 of one or more compartments 404c containing one or more orders to be packaged. If multiple compartments 404c are indicated, the worker can select any indicated compartment 404c, pick the items therefrom, and then depress a neighboring illuminable indicator 233 of that compartment 404c to signal the CCS 265 of the order that has been selected and picked, in response to which the display screen 901 displays the corresponding packing instructions for that order.

In an embodiment, at the packing workstations 245, the HMI comprises a label printer (not shown) that prints out an appropriate shipping label according to the order details in the CCS 265. Once the items picked from the order bin 403c have been packed in the prescribed packaging 1501a that is kept on hand or delivered on demand to the packing workstation 245 as illustrated in FIG. 15E, the packaged order 1501 is placed on the package feeding conveyor 250 for conveyance to the package transport conveyor 247, on which the packaged order 1501 is then sent downstream to the intake of the last mile sort area 216. In an embodiment, conveyors are used at all the workstations, for example, 206, 207, 240, 245 etc., rather than robotic storage/retrieval vehicles 406, to present the storage bins 403 at all access ports, for example, 230, 231 242, 243, and 251 illustrated in FIGS. 9-15E.

FIG. 16 illustrates a partial perspective view of the layout of the order fulfillment system 200 shown in FIG. 6, showing a consolidation area 217 neighboring the packing area 210 in a cooperatively overlapping relation therewith at the third perimeter side 208c of the ASRS structure 208, and a last mile sort area 216 positioned further down the third perimeter side 208c of the ASRS structure 208, according to an embodiment herein. The perspective view in FIG. 16 illustrates the third perimeter side 208c of the ASRS structure 208 from the last row 246b of packing workstations 245 toward a corner of the ASRS structure 208 at which the third perimeter side 208c and the fourth perimeter side 208d thereof intersect. From this vantage point, FIG. 16 illustrates the consolidation arca 217 populated by a row of consolidated-packing workstations 255, each being similar to the packing workstations 245 disclosed in the detailed descriptions of FIG. 14 and FIGS. 15A-15E above. In an embodiment, each of the consolidated-packing workstations 255 is an L-shaped workstation comprising an access port 251, a pick-to-light guidance system 253, and human-machine interface (HMI) comprising a display screen 901 of the same or similar type to those used at the packing area 210. These consolidated-packing workstations 255 share the same order bin conveyor 248 as the last row 246b of the packing workstations 245, but are fed by offshoots of the inbound return section 248d of the order bin conveyor 248 rather than the outbound conveyor section 248b of the order bin conveyor 248 illustrated in FIGS. 15A-15B and FIG. 15D, that is occupied by the last row 246b of the packing workstations 245. Accordingly, the order bins 403c from which order items are removed at the consolidated-packing workstations 255 are returned to the ASRS structure 208 on the same return section 248d as the returning order bins from the last row 246b of the packing workstations 245. In this embodiment, the consolidation area 217, therefore, overlaps the packing area 210 in that the consolidated-packing workstations 255 share order bin conveyance equipment with some of the packing workstations 245 of the packing area 210.

When orders are generated, any order containing a large-scale item stored in the oversized item storage area 212 illustrated in FIGS. 2-3, has an electronic or printed pick ticket issued to a human or robotic picker for picking the large-scale item from the oversized item storage area 212. The large-scale item is brought to a staging region of the consolidation area 217 that neighbors the consolidated-packing workstations 255. The staging region comprises a number of staging units 256 with suitably large shelving, compartments, or other temporary holds for large items. A location identifier of a particular hold or another identifiable spot in the staging region where the large-scale item is placed is recorded in the computerized control system (CCS) 265 illustrated in FIG. 30. Order bins 403c for orders that include any large-scale items stored outside the ASRS structure 208 in the oversized item storage area 212 are specifically dropped off by the robotic storage/retrieval vehicles (RSRVs) 406 at the outlet port 254 that feeds the shared order bin conveyor 248 of the consolidated-packing workstations 255 and the last row 246b of packing workstations 245. Similar to the packing workstations 245, when an order bin 403c arrives at the access port 251 of the consolidated-packing workstation 255, the order bin 403c is identified to the CCS 265, for example, by an optical scan of a bin or order identifier, or by a wireless transmission of a bin or order identifier by a radio frequency identification (RFID) tag or other means, whereby the CCS 265 is configured to display appropriate instructions on the display screen 901 to a worker, for example, a human worker, according to the needs of the order(s) contained in that order bin 403c. At the consolidated-packing station 255, the instructions comprisc identification of a large-scale item of the order and a location identifier of a location where that large-scale item was placed in the staging region. The worker at the consolidated-packing workstation 255 can, therefore, retrieve the large-scale item from the staging region and add the large-scale item to small-scale items picked from the order bin 403c. The large-scale items and small-scale items can be placed together in a single package of a large enough scale or packaged separately and consolidated into a multi-package order. Since the large-scale items do not fit in the ASRS structure 208, these consolidated orders bypass the last mile sort area 216 and are sent directly to the shipping area 213 illustrated in FIG. 2.

Furthermore, in an embodiment as illustrated in FIG. 16, the last mile sort area 216 comprises a single row of storage racking 257, herein exemplarily referred to as "pallet racking", installed in immediate adjacency to the perimeter of the ASRS structure 208 at the third perimeter side 208c of the ASRS structure 208. The single row of pallet racking 257 is positioned in close proximity to the pallet racking 212a of the oversized item storage area 212 illustrated in FIG. 6 located at a matching corner of the facility for convenient forklift access to the pallet racking 257 and 212a of the last mile sort area 216 and the oversized item storage area 212 respectively in a localized region of the facility. Multiple levels of the pallet racking 257 are occupied by pallets 258 having respective gaylords 259 thereon, whereby the pallet racking 257 delimits larger storage spaces than the smaller storage locations inside the ASRS structure 208 and the gaylords 259 denote large multi-order shipment-consolidation containers that do not fit within the ASRS structure 208. The last mile sort area 216 is served from inside the ASRS structure 208 by a fleet of robotic package-handling vehicles 1700 illustrated in FIG. 17, that share some common locomotion componentry with the robotic storage/retrieval vehicles (RSRVs) 406 illustrated in FIGS. 5A-5B to allow a similar two-dimensional horizontal travel on the gridded upper track layout 401 and the gridded lower track layout 402 of the three-dimensional (3D) gridded storage structure 400 that constitutes the ASRS structure 208, and a third-dimensional vertical travel through the upright shafts 405 of the 3D gridded storage structure 400. The robotic package-handling vehicles 1700 are operable to compile packaged orders into the gaylords 259 at the last mile sort area 216.

FIG. 17 illustrates a perspective view of a robotic package-handling vehicle 1700 used in the order fulfillment system 200 illustrated in FIGS. 2-3, for delivering packaged orders 1501 illustrated in FIGS. 15A-15B and FIGS. 15D-15E, to shipment-consolidation containers, for example, gaylords 259 stored proximal to the ASRS structure 208 in the last mile sort area 216 illustrated in FIG. 16, according to an embodiment herein. The robotic package-handling vehicles 1700 differ in some aspects from the RSRVs 406 in their ability to handle packaged orders 1501 of varying shape and size rather than uniformly sized and shaped storage bins 403 illustrated in FIGS. 5A-5B including the unprocessed storage bins 403a, the inventory storage bins 403b, and the order 403c illustrated in FIGS. 10A-10C and FIGS. 12-13. The robotic package-handling vehicle 1700 is navigable within the ASRS structure 208 and operable to receive packaged orders 1501 containing ordered items fulfilled from the ASRS structure 208. In an embodiment as illustrated in FIG. 17, the robotic package-handling vehicle 1700 comprises a wheeled chassis 1701 similar to the wheeled chassis 410 disclosed above for the RSRVs 406. The wheeled chassis 1701 is operable to perform locomotion of the robotic package-handling vehicle 1700 through the ASRS structure 208. The wheeled chassis 1701 is navigable in three dimensions of the ASRS structure 208. The wheeled chassis 1701 comprises wheel units 1702 configured to be shifted up and down relative to one another and adjusted horizontally inboard and outboard to allow travel in both horizontal directions on the gridded upper track layout 401 and the gridded lower track layout 402 of the three-dimensional (3D) gridded storage structure 400 illustrated in FIG. 4 that constitutes the ASRS structure 208, and transition into a vertical travel through the upright shafts 405 of the 3D gridded storage structure 400.

Instead of the turret-equipped upper support platform 412 in the RSRV 406 disclosed in the detailed descriptions of FIGS. 5A-5B, for loading and offloading of uniformly sized and shaped storage bins 403 of compatible size and configuration, the robotic package-handling vehicle 1700 is configured as a conveyor-equipped robotic vehicle comprising a conveyor unit 1703 rotatably mounted atop the wheeled chassis 1701 for movement relative to the wheeled chassis 1701 about an upright axis 1705 running centrally and vertically perpendicular of the wheeled chassis 1701, to re-orient the conveyor unit 1703 into multiple different working positions operable to offload the packaged orders 1501 in different directions from the robotic package-handling vehicle 1700 to the shipment-consolidation containers. The rotatable mounting of the conveyor unit 1703 atop the wheeled chassis 1701 allows rotation of the conveyor unit 1703 about the upright axis 1705. The conveyor unit 1703 is operable to receive the packaged orders 1501 and offload the packaged orders 1501 to the shipment-consolidation containers. The conveyor unit 1703 comprises a belt conveyor 1704 operably installed on a frame of the conveyor unit 1703 that is rotatable about the upright axis 1705, for example, by a rotational drive such as an electric motor mounted on the wheeled chassis 1701. The belt conveyor 1704 is operable to receive the packaged orders 1501 and offload the packaged orders 1501 to the shipment-consolidation containers. In an embodiment, the belt conveyor 1704 is operable in two opposing directions to allow loading and unloading of packaged orders 1501 from either of its two opposing ends 1704a, 1704b. In such instances, the conveyor unit 1703 is rotatable about the upright axis 1705 between at least two working positions of ninety degree increment to one another about the upright axis 1705, which due to the operability of the belt conveyor 1704 in opposing directions, is sufficient to enable loading and unloading of packaged orders 1501 onto and off of the robotic package-handling vehicle 1700 at all four sides thereof. Rather than limiting rotation of the conveyor unit 1703 to a ninety-degree range between two working positions, in an embodiment, the conveyor unit 1703 is configured to rotate through a range of at least 270-degrees, and optionally a full 360-degrees, to allow rotation between four different working positions of ninety-degree intervals to one another about the upright axis 1705, regardless of whether the belt conveyor 1704 is operable in only one or both directions.

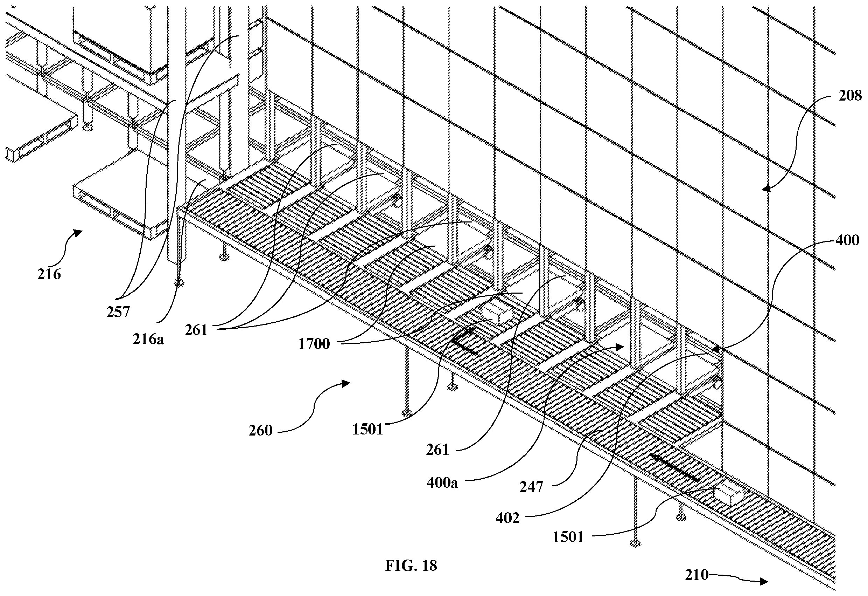

FIG. 18 illustrates an enlarged, partial perspective view of an intake zone 260 of the last mile sort area 216 of the order fulfillment system 200 illustrated in FIG. 6, to which packaged orders 1501 from the packing area 210 are conveyed for pickup by the robotic package-handling vehicle 1700 shown in FIG. 17, according to an embodiment herein. In an embodiment as illustrated in FIG. 18, the intake zone 260 of the last mile sort area 216 is positioned outside the pallet racking 257 of the last mile sort area 216 just beyond an end 216a thereof nearest the consolidation area 217 and the packing area 210 illustrated in FIG. 16. The intake zone 260 comprises at least one, and in an optional embodiment, multiple intake openings 261 in the otherwise substantially cladded exterior of the ASRS structure 208 at the lower track level 400a thereof. The package transport conveyor 247 from the packing area 210 reaches each of the intake openings 261, and comprises a ninety-degree transfer in front of each intake opening 261 to allow a selective redirection of an arriving packaged order 1501 from the packing area 210 into any of the intake openings 261. Inside the three-dimensional (3D) gridded storage structure 400 that constitutes the ASRS structure 208, a robotic package-handling vehicle 1700 parks at a pick-up spot adjacent to one of the intake openings 261 to receive an arriving packaged order 1501 onto the belt conveyor 1704 of the robotic package-handling vehicle 1700 illustrated in FIG. 17. In an embodiment, the pick-up spot is elevated upwardly off the gridded lower track layout 402 of the 3D gridded storage structure 400 depending on the height of the package transport conveyor 247, and therefore, may require climbing of the robotic package-handling vehicle 1700 part-way up an outer shaft of the ASRS structure 208, in which case another robotic package-handling vehicle 1700 may queue up for the pick-up spot at an underlying spot on the gridded lower track layout 402.

FIG. 19 illustrates an enlarged, partial perspective view, showing deposit of a packaged order 1501 into a shipment-consolidation container, for example, a gaylord 259, in the last mile sort area 216 shown in FIG. 18, by the robotic package-handling vehicle 1700 shown in FIG. 17, according to an embodiment herein. For each vertical column 1901 of pallet-mounted gaylords 259 in the pallet racking 257 of the last mile sort area 216, the ASRS structure 208 comprises at least one outer shaft 208f that aligns with the gaylords 259 in that vertical column 1901 at the outer perimeter of the ASRS structure 208. In an embodiment as illustrated in FIG. 19, each gaylord 259 has a width approximately equal to two spots of the ASRS structure 208, and the pallet racking 257 is laid out such that each gaylord 259 thus aligns with two open shafts at the exterior of the ASRS structure 208. To deliver the packaged order 1501 to a particular gaylord 259, the robotic package-handling vehicle 1700 continues up the outer shaft 208f of the ASRS structure 208 in which the packaged order 1501 was picked to the gridded upper track layout 401, where the robotic package-handling vehicle 1700 then travels horizontally to one of the outer shafts 208f that aligns with the gaylord 259, and rides down this outer shaft 208f to an elevation slightly exceeding the open top of the gaylord 259, but residing below any next level of the pallet racking 257 that resides above the given gaylord 259. The robotic package-handling vehicle 1700, with its rotatable conveyor unit 1703 in an appropriate position pointing an end of the conveyor unit 1703 toward the pallet racking 257 and the gaylord 259 seated therein, advances its belt conveyor 1704 in that direction, thereby ejecting the packaged order 1501 into the targeted gaylord 259. The robotic package-handling vehicle 1700 then continues down the outer shaft 208f of the ASRS structure 208 to the gridded lower track layout 402 thereof back to the intake zone 260 of the last mile sort area 216 to pick up the next packaged order 1501 as illustrated in FIG. 18.

An example of the offloading of a packaged order 1501 into a gaylord 259 is illustrated in FIG. 19, where the robotic package-handling vehicle 1700 has climbed to the gridded upper track layout 401 of the three-dimensional (3D) gridded storage structure 400 through one of the shafts 208f thereof after having picked up the packaged order 1501 from the package transport conveyor 247 at the intake zone 260 of the last mile sort area 216. As illustrated in FIG. 19, the robotic package-handling vehicle 1700 operates its belt conveyor 1704 towards a gaylord 259 that is stored in the top level of the pallet racking 257 so that the open top of the gaylord 259 resides a short distance below the height at which the robotic package-handling vehicle 1700 rides on the gridded upper track layout 401 of the 3D gridded storage structure 400. Gaylords 259 in the lower levels of the pallet racking 257 arc similarly accessible from outer shafts of the ASRS structure 208, where the robotic package-handling vehicle 1700 stops at the appropriate elevation in the outer shaft 208f during descent from the gridded upper track layout 401 to eject the packaged order 1501 into the targeted gaylord 259.

The computerized control system (CCS) 265 illustrated in FIG. 30, in which orders are managed, assigns fulfilled orders of a matching or geographically similar destination, for example, based on a zip code or a postal code, to the same gaylord 259 in the last mile sort area 216, whereby such geographically related orders are compiled by the fleet of robotic package-handling vehicles 1700 into the same gaylord 259. In an embodiment, the shipping labels of the packaged orders 1501 are scanned at their arrival at the intake zone 260 of the last mile sort area 216, or during the conveyed transfer of the packaged orders 1501 to the last mile sort area 216 from the packing area 210, to determine the destination information used to determine to which gaylord 259 to deliver to the packaged order 1501. Once a gaylord 259 is filled, or once an arrival of an outbound transport service or carrier vehicle 214 illustrated in FIG. 2 has occurred or is imminent, the gaylord 259 with the compiled orders is retrieved from the pallet racking 257 of the last mile sort area 216, for example, by forklift, and transferred to the shipping area 213 illustrated in FIG. 2 for pickup by the outbound transport service or carrier vehicle 214.

In the embodiment illustrated in FIG. 16 and FIGS. 18-19, where the last mile sort area 216 comprises only one row of pallet racking 257 on the same side of the ASRS structure 208 at which the intake zone 260 of the last mile sort area 216 resides, rotation of the conveyor unit 1703 on the robotic package-handling vehicle 1700 is not necessary, provided that its belt conveyor 1704 is rotatable in both directions to allow loading of the packaged order 1501 onto the robotic package-handling vehicle 1700 at the pick-up spot and offloading of the packaged order 1501 into the gaylord 259. In other embodiments, the pallet racking 257 of the last mile sort area 216 is additionally or alternatively positioned at another location, for example, the fourth perimeter side 208d of the ASRS structure 208 illustrated in FIG. 6, in which case the rotation of the conveyor unit 1703 on the robotic package-handling vehicle 1700 between different working positions is required to accommodate different loading and unloading directions relative to the wheeled chassis 1701 of the robotic package-handling vehicle 1700 whose orientation in the ASRS structure 208 does not change. In an embodiment, the addition of pallet racking 257 of the last mile sort area 216 on the fourth perimeter side 208d of the ASRS structure 208 creates an L-shaped layout for the last mile sort area 216 where pallet racking 257 on two adjacent perimeter sides 208c and 208d span outward from a corner at which these two perimeter sides 208c and 208d of the ASRS structure 208 meet. In another embodiment, an E-shaped layout for the last mile sort area 216 is employed, where one or more rows of pallet racking 257 penetrate into the ASRS structure 208.

Furthermore, robotic package-handling vehicles 1700 with rotatable conveyor units 1703 are also used elsewhere in the ASRS structure 208 for other beneficial purposes, for example, to similarly pickup loose, that is, unbinned individual inventory-ready items at perimeter-adjacent spots of the gridded lower track layout 402 of the three-dimensional (3D) gridded storage structure 400 that constitutes the ASRS structure 208, and deliver and load such loose items into inventory storage bins 403b illustrated in FIG. 10A, already stored in the ASRS structure 208 by similarly ejecting the items from the belt conveyor 1704 of the robotic package-handling vehicle 1700 into an open-topped inventory storage bin 403b from a neighboring shaft of the ASRS structure 208. Rotation of the conveyor unit 1703 into different working positions facing different directions, therefore, enables offloading of loose inventory items into an inventory storage bin 403b on any side of any shaft of the ASRS structure 208. This embodiment also demonstrates having the robotic package-handling vehicles 1700 operating in the same ASRS structure 208 as the robotic storage/retrieval vehicles (RSRVs) 406 that handle the storage bins 403 illustrated in FIGS. 5A-5B. In other embodiments, if the robotic package-handling vehicles 1700 are configured solely for use in the last mile sort area 216, then the track rails and rack-toothed frame members, by which the robotic package-handling vehicles 1700 travel to the racking-adjacent locations at which the robotic package-handling vehicles 1700 eject the packaged orders 1501 into the gaylords 259, need not be interconnected with, or be a part of, the ASRS structure 208. In the embodiments disclosed herein, using the same type of structural componentry between the ASRS structure 208 and the vehicle-navigated structure of the last mile sort area 216 and accordingly using an identical robot locomotive chassis design among the two categories of robotic vehicles 406 and 1700 are cost-effective.

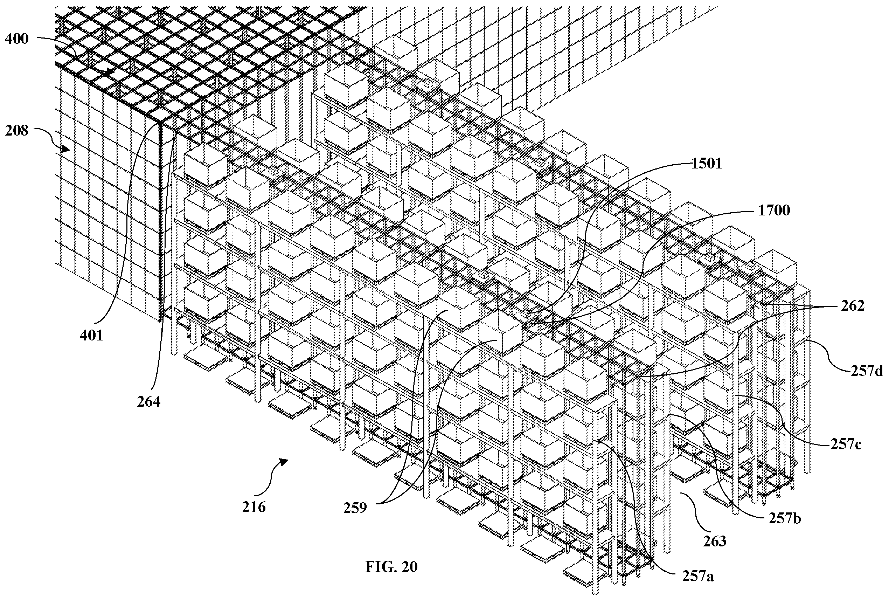

FIG. 20 illustrates a top isometric view showing an alternative aisle-based configuration of the last mile sort area 216, in which the robotic package-handling vehicles 1700 access the shipment-consolidation containers, for example, gaylords 259 on a navigation structure 262 positioned outside the ASRS structure 208, according to an embodiment herein. In an embodiment where the vehicle-navigated structure 262 of the last mile sort area 216 is not the same as the ASRS structure 208 in which the storage bins 403 are stored, a larger multi-row last mile sort area 216 is employed as illustrated in FIG. 20, in which multiple rows of pallet racking 257a, 257b are arranged in aisle-accessed format. In an embodiment, the navigation structure 262 is constructed of componentry that matches that ofthc ASRS structure 208. In the embodiment illustrated in FIG. 20, two rows of pallet racking 257a, 257b are positioned back-to-back with one another. Furthermore, a narrow, elongated grid structure 262 is positioned between the pallet racking 257a, 257b and is assembled from the same horizontal rail 407, 408 and rack-toothed vertical frame members 409 of the three-dimensional (3D) gridded storage structure 400 illustrated in FIG. 4 that constitutes the ASRS structure 208. In an embodiment, the narrow, elongated grid structure 262 is only one or two spots wide and lacks any shelving since the narrow, elongated grid structure 262 is not used to store any storage bins 403 as illustrated in FIG. 4. In an embodiment, the narrow, elongated grid structure 262 is used to allow the robotic package-handling vehicles 1700 to access any gaylord storage space in the two back-to-back rows of pallet racking 257a, 257b. As illustrated in FIG. 20, an open aisle space 263 is left between each of these two rows of pallet racking 257a, 257b and a respective neighboring row of pallet racking 257c, 257d faced thereby. The narrow, elongated grid structures 262 on opposite sides of any aisle 263 are linked together by an upper track 264 and/or a lower track to enable each robotic package-handling vehicle 1700 to access any row of pallet racking 257a, 257b, 257c, 257d in the aisled last mile sort area 216.

The illustrated embodiments representing a facility layout of the order fulfillment system 200 disclosed herein comprise the different services areas, for example, the decanting/induction area 204, the VAS and returns area 205, the picking area 209, the packing area 210, the last mile sort area 216, etc., illustrated in FIG. 6, positioned at ground level for service thereof from the gridded lower track layout 402 of the 3D gridded storage structure 400. In other embodiments, the facility layout of the order fulfillment system 200 comprises some or all of the service areas connected to the gridded upper track layout 401. In other embodiment, the order fulfillment system 200 incorporates intermediate track layouts at other service levels within the ASRS structure 208. These intermediate track layouts have some or all of the service areas connected thereto. In the order fulfillment system 200 disclosed herein, using the robotic storage/retrieval vehicles (RSRVs) 406 illustrated in FIGS. 5A-5B to perform all delivery of storage bins 403 to and from all of the service areas is accomplished regardless of which particular level of the ASRS structure 208 the various service areas are served at by the RSRVs 406. This use of the RSRVs 406 for all inter-area bin transfers enables space efficient omission of some or all of the long-range inter-area conveyors used in conventional layouts and performs all inter-area bin transfers within the two-dimensional footprint of the ASRS structure 208.

Space and service efficiency is further obtained in instances where the ASRS structure 208 and the associated fleet of RSRVs 406 are not specifically the type disclosed in Applicant's prior patent applications cited above and illustrated in FIG. 4 and FIGS. 5A-5B. For example, space and service efficiency is garnered in an aisle-based storage array employing floor-riding RSRVs that navigate the two-dimensional footprint of the ASRS structure 208 at a ground level beneath overhead storage aisles, where those RSRVs can also climb the ASRS structure 208 to retrieve and deposit the storage bins or are served by separate elevators. The use of the RSRVs 406 for inter-area bin transfer is also employed in a stack-and-dig ASRS structure in which storage bins are stacked atop one another and accessed in a digging manner from an overhead gridded track on which elevator-equipped storage/retrieval vehicles travel in two dimensions. The use of the particular ASRS structure 208 disclosed herein in the embodiments illustrated in FIGS. 2-4 provides significant storage density and instant continual access to any storage location by shaft-traversing RSRVs 406, over aisle-based storage arrays and stack-and-dig storage arrays.

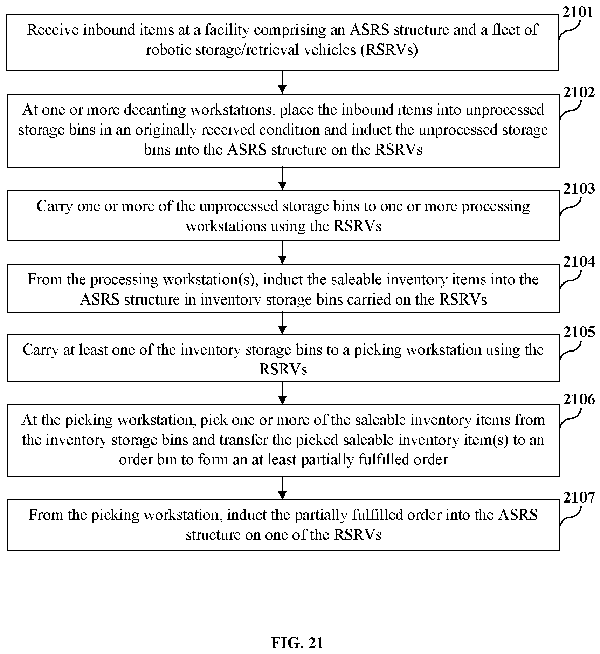

FIG. 21 illustrates a flowchart of a method for fulfilling orders using the order fulfillment system disclosed above, according to an embodiment herein. In the method disclosed herein, inbound items are received 2101 at a facility comprising the automated storage and retrieval system (ASRS) structure and a fleet of robotic storage/retrieval vehicles (RSRVs) as disclosed in the detailed descriptions of FIGS. 2-20. At one or more decanting workstations, the inbound items are placed 2102 into unprocessed storage bins in an originally received condition and the unprocessed storage bins are inducted into the ASRS structure on the RSRVs. One or more of the unprocessed storage bins are carried 2103 to one or more processing workstations, for example, the value-added service (VAS) and returns-handling workstations, using the RSRVs. Processing steps are performed at the processing workstation(s) to transform the inbound items into saleable inventory items ready for order fulfillment. From the processing workstation(s), the saleable inventory items are inducted 2104 into the ASRS structure in inventory storage bins carried on the RSRVs. At least one of the inventory storage bins is carried 2105 to a picking workstation using the RSRVs. At the picking workstation, one or more of the saleable inventory items are picked 2106 from the inventory storage bins and transferred to an order bin to form an at least partially fulfilled order. From the picking workstation, the partially fulfilled order is inducted 2107 into the ASRS structure on one of the RSRVs. In an embodiment, using the same or different RSRV, the order bin is carried to a packing workstation where a complete order with the partially fulfilled order is packaged for shipping.

In an embodiment, the partially fulfilled order is transferred from the packing workstation to a last mile sort area. At the last mile sort area, a robotic package-handling vehicle of a locomotive design matching that of the RSRVs is used to carry the partially fulfilled order through the last mile sort area on a navigation structure of componentry matching that of the ASRS structure. Through navigation of the robotic package-handling vehicle on the navigation structure, the partially fulfilled order is carried to a shipment-consolidation container, for example, a gaylord box, and deposited into the shipment-consolidation container for consolidation with other orders awaiting shipment. The navigation structure of the last mile sort area is operably coupled to the ASRS structure in which the RSRVs are navigable, whereby the robotic package-handling vehicle is navigable within the ASRS structure.

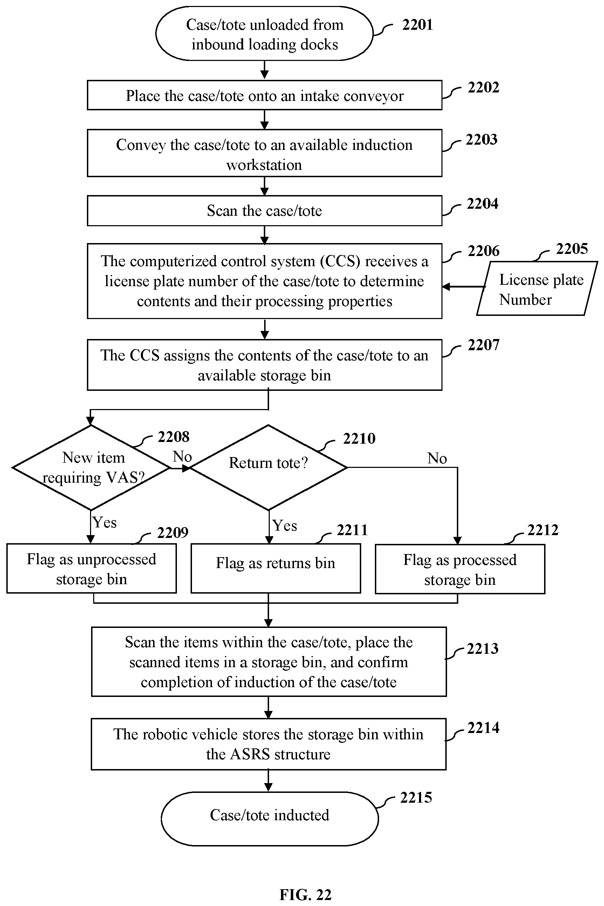

FIG. 22 illustrates a flowchart of a method for executing an induction process in the order fulfillment system, according to an embodiment herein. Consider an example where a case or a tote is unloaded 2201 from inbound loading docks into a facility employing the order fulfillment system disclosed above. The computerized control system (CCS) of the order fulfillment system transmits instructions or a notification to a worker, for example, a human worker or a robotic worker, or in an embodiment, a robotic vehicle to place 2202 the case/tote onto the intake conveyor at the receiving area of the facility as illustrated in FIGS. 2-3 and FIGS. 6-7. In an embodiment, the CCS employs a human-machine interface (HMI) comprising a display screen for displaying instructions to the human worker. The intake conveyor conveys 2203 the case/tote to an available induction workstation of the induction area. The CCS transmits instructions or a notification to a worker, for example, a human worker or a robotic worker, to scan 2204 a label positioned on the case/tote. On scanning the label of the case/tote, the CCS receives 2206 a license plate number 2205 of the case/tote to determine contents of the case/tote and their processing properties. The CCS assigns 2207 the contents of the case/tote to an available storage bin. The CCS determines 2208 whether the case/tote requires value-added service (VAS) processing. If the case/tote comprises new inventory items or pieces or eaches that require VAS processing, the CCS flags 2209 the storage bin as an unprocessed storage bin into which the new inventory items are loaded. If the inventory items in the case/tote do not require VAS processing, the CCS determines 2210 whether the case/tote is a return tote containing customer returns. If the case/tote is a return tote, the CCS flags 2211 the storage bin as a returns bin into which the customer returns are loaded. If the case/tote is not a return tote, the CCS flags 2212 the storage bin as a processed storage bin into which the already processed inventory items are loaded. At step 2213, the CCS transmits instructions or a notification to a worker to scan the items within the case/tote, place the scanned items in the assigned storage bin, and confirm completion of induction of the case/tote. The CCS then activates a robotic vehicle, for example, one of the robotic storagc/rctrieval vehicles (RSRVs) disclosed above to store 2214 the assigned storage bin within the automated storage and retrieval system (ASRS) structure of the order fulfillment system. The induction process ends 2215 when the robotic vehicle stores the assigned storage bin within the ASRS structure.

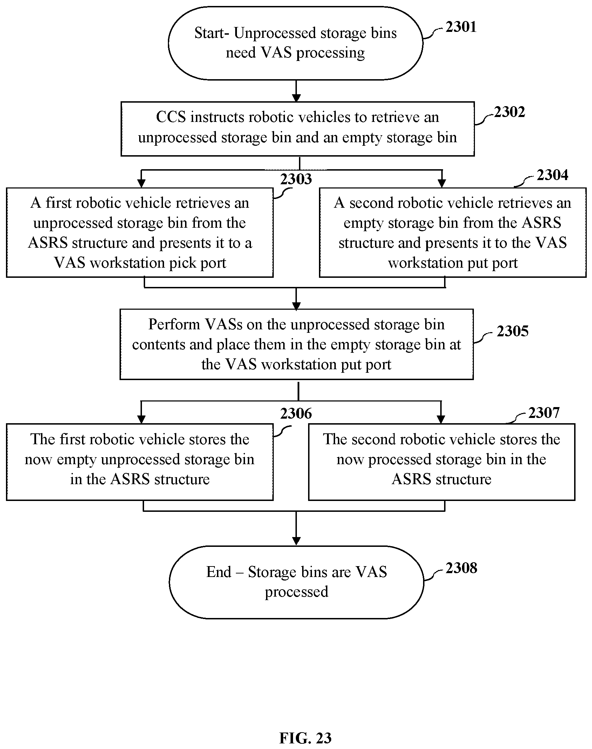

FIG. 23 illustrates a flowchart of a method for executing a value-added service (VAS) process in the order fulfillment system, according to an embodiment herein. Consider an example where inventory items that need 2301 VAS processing are loaded into the unprocessed storage or stock keeping unit (SKU) bins. The computerized control system (CCS) instructs and activates 2302 robotic vehicles, for example, robotic storage/retrieval vehicles (RSRVs), to retrieve an unprocessed storage bin and an empty storage bin from the automated storage and retrieval system (ASRS) structure of the order fulfillment system. A first robotic vehicle retrieves 2303 an unprocessed storage bin from the ASRS structure and presents the unprocessed storage bin to a pick port or a picking access port of the VAS workstation of the VAS and returns area. A second robotic vehicle retrieves 2304 an empty bin from the ASRS structure and presents the empty bin to a put port or a placement access port of the VAS workstation. The CCS instructs a worker, for example, a human worker via a human-machine interface (HMI) at the VAS workstation or a robotic worker, to perform 2305 value-added services, for example, re-packaging, labeling, price tagging, security tagging, etc., on the contents of the unprocessed storage bin and place the contents in the empty storage bin at the put port of the VAS workstation. The first robotic vehicle stores 2306 the now empty unprocessed storage bin in the ASRS structure, while the second robotic vehicle stores 2307 the now processed storage bin in the ASRS structure. The VAS process ends 2308 when the first robotic vehicle and the second robotic vehicle store the now empty unprocessed storage bin and the now processed storage bin respectively in the ASRS structure.

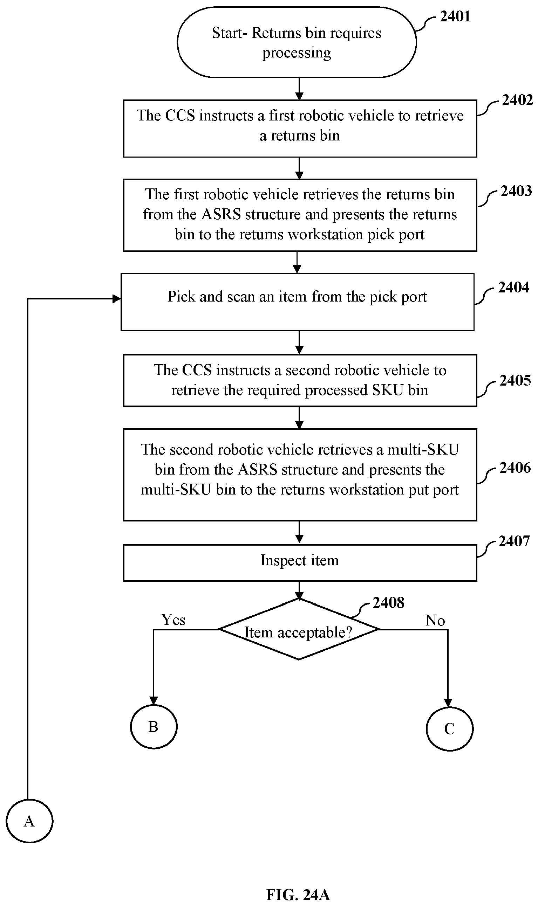

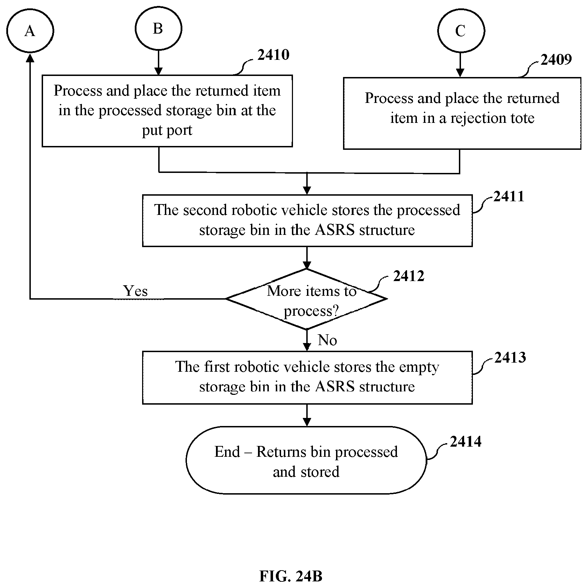

FIGS. 24A-24B illustrate a flowchart of a method for executing a returns handling process in the order fulfillment system, according to an embodiment herein. Consider an example where a returns bin requires processing 2401. The computerized control system (CCS) instructs and activates 2402 a first robotic vehicle, for example, a robotic storage/retrieval vehicle (RSRV), to retrieve the returns bin. The first robotic vehicle retrieves 2403 the returns bin from the automated storage and retrieval system (ASRS) structure and presents the returns bin to the pick port or the picking access port of the returns handling workstation of the VAS and returns area. The CCS instructs a worker, for example, a human worker or a robotic worker, to pick and scan 2404 a returned item from the pick port. The CCS instructs and activates 2405 a second robotic vehicle, for example, an RSRV, to retrieve the required processed storage or stock keeping unit (SKU) bin from the ASRS structure. The second robotic vehicle retrieves 2406 a multi-compartment storage bin, also referred to as a "multi-SKU bin" from the ASRS structure and presents the multi-SKU bin to the put port or the placement access port of the returns-handling workstation. The worker inspects 2407 the returned item and determines 2408 whether the returned item is acceptable. If the returned item is not acceptable, the CCS instructs the worker to process and place 2409 the returned item in a rejection tote. If the returned item is acceptable, the CCS instructs the worker to process and place 2410 the returned item in the processed storage bin at the put port. The second robotic vehicle stores 2411 the processed storage bin in the ASRS structure. The CCS determines 2412 whether there are more returned items to process. If there are more returned items to process, the steps 2404 to 2412 disclosed above are repeated. If there are no more returned items to process, the first robotic vehicle, in communication with the CCS, stores 2413 the empty storage bin in the ASRS structure. The returns handling process ends 2414 when the returns bin is processed and stored in the ASRS structure.

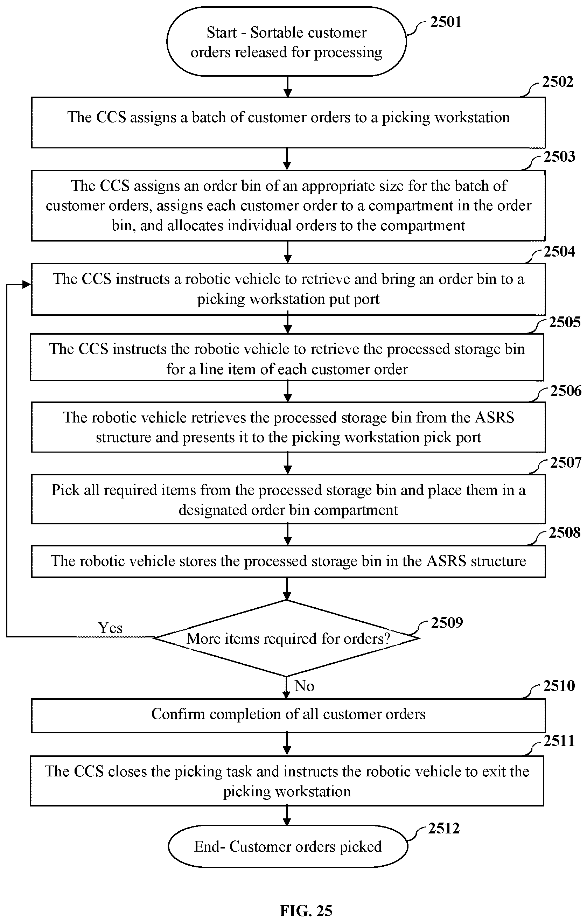

FIG. 25 illustrates a flowchart of a method for executing a picking process in the order fulfillment system, according to an embodiment herein. Consider an example where sortable customer orders are released for processing 2501. The computerized control system (CCS) assigns 2502 a batch of customer orders to a picking workstation of the picking area. The CCS assigns 2503 an order bin of an appropriate size for the batch of customer orders, assigns each customer order to a compartment in the order bin, and allocates individual orders to the compartment. The CCS instructs 2504 a robotic vehicle, for example, a robotic storage/retrieval vehicle (RSRV), to retrieve and bring an order bin to a put port or a placement access port of the picking workstation. The CCS instructs 2505 the robotic vehicle to retrieve the processed storage or stock keeping unit (SKU) bin for a line item of each customer order. The robotic vehicle retrieves 2506 the processed storage bin from the automated storage and retrieval system (ASRS) structure and presents the processed storage bin to the pick port of the picking workstation. The CCS instructs 2507 a worker, for example, a human worker via a human-machine interface, or a robotic worker, to pick all the required items from the processed storage bin and place the picked items in an assigned compartment of the order bin. The robotic vehicle stores 2508 the processed storage bin in the ASRS structure. The CCS determines 2509 whether more items are required for the customer orders. If more items are required for the customer orders, steps 2504-2508 disclosed above are repeated. If more items are required for the customer orders, the CCS instructs 2507 the worker to confirm 2510 completion of all customer orders. The CCS closes 2511 the picking task and instructs the robotic vehicle to exit the picking workstation. The picking process ends 2512 after the customer orders are picked.

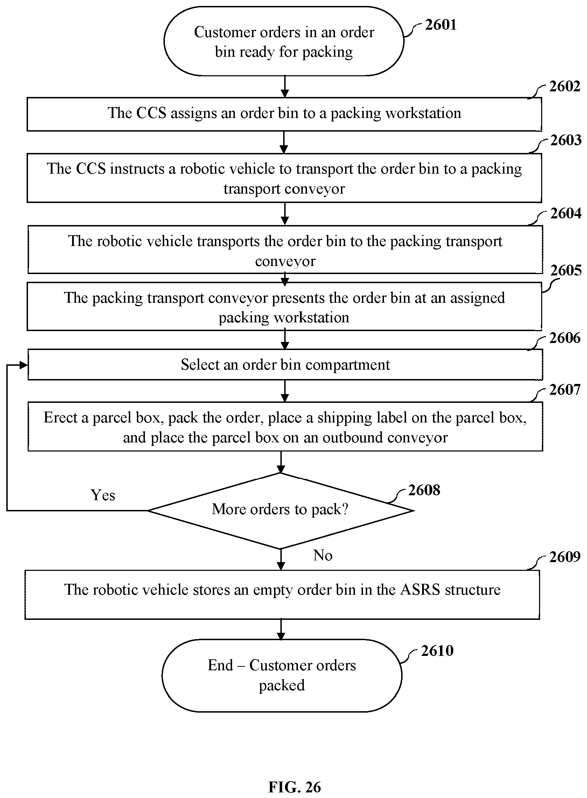

FIG. 26 illustrates a flowchart of a method for executing a packing process in the order fulfillment system, according to an embodiment herein. Consider an example where customer orders in an order bin are ready for packing 2601. The computerized control system (CCS) assigns 2602 an order bin to a packing workstation of the packing area. The CCS instructs and activates 2603 a robotic vehicle, for example, a robotic storage/retrieval vehicle (RSRV), to transport the order bin to the packing transport conveyor. The robotic vehicle transports 2604 the order bin to the packing transport conveyor. The packing transport conveyor presents 2605 the order bin at an assigned packing workstation. The CCS instructs a worker, for example, a human worker via a human-machine interface, or a robotic worker, to select 2606 a compartment of the order bin. The worker erects 2607 a parcel box, packs the order, places a shipping label on the parcel box, and places the parcel box on an outbound conveyor or a package feeding conveyor. The CCS determines 2608 whether there are more orders to pack. If there are more orders to pack, the steps 2606 and 2607 disclosed above are repeated. If there are no more orders to pack, the robotic vehicle stores 2609 the empty order bin in the automated storage and retrieval system (ASRS) structure. The packing process ends 2610 after the customer orders are packed.

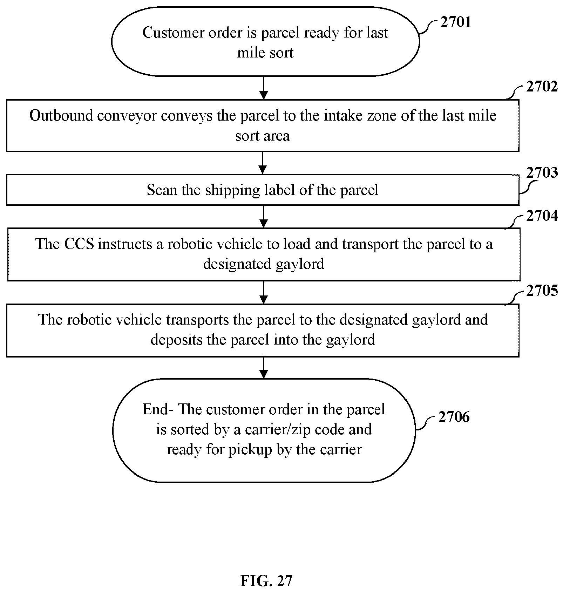

FIG. 27 illustrates a flowchart of a method for executing a last mile sortation process in the order fulfillment system, according to an embodiment herein. Consider an example where a customer order is parcel-ready for a last mile sort operation 2701. The outbound conveyor or the package feeding conveyor conveys 2702 the parcel to the intake zone of the last mile sort area. The computerized control system (CCS) instructs a worker, for example, a human worker or a robotic worker, to scan 2703 the shipping label of the parcel. The CCS instructs 2704 a robotic vehicle, for example, a robotic storage/retrieval vehicle (RSRV), to load and transport the parcel to a designated gaylord. The robotic vehicle transports 2705 the parcel to the designated gaylord and deposits the parcel into the gaylord. The last mile sortation process ends 2706 when the customer order in the parcel is sorted by a carrier or a zip code and ready for pickup by the carrier.

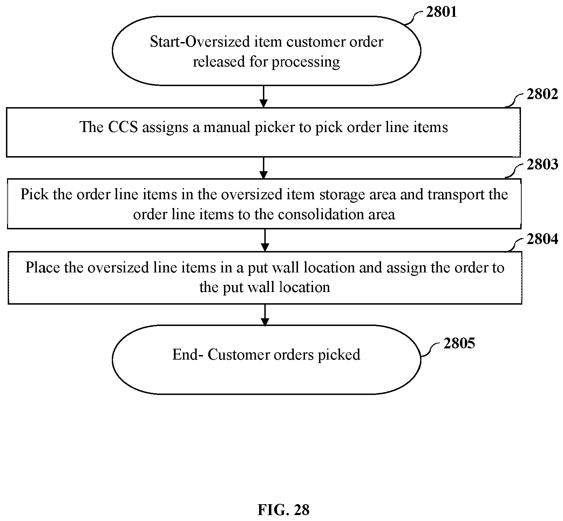

FIG. 28 illustrates a flowchart of a method for executing an oversized item picking process in the order fulfillment system, according to an embodiment herein. Consider an example where an oversized item customer order is released for processing 2801. The computerized control system (CCS) assigns 2802 a manual picker to pick order line items. The manual picker picks 2803 the order line items in the oversized item storage area and transports the order line items to the consolidated area. The manual picker then places 2804 the oversized line items in a put wall location and assigns the order to the put wall location. The oversized item picking process ends 2805 when the oversized item customer orders are picked.

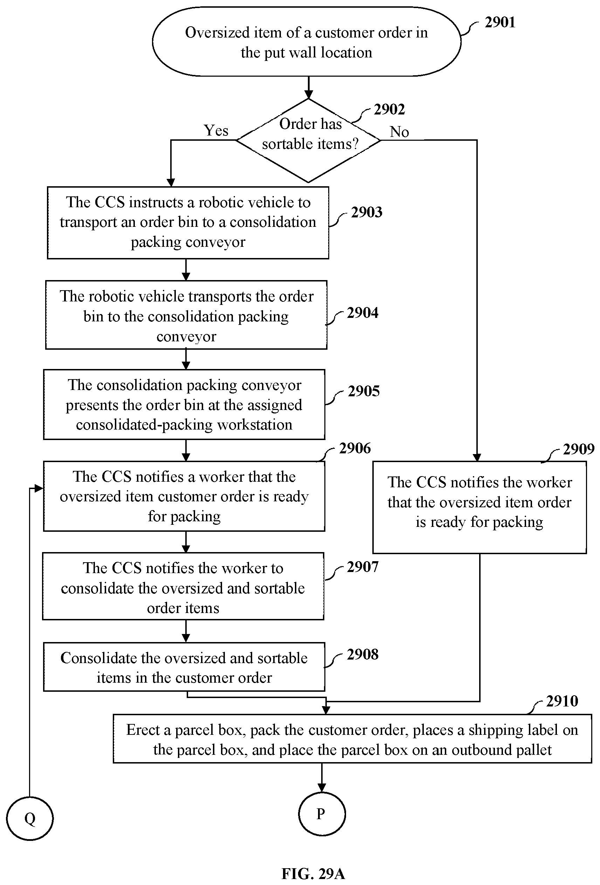

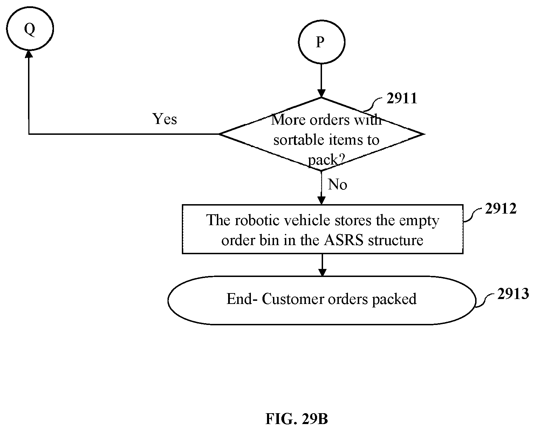

FIGS. 29A-29B illustrate a flowchart of a method for executing an oversized item packing process in the order fulfillment system, according to an embodiment herein. Consider an example where an oversized item of a customer order is placed in the put wall location 2901. The computerized control system (CCS) determines 2902 whether the customer order contains sortable items. If the customer order contains sortable items, the CCS instructs 2903 a robotic vehicle, for example, a robotic storage/retrieval vehicle (RSRV) to transport an order bin to a consolidation packing conveyor. The robotic vehicle transports 2904 the order bin to the consolidation packing conveyor. The consolidation packing conveyor presents 2905 the order bin to the assigned consolidated-packing workstation at the consolidation area. The CCS notifies 2906 a worker that the oversized item customer order is ready for packing. The CCS notifies 2907 the worker to consolidate the oversized and sortable order items. The worker consolidates 2908 the oversized and sortable items in the customer order. If customer order does not contain sortable items, the CCS notifies 2909 the worker that the oversized item order is ready for packing. After the step 2908 or 2909, the worker erects 2910 a parcel box, packs the customer order, places a shipping label on the parcel box, and places the parcel box on an outbound pallet. The CCS determines 2911 whether there are more customer orders with sortable items to pack. If there are more customer orders with sortable items to pack, the steps 2906 to 2910 disclosed above are repeated. If there are no more customer orders with sortable items to pack, the robotic vehicle stores 2912 the empty order bin in the automated storage and retrieval system (ASRS) structure. The oversized item packing process ends 2913 when the customer orders are packed.

FIG. 30 illustrates an architectural block diagram of the order fulfillment system 200 for executing an order fulfillment workflow between different service areas, according to an embodiment herein. In an embodiment, the computerized control system (CCS) 265 of the order fulfillment system 200 is in operable communication with the automated storage and retrieval system (ASRS) 208; a fleet of robotic vehicles, for example, the robotic storage/retrieval vehicles (RSRVs) 406 and the robotic package-handling vehicles 1700; multiple workstations, for example, decanting/induction workstations 221, the value-added service (VAS) workstations 206, the returns-handling workstations 207, the picking workstations 240, the packing workstations 245, and the consolidated-packing workstations 255 illustrated in FIG. 7, FIG. 9, FIG. 11, FIG. 14, and FIG. 16 of the different service areas; and multiple conveyors 203, 211, 218, 238, 239, 248, and 250 illustrated in FIGS. 2-3, FIG. 7, FIGS. 10B-10C, and FIG. 15A. One or more of the workstations comprise human-machine interfaces (HMIs) with display screens 901 and a light guidance system, for example, the put-to-light guidance system 232 illustrated in FIG. 10A and the pick-to-light guidance system 253 illustrated in FIG. 15B.

The CCS 265 comprises a network interface 268 coupled to a communication network and at least one processor 266 coupled to the network interface 268. As used herein, "communication network" refers, for example, to one of the internet, a wireless network, a communication network that implements Bluetooth^{®} of Bluetooth Sig, Inc., a network that implements Wi-Fi^{®} of Wi-Fi Alliance Corporation, an ultra-wideband (UWB) communication network, a wireless universal serial bus (USB) communication network, a communication network that implements ZigBee^{®} of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a fifth generation (5G) mobile communication network, a long-term evolution (LTE) mobile communication network, a public telephone network, etc., a local area network, a wide area network, an internet connection network, an infrared communication network, etc., or a network formed from any combination of these networks. The network interface 268 enables connection of the CCS 265 to the communication network. In an embodiment, the network interface 268 is provided as an interface card also referred to as a line card. The network interface 268 is, for example, one or more of infrared interfaces, interfaces implementing Wi-Fi^{®} of Wi-Fi Alliance Corporation, universal serial bus interfaces, FireWire^{®} interfaces of Apple Inc., Ethernet interfaces, frame relay interfaces, cable interfaces, digital subscriber line interfaces, token ring interfaces, peripheral controller interconnect interfaces, local area network interfaces, wide area network interfaces, interfaces using serial protocols, interfaces using parallel protocols, Ethernet communication interfaces, asynchronous transfer mode interfaces, high speed serial interfaces, fiber distributed data interfaces, interfaces based on transmission control protocol/internet protocol, interfaces based on wireless communications technology such as satellite technology, radio frequency technology, near field communication, etc.

In an embodiment, the CCS 265 is a computer system that is programmable using high-level computer programming languages. The CCS 265 is implemented using programmed and purposeful hardware. In the order fulfillment system 200 disclosed herein, the CCS 265 interfaces with the ASRS structure 208, the robotic vehicles 406/1700, and the workstations 206, 207, 221, 240, 245, and 255, and therefore more than one specifically programmed computing system is used for fulfilling orders. The CCS 265 further comprises a non-transitory, computer-readable storage medium, for example, a memory unit 270 communicatively coupled to the processor(s) 266. As used herein, "non-transitory, computer-readable storage medium" refers to all computer-readable media, for example, non-volatile media and volatile media, except for a transitory, propagating signal. Non-volatile media comprise, for example, solid state drives, optical discs or magnetic disks, flash memory cards, a read-only memory (ROM), etc. Volatile media comprise, for example, a register memory, a processor cache, a random-access memory (RAM), etc.

The processor 266 refers to any one or more microprocessors, central processing unit (CPU) devices, finite state machines, computers, microcontrollers, digital signal processors, logic, a logic device, an application specific integrated circuit (ASIC), a field-programmable gate array (FPGA), a chip, etc., or any combination thereof, capable of executing computer programs or a series of commands, instructions, or state transitions. In an embodiment, the processor 266 is implemented as a processor set comprising, for example, a programmed microprocessor and a math or graphics co-processor. The CCS 265 is not limited to employing the processor 266. In an embodiment, the CCS 265 employs controllers or microcontrollers. The processor 266 executes the modules, for example, 270a-270e of the CCS 265.

The memory unit 270 is used for storing program instructions, applications, and data. The memory unit 270 stores computer program instructions defined by modules, for example, 270a-270d of the CCS 265. The memory unit 270 is operably and communicatively coupled to the processor 266 for executing the computer program instructions defined by the modules, for example, 270a-270e of the CCS 265 for fulfilling orders. The memory unit 270 is, for example, a random-access memory (RAM) or another type of dynamic storage device that stores information and instructions for execution by the processor 266. The memory unit 270 also stores temporary variables and other intermediate information used during execution of the instructions by the processor 266. In an embodiment, the CCS 265 further comprises read only memories (ROMs) or other types of static storage devices that store static information and instructions for execution by the processor 266. In an embodiment, the modules, for example, 270a-270e of the CCS 265 are stored in the memory unit 270. The non-transitory, computer-readable storage medium, for example, the memory unit 270, is configured to store computer program instructions, which when executed by the processor(s) 266, cause the processor(s) 266 to activate one or more of the robotic vehicles 406/1700 to one or more of: (a) navigate within the ASRS structure 208 and/or through each of the different service areas; (b) retrieve storage bins from the storage locations of the ASRS structure 208; (c) drop off the storage bins at the different service areas; (d) pick up the storage bins from the different service areas; and (e) return and store the storage bins to the storage locations of the ASRS structure 208. The CCS 265 is configured to transmit service instructions to a worker, for example, a human worker or a robotic worker, for performance of one or more service actions on the items contained in the storage bins.

As illustrated in FIG. 30, the CCS 265 further comprises a data bus 271, a display unit 267, and common modules 269. The data bus 271 permits communications between the modules, for example, 266, 267, 268, 269, and 270 of the CCS 265. The display unit 267, via a graphical user interface (GUI) 267a, displays information, display interfaces, user interface elements such as checkboxes, input text fields, etc., for example, for allowing a user such as a system administrator to trigger an update to digital records for customer orders, enter inventory information, update database tables, etc., for fulfilling orders. The CCS 265 renders the GUI 267a on the display unit 267 for receiving inputs from the system administrator. The GUI 267a comprises, for example, an online web interface, a web-based downloadable application interface, a mobile-based downloadable application interface, etc. The display unit 267 displays the GUI 267a. The common modules 269 of the CCS 265 comprise, for example, input/output (I/O) controllers, input devices, output devices, fixed media drives such as hard drives, removable media drives for receiving removable media, etc. Computer applications and programs are used for operating the CCS 265. The programs are loaded onto fixed media drives and into the memory unit 270 via the removable media drives. In an embodiment, the computer applications and programs are loaded into the memory unit 270 directly via the communication network.

In an exemplary implementation illustrated in FIG. 30, the CCS 265 comprises a content determination module 270a, a bin assignment module 270b, a robot activation module 270c, an order management module 270d, and a facility database 270e. The content determination module 270a defines computer program instructions for determining contents of a case/tote unloaded from inbound loading docks into a facility that employs the order fulfillment system 200 disclosed herein. The bin assignment module 270b defines computer program instructions for assigning the contents of the case/tote to an available storage bin and flagging the storage bin as an unprocessed storage bin, a returns bin, or a processed storage bin based on the processing and returns handling requirements. The robot activation module 270c activates one or more of the robotic vehicles 406/1700 for performing various storage and retrieval operations during decanting, induction, value-added service (VAS) processing, returns handling, picking, packing, last mile order sortation, etc., in the different service areas of the order fulfillment system 200 as disclosed above. The order management module 270d defines computer program instructions for receiving customer orders, updating order information and inventory information in the facility database 270e, transmitting service instructions to workers at the workstations, and executing order fulfillment instructions.

The processor 266 of the CCS 265 retrieves instructions defined by the content determination module 270a, the bin assignment module 270b, the robot activation module 270c, and the order management module 270d, for performing respective functions disclosed above. The processor 266 retrieves instructions for executing the modules, for example, 270a-270d from the memory unit 270. The instructions fetched by the processor 266 from the memory unit 270 after being processed are decoded. After processing and decoding, the processor 266 executes their respective instructions, thereby performing one or more processes defined by those instructions. An operating system of the CCS 265 performs multiple routines for performing a number of tasks required to assign the input devices, the output devices, and the memory unit 270 for execution of the modules, for example, 270a-270e. The tasks performed by the operating system comprise, for example, assigning memory to the modules, for example, 270a-270e, etc., and to data used by the CCS 265, moving data between the memory unit 270 and disk units, and handling input/output operations. The operating system performs the tasks on request by the operations and after performing the tasks, the operating system transfers the execution control back to the processor 266. The processor 266 continues the execution to obtain one or more outputs.

For purposes of illustration, the detailed description refers to the modules, for example, 270a-270e, being run locally on a single computer system; however the scope of the order fulfillment system 200 and the method disclosed herein is not limited to the modules, for example, 270a-270e, being run locally on a single computer system via the operating system and the processor 266, but may be extended to run remotely over the communication network by employing a web browser and a remote server, a mobile phone, or other electronic devices. In an embodiment, one or more portions of the order fulfillment system 200 disclosed herein are distributed across one or more computer systems (not shown) coupled to the communication network.

The non-transitory, computer-readable storage medium disclosed herein stores computer program instructions executable by the processor 266 for fulfilling customer orders. The computer program instructions implement the processes of various embodiments disclosed above and perform additional steps that may be required and contemplated for fulfilling customer orders. When the computer program instructions are executed by the processor 266, the computer program instructions cause the processor 266 to perform the steps of the method for fulfilling customer orders as disclosed above. In an embodiment, a single piece of computer program code comprising computer program instructions performs one or more steps of the method disclosed above. The processor 266 retrieves these computer program instructions and executes them.

A module, or an engine, or a unit, as used herein, refers to any combination of hardware, software, and/or firmware. As an example, a module, or an engine, or a unit may include hardware, such as a microcontroller, associated with a non-transitory, computer-readable storage medium to store computer program codes adapted to be executed by the microcontroller. Therefore, references to a module, or an engine, or a unit, in an embodiment, refer to the hardware that is specifically configured to recognize and/or execute the computer program codes to be held on a non-transitory, computer-readable storage medium. The computer program codes comprising computer readable and executable instructions can be implemented in any programming language, for example, C, C++, C#, Java^{®}, JavaScript^{®}, Fortran, Ruby, Perl^{®}, Python^{®}, Visual Basic^{®}, hypertext preprocessor (PHP), Microsoft^{®} .NET, Objective-C^{®}, etc. Other object-oriented, functional, scripting, and/or logical programming languages can also be used. In an embodiment, the computer program codes or software programs are stored on or in one or more mediums as object code. In another embodiment, the term "module" or "engine" or "unit" refers to the combination of the microcontroller and the non-transitory, computer-readable storage medium. Often module or engine or unit boundaries that are illustrated as separate commonly vary and potentially overlap. For example, a module or an engine or a unit may share hardware, software, firmware, or a combination thereof, while potentially retaining some independent hardware, software, or firmware. In various embodiments, a module or an engine or a unit includes any suitable logic.

The order fulfillment system disclosed herein uses a standardized storage bin and one automation solution for all warehouse workflows, thereby allowing all goods/items and materials for each order fulfillment process to be densely stored and predictably managed by a single entity as a single collaborative system with any number of processes. The order fulfillment system disclosed herein allows all warehouse processes, for example, receiving, decanting, induction, VAS processing, returns handling, order picking, order packing, and last mile sortation to be completed by one automated material handling system that does not require conveyors between different service areas.

The order fulfillment system disclosed herein allows transport of goods/items between all warehouse processes, in any sequence, since the lower two-dimensional (2D) grid, that is, the gridded lower track layout of the three-dimensional (3D) gridded storage structure, interconnects all the different service areas of the order fulfillment system. This interconnection allows any number of processes to be completed in any order and multiple times, if needed for reworking goods to new value-added standards. This interconnection also allows additional service areas and processes to be easily and flexibly added as retailer's fulfillment requirements change. The lower 2D grid allows direct attachment to purpose-built workstations that perform all fulfillment center functions comprising, for example, induction/decant, VAS processing, returns handling, picking, packing, last mile sortation, consolidation, etc. The order fulfillment system disclosed herein inputs pallets of goods received from manufacturers and outputs pallets of customer orders in parcels sorted by zip code. The order fulfillment system disclosed herein provides an automation system that is adaptable to changing conditions easily and flexibly. Moreover, in the order fulfillment system disclosed herein, the same storage medium, that is, the ASRS structure can be used by all interconnected processes to buffer any differences in process flow. This allows maximum flexibility to a warehouse operator and minimizes the operational sensitivity to outside circumstances since material can be indefinitely stored. Furthermore, since all service areas are interconnected and managed by the same fleet of robotic vehicles, system logic is simplified with no need to physically transfer items from service area to service area. Consequently, goods do not have to be received and identified, for example, using a bar code scan, a radio frequency identification (RFID) scan, etc., by each process to complete the logical transfer of custody between entities, that is, between the different service areas.

Furthermore, the order fulfillment system disclosed herein rectifies the problem of a relatively large footprint provided by conventional automated solutions by integrating vertical storage above the lower 2D grid used for inter-service area conveyance, which maximizes storage density and substantially reduces wasted vertical space. As a result, end-to-end fulfillment solutions are a fraction of the size of conventional solutions and require substantially less real estate to achieve the same deliverables. This allows retailers to consolidate storage within their existing facilities to expand their business, while also allowing order fulfillment operations to become feasible in smaller in-market facilities closer to customers.

The embodiments disclosed above execute a large shift in the way fulfillment is achieved and is possible due to the virtual conveyor and sortation capabilities of the order fulfillment system disclosed herein. That is, the lower 2D grid of the ASRS structure allows the robotic vehicles to convey goods between any peripheral service area attached to the ASRS structure. The movements of the robotic vehicles on the lower 2D grid are orchestrated by the computerized control system, which allows storage bins to be presented just-in-time, grouped by order, and even delivered in specific sequences to peripheral services areas. Without this capability, solving complex processes with a single integrated automated solution would not be possible, since conventional ASRS equipment relies on downstream sortation solutions to deliver goods to service areas at the right time and sequence.

The result of using one automation system, that is, the order fulfillment system disclosed herein with integrated service areas for all order fulfillment processes of sortable goods allows inbound pallets/cases of inventory received from manufacturers and returns received from retail stores to be immediately inducted into the order fulfillment system. All sortable goods/items are processed according to business rules of the retailers, and pallets of packed customer orders sorted by postal code and made ready for pickup by carriers are output from the order fulfillment system. While the order fulfillment system benefits small, sortable goods that fit inside of the storage bins, the order fulfillment system also streamlines the fulfillment and consolidation of oversized goods/items with sortable goods. The methods disclosed above show that monitoring manual picking processes to trigger order picking of sortable items allows orders comprised of both classes of goods to be assembled and packed seamlessly in the same parcel, thereby simplifying operations and lowering shipping costs for warehouse operators.

The embodiments disclosed herein are not limited to a particular computer system platform, processor, operating system, or communication network. One or more of the embodiments disclosed herein are distributed among one or more computer systems, for example, servers configured to provide one or more services to one or more client computers, or to perform a complete task in a distributed system. For example, one or more of embodiments disclosed herein are performed on a client-server system that comprises components distributed among one or more server systems that perform multiple functions according to various embodiments. These components comprise, for example, executable, intermediate, or interpreted code, which communicate over a network using a communication protocol. The embodiments disclosed herein are not limited to be executable on any particular system or group of systems, and are not limited to any particular distributed architecture, network, or communication protocol.

## Claims

1. An order fulfillment system (200), said order fulfillment system (200) comprising:
an automated storage and retrieval system (ASRS) structure (208), said ASRS structure (208) comprising a three-dimensional array of storage locations distributed throughout a two-dimensional footprint of the ASRS structure (208) at a plurality of storage levels within the ASRS structure (208);
a fleet of robotic storage/retrieval vehicles (406) navigable within the ASRS structure (208) at least by travel in two dimensions over the two-dimensional footprint of the ASRS structure (208) at service levels of the ASRS structure (208), wherein the service levels are positioned above and below the storage levels;
a supply of storage bins (403) of compatible size and shape for storage in the storage locations of the ASRS structure (208), wherein the storage bins (403) are configured to be carried (2103, 2105) by the robotic storage/retrieval vehicles (406) within the ASRS structure (208) during transfer of the storage bins (403) to and from the storage locations;
a plurality of different service areas (202, 204, 205, 209, 210, 212, 216, 217) positioned adjacent to an outer perimeter (208a, 208b, 208c, 208d) of the two-dimensional footprint of the ASRS structure (208) at the service levels of the ASRS structure (208), wherein each of the different service areas (202, 204, 205, 209, 210, 212, 216, 217) comprises workstations (206, 207, 221, 240, 245, 255) configured for a task or a combination of a plurality of tasks different from the workstations (206, 207, 221, 240, 245, 255) at another of the different service areas (202, 204, 205, 209, 210, 212, 216, 217), and wherein each of the different service areas (202, 204, 205, 209, 210, 212, 216, 217) is configured to receive a drop-off of the storage bins (403) and facilitate a travel of the robotic storage/retrieval vehicles (406) carrying the storage bins (403) therethrough; said order fulfillment system (200) **characterized in that**:
the different service areas (202, 204, 205, 209, 210, 212, 216, 217) are configured in a continuous arrangement around the outer perimeter (208a, 208b, 208c, 208d) of the ASRS structure (208) and at a lower level (400a) of the ASRS structure (208), to perform multiple functions of the order fulfillment center (200) in a continuous manner;
a gridded lower track layout (402) interconnects the different service areas (202, 204, 205, 209, 210, 212, 216, 217) of the order fulfillment system (200), thereby allowing transportation of goods/items between all the warehouse processes in any sequence, and thereby enabling any number of warehouse processes to be completed in any order; and
different perimeter sides (208a, 208b, 208c, 208d) of the ASRS structure (208) are each occupied by a different combination of the workstations (206, 207, 221, 240, 245, 255) such that each perimeter side (208a, 208b, 208c, 208d) of the ASRS structure (208) is dedicated to a particular task or a particular combination of the tasks that differs from the task or the particular combination of the tasks performed at other perimeter sides (208a, 208b, 208c, 208d) of the ASRS structure (208).

2. Order fulfillment system (200) of claim 1, wherein the storage bins (403) are transportable between the different service areas (202, 204, 205, 209, 210, 212, 216, 217) in any order.

3. Order fulfillment system (200) of claim 1 or 2, wherein each of the different service areas (202, 204, 205, 209, 210, 212, 216, 217) is configured to receive the storage bins (403) a plurality of times for performance of the plurality of tasks.

4. Order fulfillment system (200) of one of the preceding claims, wherein the storage bins (403) are received (2101) at a first one of the different service areas (202, 204, 205, 209, 210, 212, 216, 217) for performance of one or more of the plurality of tasks and subsequently stored in the storage locations of the ASRS structure (208) and retrieved from the storage locations of the ASRS structure (208) for the transfer of the storage bins (403) to a second one of the different service areas (202, 204, 205, 209, 210, 212, 216, 217).

5. Order fulfillment system (200) of one of the preceding claims, wherein the different service areas (202, 204, 205, 209, 210, 212, 216, 217) comprise a decanting area (204) at which inbound items (902) are placed in an originally received (2101) unprocessed condition in unprocessed storage bins (403a) selected from the supply of storage bins (403), and from which the unprocessed storage bins (403a) are inducted (2107, 2104) into the ASRS structure (208).

6. Order fulfillment system (200) of claim 5, wherein the decanting area (204) is a combined decanting and induction area at which the unprocessed storage bins (403a) are inducted (2107, 2104) directly into the ASRS structure (208) by the robotic storage/retrieval vehicles (406) without transfer to, past, or through any other of the different service areas (202, 204, 205, 209, 210, 212, 216, 217).

7. Order fulfillment system (200) of claim 6, wherein the different service areas (202, 204, 205, 209, 210, 212, 216, 217) further comprise a processing area (205) to which the unprocessed storage bins (403a) inducted (2107, 2104) into the ASRS structure (208) are served by the robotic storage/retrieval vehicles (406) for processing (2801, 2501) the inbound items (902) contained in the unprocessed storage bins (403a), and from which the processed items are returned into the ASRS structure (208) for storage therein as saleable inventory ready for order fulfillment.

8. Order fulfillment system (200) of claim , wherein, at the processing area (205), the processed items are transferred from the unprocessed storage bins (403a) to inventory storage bins (403b) selected from the supply of storage bins (403), and returned to the ASRS structure (208) in the inventory storage bins (403b).

9. Order fulfillment system (200) of one of the preceding claims, wherein the different service areas (202, 204, 205, 209, 210, 212, 216, 217) comprise a picking area (209) to which inventory items in the ASRS structure (208) are served by the robotic storage/retrieval vehicles (406) for order picking.

10. Order fulfillment system (200) of claim 9, wherein the different service areas (202, 204, 205, 209, 210, 212, 216, 217) further comprise a packing area (210) to which partially fulfilled orders previously picked at the picking area (209) are served by the robotic storage/retrieval vehicles (406) for packing (2601).

11. Order fulfillment system (200) of claim 10, wherein the different service areas (202, 204, 205, 209, 210, 212, 216, 217) further comprise an oversized item storage area (212) for storing large-scale items substantially large for storage in the ASRS structure (208), and wherein the different service areas (202, 204, 205, 209, 210, 212, 216, 217) further comprise a consolidation area (217) to which ordered large-scale items are transferred for consolidation (2908) with inventory items picked (2106) at the picking area (209), and wherein the consolidation area (217) overlaps the packing area (210).

12. Order fulfillment system (200) of claim 1 or 11, wherein the consolidation area (217) that overlaps the packing area (210) comprises at least one consolidated-packing workstation (255), wherein the consolidated-packing workstation (255) is configured to share a common order bin conveyor (248) with another of the one or more workstations (206, 207, 221, 240, 245, 255) of the packing area (210).

13. Order fulfillment system (200) of one of the preceding claims, further comprising at least one robotic package-handling vehicle (1700) navigable within the ASRS structure (208) and operable to receive packaged orders (1501) containing ordered items (903) fulfilled from the ASRS structure (208), wherein the different service areas (202, 204, 205, 209, 210, 212, 216, 217) comprise a last mile sort area (216) at which shipment-consolidation containers (259) of a greater capacity than the storage bins (403) are stored at positions accessible from the ASRS structure (208), and wherein the robotic package-handling vehicle (1700) is operable to compile the packaged orders (1501) into the shipment-consolidation containers (259) at the last mile sort area (216).

14. Order fulfillment system (200) of claim 13, wherein the at least one robotic package-handling vehicle (1700) is a conveyor-equipped robotic vehicle comprising a wheeled chassis (1701) and a conveyor unit (1703) mounted atop the wheeled chassis (1701), and wherein the wheeled chassis (1701) is operable to perform locomotion of the at least one robotic package-handling vehicle (1700) through the ASRS structure (208), and wherein the conveyor unit (1703) is operable to receive the packaged orders (1501) and offload the packaged orders (1501) to the shipment-consolidation containers (259), and wherein the conveyor unit (1703) is rotatably mounted atop the wheeled chassis (1701) for movement relative to the wheeled chassis (1701) about an upright axis (1705) to re-orient the conveyor unit (1703) into a plurality of different working positions operable to offload the packaged orders (1501) in different directions from the at least one robotic package-handling vehicle (1700) to the shipment-consolidation containers (259).

15. Order fulfillment system (200) of claim 14, wherein the conveyor unit (1703) is rotatable between at least two working positions of ninety-degree increment to one another about the upright axis (1705).

16. Order fulfillment system (200) of claim 1, wherein at least one of the workstations (206, 207, 221, 240, 245, 255) is arranged to receive two different storage bins (403) between which items received at the at least one of the workstations (206, 207, 221, 240, 245, 255) are transferred, and wherein the at least one of the workstations (206, 207, 221, 240, 245, 255) receives a first of the two different storage bins via one of:
a drive-through travel path on which the robotic storage/retrieval vehicles (406) are traversable through the at least one of the workstations (206, 207, 221, 240, 245, 255) to carry the first of the two different storage bins (403) therethrough; and
a separate conveyor-based travel path on which previously inducted storage bins (403) traverse through the at least one of the workstations (206, 207, 221, 240, 245, 255) independent of the robotic storage/retrieval vehicles (406).

17. Order fulfillment system (200) of claim 1, wherein at least one of the different service areas (202, 204, 205, 209, 210, 212, 216, 217) comprises at least one series of workstations (206, 207, 221, 240, 245, 255) arranged in a row extending outward from the ASRS structure (208) and served by a bin conveyor, wherein the bin conveyor comprises an outbound section extending outward from the ASRS structure (208) and passing by the series of workstations (206, 207, 221, 240, 245, 255), and wherein the bin conveyor further comprises a series of offshoots, each branching off the outbound section of the bin conveyor to a respective one of the workstations (206, 207, 221, 240, 245, 255) to deliver a received one of the storage bins (403) thereto.

18. Order fulfillment system (200) of claim 1, further comprising a computerized control system (265) in operable communication with the fleet of robotic storage/retrieval vehicles (406), wherein the computerized control system (265) comprises a network interface (268) coupled to a communication network, at least one processor (266) coupled to the network interface (268), and a non-transitory, computer-readable storage medium communicatively coupled to the at least one processor (266), wherein the non-transitory, computer-readable storage medium is configured to store computer program instructions, which when executed by processor (266), cause the processor (266) to activate one or more of the robotic storage/retrieval vehicles (406) to:
(a) navigate within the ASRS structure (208) and through the each of the different service areas (202, 204, 205, 209, 210, 212, 216, 217);
(b) retrieve the storage bins (403) from the storage locations of the ASRS structure (208);
(c) drop-off the storage bins (403) at the different service areas (202, 204, 205, 209, 210, 212, 216, 217);
(d) pick up the storage bins (403) from the different service areas (202, 204, 205, 209, 210, 212, 216, 217); and
(e) return and store the storage bins (403) to the storage locations of the ASRS structure (208);
wherein delivery of storage bins (403) to and from each of the different service areas (202, 204, 205, 209, 210, 212, 216, 217) enables space-efficient omission of inter-area conveyors running between the different service areas (202, 204, 205, 209, 210, 212, 216, 217), with inter-area storage bin (403) transfers within the two-dimensional foot-print of the ASRS structure (208) performed by robotic storage/retrieval vehicles (406), and wherein the ASRS structure (208) is an autonomously operable bin-transfer link for the storage bins (403) between the different service areas (202, 204, 205, 209, 210, 212, 216, 217).

19. Order fulfillment system (200) of claim 1, wherein at least one of the workstations (206, 207, 221, 240, 245, 255) comprises:
a picking port (231, 242) overlying a supply bin pathway on which a supply storage bin selected from the supply of storage bins (403) and containing one or more items to be picked is movable through the at least one of the workstations (206, 207, 221, 240, 245, 255) to allow picking of the one or more items from the supply storage bin when parked on the supply bin pathway at a picking spot beneath the picking port (231, 242); and
a placement access port (230, 243) overlying a recipient bin pathway on which a recipient storage bin selected from the supply of storage bins (403) and for which the one or more items are destined is movable through the at least one of the workstations (206, 207, 221, 240, 245, 255) to allow placement of the one or more items to the recipient storage bin when parked on the recipient bin pathway at a placement spot beneath the placement access port (230, 243);
wherein a first one of the supply bin pathway and the recipient bin pathway is an extension track connected to a track of the ASRS structure (208) on which the fleet of robotic storage/retrieval vehicles (406) navigate the ASRS structure (208), whereby a first one of the picking port (231, 242) and the placement access port (230, 243) is served by one of the robotic storage/retrieval vehicles (406) navigating the extension track to carry a corresponding one of the supply storage bin and the recipient storage bin to the first one of the picking port (231, 242) and the placement access port (230, 243).

20. A method for fulfilling orders, the method comprising:
receiving inbound items at a facility, the facility comprising:
an automated storage and retrieval system (ASRS) structure (208) comprising a three-dimensional array of storage locations distributed throughout a two-dimensional footprint of the ASRS structure (208) at a plurality of storage levels within the ASRS structure (208);
a fleet of robotic storage/retrieval vehicles (406) navigable within the ASRS structure (208) at least by travel in two-dimensions over the two-dimensional footprint of the ASRS structure (208) at the service levels of the ASRS structure (208), wherein the service levels are positioned above and below the storage levels; and
a plurality of different service areas (202, 204, 205, 209, 210, 212, 216, 217) positioned adjacent to an outer perimeter (208a, 208b, 208c, 208d) of the two-dimensional footprint of the ASRS structure (208) at the service levels of the ASRS structure (208), wherein each of the different service areas (202, 204, 205, 209, 210, 212, 216, 217) includes at least one of decanting workstations (221), processing workstations, picking workstations (240), packing workstations (245), value-added services workstations (206), returns-handling workstations (207), and consolidated-packing workstations (255);
said method **characterized by**:
configuring the different service areas (202, 204, 205, 209, 210, 212, 216, 217) in a continuous arrangement around the ASRS structure (208) and at a lower level (400a) of the ASRS structure (208), to perform multiple functions of the order fulfillment center (200) in a continuous manner;
interconnecting the different service areas (202, 204, 205, 209, 210, 212, 216, 217) using a gridded lower track layout (402), thereby allowing transportation of goods/items between all the warehouse processes in any sequence, and thereby enabling any number of warehouse processes to be completed in any order; and
configuring different perimeter sides (208a, 208b, 208c, 208d) of the ASRS structure (208) to be respectively occupied by a different combination of workstations (206, 207, 221, 240, 245, 255) such that each perimeter side (208a, 208b, 208c, 208d) of the ASRS structure (208) is dedicated to a particular task or a particular combination of tasks that differs from the task or the particular combination of the tasks performed at other perimeter sides (208a, 208b, 208c, 208d) of the ASRS structure (208).

## Patentansprüche

1. Auftragserfüllungssystem (200), wobei das Auftragserfüllungssystem (200) umfasst:
eine Struktur (208) eines automatischen Lager- und Entnahmesystems (ASRS (automated storage and retrieval system)), wobei die ASRS-Struktur (208) eine dreidimensionale Anordnung von Lagerplätzen umfasst, die über eine zweidimensionale Grundfläche der ASRS-Struktur (208) auf einer Mehrzahl von Lagerebenen innerhalb der ASRS-Struktur (208) verteilt sind;
eine Flotte von robotischen Lager-/Entnahmefahrzeugen (406), die innerhalb der ASRS-Struktur (208) zumindest durch Fahrt in zwei Dimensionen über die zweidimensionale Grundfläche der ASRS-Struktur (208) auf Serviceebenen der ASRS-Struktur (208) navigierbar sind, wobei die Serviceebenen oberhalb und unterhalb der Lagerebenen positioniert sind;
einen Vorrat an Lagerbehältern (403) kompatibler Größe und Form zur Lagerung in den Lagerplätzen der ASRS-Struktur (208), wobei die Lagerbehälter (403) konfiguriert sind, von den robotischen Lager-/Entnahmefahrzeugen (406) innerhalb der ASRS-Struktur (208) während des Transfers der Lagerbehälter (403) zu und von den Lagerplätzen getragen (2103, 2105) zu werden;
eine Mehrzahl von verschiedenen Servicebereichen (202, 204, 205, 209, 210, 212, 216, 217), die angrenzend an einen äußeren Umfang (208a, 208b, 208c, 208d) der zweidimensionalen Grundfläche der ASRS-Struktur (208) auf den Serviceebenen der ASRS-Struktur (208) positioniert sind, wobei jeder der verschiedenen Servicebereiche (202, 204, 205, 209, 210, 212, 216, 217) Arbeitsplätze (206, 207, 221, 240, 245, 255) umfasst, die für eine Aufgabe oder eine Kombination einer Mehrzahl von Aufgaben konfiguriert sind, die sich von den Arbeitsplätzen (206, 207, 221, 240, 245, 255) an einem anderen der verschiedenen Servicebereiche (202, 204, 205, 209, 210, 212, 216, 217) unterscheiden, und wobei jeder der verschiedenen Servicebereiche (202, 204, 205, 209, 210, 212, 216, 217) konfiguriert ist, eine Abgabe der Lagerbehälter (403) zu empfangen und eine Fahrt der robotischen Lager-/Entnahmefahrzeuge (406), die die Lagerbehälter (403) tragen, hindurch zu ermöglichen;
wobei das Auftragserfüllungssystem (200) **dadurch gekennzeichnet ist, dass**:
die verschiedenen Servicebereiche (202, 204, 205, 209, 210, 212, 216, 217) in einer kontinuierlichen Anordnung um den äußeren Umfang (208a, 208b, 208c, 208d) der ASRS-Struktur (208) und auf einer unteren Ebene (400a) der ASRS-Struktur (208) konfiguriert sind, um mehrere Funktionen des Auftragserfüllungszentrums (200) auf kontinuierliche Weise auszuführen;
ein gegittertes unteres Spurlayout (402) die verschiedenen Servicebereiche (202, 204, 205, 209, 210, 212, 216, 217) des Auftragserfüllungssystems (200) miteinander verbindet, wodurch ein Transport von Waren/Artikeln zwischen allen Lagerprozessen in beliebiger Reihenfolge ermöglicht wird, und wodurch ermöglicht wird, dass eine beliebige Anzahl von Lagerprozessen in beliebiger Reihenfolge abgeschlossen wird; und
verschiedene Umfangsseiten (208a, 208b, 208c, 208d) der ASRS-Struktur (208) jeweils von einer verschiedenen Kombination der Arbeitsplätze (206, 207, 221, 240, 245, 255) belegt sind, sodass jede Umfangsseite (208a, 208b, 208c, 208d) der ASRS-Struktur (208) einer bestimmten Aufgabe oder einer bestimmten Kombination der Aufgaben gewidmet ist, die sich von der Aufgabe oder der bestimmten Kombination der Aufgaben unterscheidet, die an anderen Umfangsseiten (208a, 208b, 208c, 208d) der ASRS-Struktur (208) ausgeführt werden.

2. Auftragserfüllungssystem (200) nach Anspruch 1, wobei die Lagerbehälter (403) zwischen den verschiedenen Servicebereichen (202, 204, 205, 209, 210, 212, 216, 217) in beliebiger Reihenfolge transportierbar sind.

3. Auftragserfüllungssystem (200) nach Anspruch 1 oder 2, wobei jeder der verschiedenen Servicebereiche (202, 204, 205, 209, 210, 212, 216, 217) konfiguriert ist, die Lagerbehälter (403) eine Mehrzahl von Malen zur Ausführung der Mehrzahl von Aufgaben zu empfangen.

4. Auftragserfüllungssystem (200) nach einem der vorhergehenden Ansprüche, wobei die Lagerbehälter (403) an einem ersten der verschiedenen Servicebereiche (202, 204, 205, 209, 210, 212, 216, 217) zur Ausführung einer oder mehrerer der Mehrzahl von Aufgaben empfangen (2101) werden und anschließend in den Lagerplätzen der ASRS-Struktur (208) gelagert und aus den Lagerplätzen der ASRS-Struktur (208) entnommen werden, um die Lagerbehälter (403) zu einem zweiten der verschiedenen Servicebereiche (202, 204, 205, 209, 210, 212, 216, 217) zu transferieren.

5. Auftragserfüllungssystem (200) nach einem der vorhergehenden Ansprüche, wobei die verschiedenen Servicebereiche (202, 204, 205, 209, 210, 212, 216, 217) einen Dekantierbereich (204) umfassen, an dem eingehende Artikel (902) in einem ursprünglich empfangenen (2101) unverarbeiteten Zustand in unverarbeitete Lagerbehälter (403a) gelegt werden, die aus dem Vorrat an Lagerbehältern (403) ausgewählt werden, und von dem die unverarbeiteten Lagerbehälter (403a) in die ASRS-Struktur (208) eingeschleust (2107, 2104) werden.

6. Auftragserfüllungssystem (200) nach Anspruch 5, wobei der Dekantierbereich (204) ein kombinierter Dekantier- und Einschleusungsbereich ist, an dem die unverarbeiteten Lagerbehälter (403a) direkt durch die robotischen Lager-/Entnahmefahrzeuge (406) in die ASRS-Struktur (208) eingeschleust (2107, 2104) werden, ohne Transfer zu, an oder durch einen anderen der verschiedenen Servicebereiche (202, 204, 205, 209, 210, 212, 216, 217).

7. Auftragserfüllungssystem (200) nach Anspruch 6, wobei die verschiedenen Servicebereiche (202, 204, 205, 209, 210, 212, 216, 217) ferner einen Verarbeitungsbereich (205) umfassen, zu dem die in die ASRS-Struktur (208) eingeschleusten (2107, 2104) unverarbeiteten Lagerbehälter (403a) von den robotischen Lager-/Entnahmefahrzeugen (406) zum Verarbeiten (2801, 2501) der in den unverarbeiteten Lagerbehältern (403a) enthaltenen eingehenden Artikel (902) bedient werden, und von dem die verarbeiteten Artikel in die ASRS-Struktur (208) zur Lagerung darin als verkaufsfähiger Lagerbestand zurückgeführt werden, der zur Auftragserfüllung bereit ist.

8. Auftragserfüllungssystem (200) nach Anspruch 7, wobei an dem Verarbeitungsbereich (205) die verarbeiteten Artikel von den unverarbeiteten Lagerbehältern (403a) in Lagerbestandsbehälter (403b) transferiert werden, die aus dem Vorrat an Lagerbehältern (403) ausgewählt werden, und in den Lagerbestandsbehältern (403b) in die ASRS-Struktur (208) zurückgeführt werden.

9. Auftragserfüllungssystem (200) nach einem der vorhergehenden Ansprüche, wobei die verschiedenen Servicebereiche (202, 204, 205, 209, 210, 212, 216, 217) einen Kommissionierbereich (209) umfassen, zu dem Lagerbestandsartikel in der ASRS-Struktur (208) von den robotischen Lager-/Entnahmefahrzeugen (406) zur Kommissionierung bedient werden.

10. Auftragserfüllungssystem (200) nach Anspruch 9, wobei die verschiedenen Servicebereiche (202, 204, 205, 209, 210, 212, 216, 217) ferner einen Packbereich (210) umfassen, zu dem teilweise erfüllte Aufträge, die zuvor am Kommissionierbereich (209) kommissioniert wurden, von den robotischen Lager-/Entnahmefahrzeugen (406) zum Verpacken (2601) bedient werden.

11. Auftragserfüllungssystem (200) nach Anspruch 10, wobei die verschiedenen Servicebereiche (202, 204, 205, 209, 210, 212, 216, 217) ferner einen Übergroßartikel-Lagerbereich (212) zum Lagern von großformatigen Artikeln umfassen, die im Wesentlichen zu groß für die Lagerung in der ASRS-Struktur (208) sind, und wobei die verschiedenen Servicebereiche (202, 204, 205, 209, 210, 212, 216, 217) ferner einen Konsolidierungsbereich (217) umfassen, zu dem bestellte großformatige Artikel zur Konsolidierung (2908) mit am Kommissionierbereich (209) kommissionierten (2106) Lagerbestandsartikeln transferiert werden, und wobei der Konsolidierungsbereich (217) den Packbereich (210) überlappt.

12. Auftragserfüllungssystem (200) nach Anspruch 1 oder 11, wobei der Konsolidierungsbereich (217), der den Packbereich (210) überlappt, mindestens einen kombinierten Verpack-Arbeitsplatz (255) umfasst, wobei der kombinierte Verpack-Arbeitsplatz (255) konfiguriert ist, einen gemeinsamen Auftragsbehälterförderer (248) mit einem anderen der ein oder mehreren Arbeitsplätze (206, 207, 221, 240, 245, 255) des Packbereichs (210) zu teilen.

13. Auftragserfüllungssystem (200) nach einem der vorhergehenden Ansprüche, ferner umfassend mindestens ein Roboter-Pakethandhabungsfahrzeug (1700), das innerhalb der ASRS-Struktur (208) navigierbar und betreibbar ist, um verpackte Aufträge (1501) zu empfangen, die bestellte Artikel (903) enthalten, die aus der ASRS-Struktur (208) erfüllt wurden, wobei die verschiedenen Servicebereiche (202, 204, 205, 209, 210, 212, 216, 217) einen Sortierbereich für die letzte Meile (216) umfassen, an dem Versandkonsolidierungsbehälter (259) einer größeren Kapazität als die Lagerbehälter (403) an von der ASRS-Struktur (208) zugänglichen Positionen gelagert werden, und wobei das Roboter-Pakethandhabungsfahrzeug (1700) betreibbar ist, um die verpackten Aufträge (1501) in die Versandkonsolidierungsbehälter (259) am Sortierbereich für die letzte Meile (216) zusammenzustellen.

14. Auftragserfüllungssystem (200) nach Anspruch 13, wobei das mindestens eine Roboter-Pakethandhabungsfahrzeug (1700) ein förderband-ausgestattetes Roboterfahrzeug ist, das ein Fahrgestell (1701) und eine auf dem Fahrgestell (1701) montierte Fördereinheit (1703) umfasst, und wobei das Fahrgestell (1701) betreibbar ist, um eine Fortbewegung des mindestens einen Roboter-Pakethandhabungsfahrzeugs (1700) durch die ASRS-Struktur (208) auszuführen, und wobei die Fördereinheit (1703) betreibbar ist, um die verpackten Aufträge (1501) zu empfangen und die verpackten Aufträge (1501) an die Versandkonsolidierungsbehälter (259) abzuladen, und wobei die Fördereinheit (1703) drehbar auf dem Fahrgestell (1701) zur Bewegung relativ zum Fahrgestell (1701) um eine vertikale Achse (1705) montiert ist, um die Fördereinheit (1703) in eine Mehrzahl von verschiedenen Arbeitspositionen umzuorientieren, die betreibbar sind, um die verpackten Aufträge (1501) in verschiedenen Richtungen von dem mindestens einen Roboter-Pakethandhabungsfahrzeug (1700) an die Versandkonsolidierungsbehälter (259) abzuladen.

15. Auftragserfüllungssystem (200) nach Anspruch 14, wobei die Fördereinheit (1703) zwischen mindestens zwei Arbeitspositionen mit Neunzig-Grad-Inkrement zueinander um die vertikale Achse (1705) drehbar ist.

16. Auftragserfüllungssystem (200) nach Anspruch 1, wobei mindestens einer der Arbeitsplätze (206, 207, 221, 240, 245, 255) angeordnet ist, um zwei verschiedene Lagerbehälter (403) zu empfangen, zwischen denen an dem mindestens einen der Arbeitsplätze (206, 207, 221, 240, 245, 255) empfangene Artikel transferiert werden, und wobei der mindestens eine der Arbeitsplätze (206, 207, 221, 240, 245, 255) einen ersten der zwei verschiedenen Lagerbehälter über einen von Folgendem empfängt:
einen Durchfahrt-Fahrweg, auf dem die robotischen Lager-/Entnahmefahrzeuge (406) durch den mindestens einen der Arbeitsplätze (206, 207, 221, 240, 245, 255) traversierbar sind, um den ersten der zwei verschiedenen Lagerbehälter (403) hindurchzutragen; und
einen separaten förderbasierten Fahrweg, auf dem zuvor eingeschleuste Lagerbehälter (403) durch den mindestens einen der Arbeitsplätze (206, 207, 221, 240, 245, 255) unabhängig von den robotischen Lager-/Entnahmefahrzeugen (406) traversieren.

17. Auftragserfüllungssystem (200) nach Anspruch 1, wobei mindestens einer der verschiedenen Servicebereiche (202, 204, 205, 209, 210, 212, 216, 217) mindestens eine Reihe von Arbeitsplätzen (206, 207, 221, 240, 245, 255) umfasst, die in einer sich von der ASRS-Struktur (208) nach außen erstreckenden Reihe angeordnet und von einem Behälterförderer bedient werden, wobei der Behälterförderer einen abgehenden Abschnitt umfasst, der sich von der ASRS-Struktur (208) nach außen erstreckt und an der Reihe von Arbeitsplätzen (206, 207, 221, 240, 245, 255) vorbeiführt, und wobei der Behälterförderer ferner eine Reihe von Abzweigungen umfasst, die jeweils von dem abgehenden Abschnitt des Behälterförderers zu einem jeweiligen der Arbeitsplätze (206, 207, 221, 240, 245, 255) abzweigen, um einen empfangenen der Lagerbehälter (403) dorthin zu liefern.

18. Auftragserfüllungssystem (200) nach Anspruch 1, ferner umfassend ein computergestütztes Steuerungssystem (265) in betriebsfähiger Kommunikation mit der Flotte von robotischen Lager-/Entnahmefahrzeugen (406), wobei das computergestützte Steuerungssystem (265) eine Netzwerkschnittstelle (268), die an ein Kommunikationsnetz gekoppelt ist, mindestens einen Prozessor (266), der an die Netzwerkschnittstelle (268) gekoppelt ist, und ein nicht-flüchtiges, computerlesbares Speichermedium umfasst, das kommunikativ an den mindestens einen Prozessor (266) gekoppelt ist, wobei das nichtflüchtige, computerlesbare Speichermedium konfiguriert ist, Computerprogrammanweisungen zu speichern, die, wenn sie durch den Prozessor (266) ausgeführt werden, den Prozessor (266) veranlassen, ein oder mehrere der robotischen Lager-/Entnahmefahrzeuge (406) zu aktivieren, um:
(a) innerhalb der ASRS-Struktur (208) und durch jeden der verschiedenen Servicebereiche (202, 204, 205, 209, 210, 212, 216, 217) zu navigieren;
(b) die Lagerbehälter (403) aus den Lagerplätzen der ASRS-Struktur (208) zu entnehmen;
(c) die Lagerbehälter (403) an den verschiedenen Servicebereichen (202, 204, 205, 209, 210, 212, 216, 217) abzugeben;
(d) die Lagerbehälter (403) von den verschiedenen Servicebereichen (202, 204, 205, 209, 210, 212, 216, 217) aufzunehmen; und
(e) die Lagerbehälter (403) zu den Lagerplätzen der ASRS-Struktur (208) zurückzuführen und zu lagern;
wobei die Lieferung von Lagerbehältern (403) zu und von jedem der verschiedenen Servicebereiche (202, 204, 205, 209, 210, 212, 216, 217) eine raumeffiziente Auslassung von Bereichsverbindungsförderern ermöglicht, die zwischen den verschiedenen Servicebereichen (202, 204, 205, 209, 210, 212, 216, 217) verlaufen, wobei Lagerbehälter-(403)-Transfers zwischen Bereichen innerhalb der zweidimensionalen Grundfläche der ASRS-Struktur (208) durch robotische Lager-/Entnahmefahrzeuge (406) durchgeführt werden, und wobei die ASRS-Struktur (208) eine autonom betreibbare Behälterübergabeverbindung für die Lagerbehälter (403) zwischen den verschiedenen Servicebereichen (202, 204, 205, 209, 210, 212, 216, 217) ist.

19. Auftragserfüllungssystem (200) nach Anspruch 1, wobei mindestens einer der Arbeitsplätze (206, 207, 221, 240, 245, 255) umfasst:
eine Entnahmeöffnung (231, 242), die über einem Versorgungsbehälterpfad liegt, auf dem ein Versorgungslager-Behälter, der aus dem Vorrat an Lagerbehältern (403) ausgewählt ist und ein oder mehrere zu entnehmende Artikel enthält, durch den mindestens einen der Arbeitsplätze (206, 207, 221, 240, 245, 255) bewegbar ist, um die Entnahme des einen oder der mehreren Artikel aus dem Versorgungslager-Behälter zu ermöglichen, wenn dieser auf dem Versorgungsbehälterpfad an einer Entnahmestelle unterhalb der Entnahmeöffnung (231, 242) geparkt ist; und
eine Einlageöffnung (230, 243), die über einem Empfängerbehälterpfad liegt, auf dem ein Empfängerlager-Behälter, der aus dem Vorrat an Lagerbehältern (403) ausgewählt ist und für den der eine oder die mehreren Artikel bestimmt sind, durch den mindestens einen der Arbeitsplätze (206, 207, 221, 240, 245, 255) bewegbar ist, um die Einlage des einen oder der mehreren Artikel in den Empfängerlager-Behälter zu ermöglichen, wenn dieser auf dem Empfängerbehälterpfad an einer Einlagestelle unterhalb der Einlageöffnung (230, 243) geparkt ist;
wobei ein erster von dem Versorgungsbehälterpfad und dem Empfängerbehälterpfad eine Verlängerungsschiene ist, die mit einer Schiene der ASRS-Struktur (208) verbunden ist, auf der die Flotte von robotischen Lager-/Entnahmefahrzeugen (406) die ASRS-Struktur (208) navigieren, wodurch eine erste von der Entnahmeöffnung (231, 242) und der Einlageöffnung (230, 243) von einem der robotischen Lager-/Entnahmefahrzeuge (406) bedient wird, das die Verlängerungsschiene navigiert, um einen entsprechenden von dem Versorgungslager-Behälter und dem Empfängerlager-Behälter zu der ersten von der Entnahmeöffnung (231, 242) und der Einlageöffnung (230, 243) zu tragen.

20. Verfahren zum Erfüllen von Aufträgen, wobei das Verfahren umfasst:
Empfangen von eingehenden Artikeln an einer Anlage, wobei die Anlage umfasst:
eine Struktur (208) eines automatischen Lager- und Entnahmesystems (ASRS (automated storage and retrieval system)), die eine dreidimensionale Anordnung von Lagerplätzen umfasst, die über eine zweidimensionale Grundfläche der ASRS-Struktur (208) auf einer Mehrzahl von Lagerebenen innerhalb der ASRS-Struktur (208) verteilt sind; eine Flotte von robotischen Lager-/Entnahmefahrzeugen (406), die innerhalb der ASRS-Struktur (208) zumindest durch Fahrt in zwei Dimensionen über die zweidimensionale Grundfläche der ASRS-Struktur (208) auf den Serviceebenen der ASRS-Struktur (208) navigierbar sind, wobei die Serviceebenen oberhalb und unterhalb der Lagerebenen positioniert sind; und
eine Mehrzahl von verschiedenen Servicebereichen (202, 204, 205, 209, 210, 212, 216, 217), die angrenzend an einen äußeren Umfang (208a, 208b, 208c, 208d) der zweidimensionalen Grundfläche der ASRS-Struktur (208) auf den Serviceebenen der ASRS-Struktur (208) positioniert sind, wobei jeder der verschiedenen Servicebereiche (202, 204, 205, 209, 210, 212, 216, 217) mindestens einen von Dekantierarbeitsplätzen (221), Verarbeitungsarbeitsplätzen, Kommissionierarbeitsplätzen (240), Packarbeitsplätzen (245), Mehrwertdienstleistungsarbeitsplätzen (206), Retourenbearbeitungsarbeitsplätzen (207) und kombinierten Verpack-Arbeitsplätzen (255) einschließt;
wobei das Verfahren **gekennzeichnet ist durch**:
Konfigurieren der verschiedenen Servicebereiche (202, 204, 205, 209, 210, 212, 216, 217) in einer kontinuierlichen Anordnung um die ASRS-Struktur (208) und auf einer unteren Ebene (400a) der ASRS-Struktur (208), um mehrere Funktionen des Auftragserfüllungszentrums (200) auf kontinuierliche Weise auszuführen;
Verbinden der verschiedenen Servicebereiche (202, 204, 205, 209, 210, 212, 216, 217) untereinander unter Verwendung eines gegitterten unteren Spurlayouts (402), wodurch ein Transport von Waren/Artikeln zwischen allen Lagerprozessen in beliebiger Reihenfolge ermöglicht wird, und wodurch ermöglicht wird, dass eine beliebige Anzahl von Lagerprozessen in beliebiger Reihenfolge abgeschlossen wird; und
Konfigurieren verschiedener Umfangsseiten (208a, 208b, 208c, 208d) der ASRS-Struktur (208), um jeweils von einer verschiedenen Kombination von Arbeitsplätzen (206, 207, 221, 240, 245, 255) belegt zu werden, sodass jede Umfangsseite (208a, 208b, 208c, 208d) der ASRS-Struktur (208) einer bestimmten Aufgabe oder einer bestimmten Kombination von Aufgaben gewidmet ist, die sich von der Aufgabe oder der bestimmten Kombination der Aufgaben unterscheidet, die an anderen Umfangsseiten (208a, 208b, 208c, 208d) der ASRS-Struktur (208) ausgeführt werden.

## Revendications

1. Système de traitement de commandes (200), ledit système de traitement de commandes (200) comprenant :
une structure de système automatisé de stockage et de récupération (ASRS [automated storage and retrieval system]) (208), ladite structure ASRS (208) comprenant un réseau tridimensionnel d'emplacements de stockage répartis sur une empreinte bidimensionnelle de la structure ASRS (208) à une pluralité de niveaux de stockage au sein de la structure ASRS (208) ;
une flotte de véhicules robotisés de stockage/récupération (406) pouvant naviguer au sein de la structure ASRS (208) au moins par déplacement en deux dimensions sur l'empreinte bidimensionnelle de la structure ASRS (208) à des niveaux de service de la structure ASRS (208), dans lequel les niveaux de service sont positionnés au-dessus et en dessous des niveaux de stockage ;
un approvisionnement de bacs de stockage (403) de taille et de forme compatibles pour le stockage dans les emplacements de stockage de la structure ASRS (208), dans lequel les bacs de stockage (403) sont configurés pour être transportés (2103, 2105) par les véhicules robotisés de stockage/récupération (406) au sein de la structure ASRS (208) pendant le transfert des bacs de stockage (403) vers et depuis les emplacements de stockage ;
une pluralité de zones de service différentes (202, 204, 205, 209, 210, 212, 216, 217) positionnées de manière adjacente à un périmètre extérieur (208a, 208b, 208c, 208d) de l'empreinte bidimensionnelle de la structure ASRS (208) aux niveaux de service de la structure ASRS (208), dans lequel chacune des zones de service différentes (202, 204, 205, 209, 210, 212, 216, 217) comprend des postes de travail (206, 207, 221, 240, 245, 255) configurés pour une tâche ou une combinaison d'une pluralité de tâches différente des postes de travail (206, 207, 221, 240, 245, 255) à une autre des zones de service différentes (202, 204, 205, 209, 210, 212, 216, 217), et dans lequel chacune des zones de service différentes (202, 204, 205, 209, 210, 212, 216, 217) est configurée pour recevoir une dépose des bacs de stockage (403) et faciliter un déplacement des véhicules robotisés de stockage/récupération (406) transportant les bacs de stockage (403) à travers celles-ci ;
ledit système de traitement de commandes (200) **caractérisé en ce que** :
les zones de service différentes (202, 204, 205, 209, 210, 212, 216, 217) sont configurées dans un agencement continu autour du périmètre extérieur (208a, 208b, 208c, 208d) de la structure ASRS (208) et à un niveau inférieur (400a) de la structure ASRS (208), pour exécuter de multiples fonctions du centre de traitement de commandes (200) de manière continue ; une disposition de voies inférieures en grille (402) interconnecte les zones de service différentes (202, 204, 205, 209, 210, 212, 216, 217) du système de traitement de commandes (200), permettant ainsi le transport de marchandises/articles entre tous les processus d'entrepôt dans n'importe quelle séquence, et permettant ainsi à n'importe quel nombre de processus d'entrepôt d'être accomplis dans n'importe quel ordre ; et
différents côtés du périmètre (208a, 208b, 208c, 208d) de la structure ASRS (208) sont chacun occupés par une combinaison différente des postes de travail (206, 207, 221, 240, 245, 255) de sorte que chaque côté du périmètre (208a, 208b, 208c, 208d) de la structure ASRS (208) est dédié à une tâche particulière ou à une combinaison particulière des tâches qui diffère de la tâche ou de la combinaison particulière des tâches exécutées à d'autres côtés du périmètre (208a, 208b, 208c, 208d) de la structure ASRS (208).

2. Système de traitement de commandes (200) selon la revendication 1, dans lequel les bacs de stockage (403) sont transportables entre les zones de service différentes (202, 204, 205, 209, 210, 212, 216, 217) dans n'importe quel ordre.

3. Système de traitement de commandes (200) selon la revendication 1 ou 2, dans lequel chacune des zones de service différentes (202, 204, 205, 209, 210, 212, 216, 217) est configurée pour recevoir les bacs de stockage (403) une pluralité de fois pour l'exécution de la pluralité de tâches.

4. Système de traitement de commandes (200) selon l'une quelconque des revendications précédentes, dans lequel les bacs de stockage (403) sont reçus (2101) à une première des zones de service différentes (202, 204, 205, 209, 210, 212, 216, 217) pour l'exécution d'une ou de plusieurs de la pluralité de tâches et ensuite stockés dans les emplacements de stockage de la structure ASRS (208) et récupérés des emplacements de stockage de la structure ASRS (208) pour le transfert des bacs de stockage (403) vers une deuxième des zones de service différentes (202, 204, 205, 209, 210, 212, 216, 217).

5. Système de traitement de commandes (200) selon l'une quelconque des revendications précédentes, dans lequel les zones de service différentes (202, 204, 205, 209, 210, 212, 216, 217) comprennent une zone de décantage (204) à laquelle des articles entrants (902) sont placés dans un état non traité tel que reçu (2101) à l'origine dans des bacs de stockage non traités (403a) sélectionnés parmi l'approvisionnement de bacs de stockage (403), et à partir de laquelle les bacs de stockage non traités (403a) sont introduits (2107, 2104) dans la structure ASRS (208).

6. Système de traitement de commandes (200) selon la revendication 5, dans lequel la zone de décantage (204) est une zone combinée de décantage et d'introduction à laquelle les bacs de stockage non traités (403a) sont introduits (2107, 2104) directement dans la structure ASRS (208) par les véhicules robotisés de stockage/récupération (406) sans transfert vers, devant ou à travers toute autre des zones de service différentes (202, 204, 205, 209, 210, 212, 216, 217).

7. Système de traitement de commandes (200) selon la revendication 6, dans lequel les zones de service différentes (202, 204, 205, 209, 210, 212, 216, 217) comprennent en outre une zone de traitement (205) vers laquelle les bacs de stockage non traités (403a) introduits (2107, 2104) dans la structure ASRS (208) sont acheminés par les véhicules robotisés de stockage/récupération (406) pour le traitement (2801, 2501) des articles entrants (902) contenus dans les bacs de stockage non traités (403a), et à partir de laquelle les articles traités sont retournés dans la structure ASRS (208) pour y être stockés en tant que stock vendable prêt pour le traitement de commandes.

8. Système de traitement de commandes (200) selon la revendication 7, dans lequel, à la zone de traitement (205), les articles traités sont transférés des bacs de stockage non traités (403a) vers des bacs de stockage d'inventaire (403b) sélectionnés parmi l'approvisionnement de bacs de stockage (403), et retournés dans la structure ASRS (208) dans les bacs de stockage d'inventaire (403b).

9. Système de traitement de commandes (200) selon l'une quelconque des revendications précédentes, dans lequel les zones de service différentes (202, 204, 205, 209, 210, 212, 216, 217) comprennent une zone de préparation (209) vers laquelle des articles d'inventaire dans la structure ASRS (208) sont acheminés par les véhicules robotisés de stockage/récupération (406) pour la préparation de commandes.

10. Système de traitement de commandes (200) selon la revendication 9, dans lequel les zones de service différentes (202, 204, 205, 209, 210, 212, 216, 217) comprennent en outre une zone d'emballage (210) vers laquelle des commandes partiellement exécutées préalablement préparées à la zone de préparation (209) sont acheminées par les véhicules robotisés de stockage/récupération (406) pour l'emballage (2601).

11. Système de traitement de commandes (200) selon la revendication 10, dans lequel les zones de service différentes (202, 204, 205, 209, 210, 212, 216, 217) comprennent en outre une zone de stockage d'articles surdimensionnés (212) pour stocker des articles de grande taille substantiellement grands pour le stockage dans la structure ASRS (208), et dans lequel les zones de service différentes (202, 204, 205, 209, 210, 212, 216, 217) comprennent en outre une zone de consolidation (217) vers laquelle des articles de grande taille commandés sont transférés pour la consolidation (2908) avec des articles d'inventaire préparés (2106) à la zone de préparation (209), et dans lequel la zone de consolidation (217) chevauche la zone d'emballage (210).

12. Système de traitement de commandes (200) selon la revendication 1 ou 11, dans lequel la zone de consolidation (217) qui chevauche la zone d'emballage (210) comprend au moins un poste de travail d'emballage consolidé (255), dans lequel le poste de travail d'emballage consolidé (255) est configuré pour partager un convoyeur de bacs de commandes (248) commun avec un autre des un ou plusieurs postes de travail (206, 207, 221, 240, 245, 255) de la zone d'emballage (210).

13. Système de traitement de commandes (200) selon l'une quelconque des revendications précédentes, comprenant en outre au moins un véhicule robotisé de manutention de colis (1700) pouvant naviguer au sein de la structure ASRS (208) et pouvant fonctionner pour recevoir des commandes emballées (1501) contenant des articles commandés (903) exécutés à partir de la structure ASRS (208), dans lequel les zones de service différentes (202, 204, 205, 209, 210, 212, 216, 217) comprennent une zone de tri du dernier kilomètre (216) à laquelle des conteneurs de consolidation d'expédition (259) d'une capacité supérieure à celle des bacs de stockage (403) sont stockés à des positions accessibles depuis la structure ASRS (208), et dans lequel le véhicule robotisé de manutention de colis (1700) est apte à compiler les commandes emballées (1501) dans les conteneurs de consolidation d'expédition (259) à la zone de tri du dernier kilomètre (216).

14. Système de traitement de commandes (200) selon la revendication 13, dans lequel ledit au moins un véhicule robotisé de manutention de colis (1700) est un véhicule robotisé équipé d'un convoyeur comprenant un châssis à roues (1701) et une unité de convoyage (1703) qui est montée au sommet du châssis à roues (1701), et dans lequel le châssis à roues (1701) est apte à effectuer la locomotion dudit au moins un véhicule robotisé de manutention de colis (1700) à travers la structure ASRS (208), et dans lequel l'unité de convoyage (1703) est apte à recevoir les commandes emballées (1501) et à décharger les commandes emballées (1501) vers les conteneurs de consolidation d'expédition (259), et dans lequel l'unité de convoyage (1703) est montée de manière rotative au sommet du châssis à roues (1701) pour un mouvement relatif au châssis à roues (1701) autour d'un axe vertical (1705) afin de réorienter l'unité de convoyage (1703) dans une pluralité de positions de travail différentes aptes à décharger les commandes emballées (1501) dans différentes directions depuis ledit au moins un véhicule robotisé de manutention de colis (1700) vers les conteneurs de consolidation d'expédition (259).

15. Système de traitement de commandes (200) selon la revendication 14, dans lequel l'unité de convoyage (1703) est rotative entre au moins deux positions de travail à un incrément de quatre-vingt-dix degrés l'une par rapport à l'autre autour de l'axe vertical (1705).

16. Système de traitement de commandes (200) selon la revendication 1, dans lequel au moins un des postes de travail (206, 207, 221, 240, 245, 255) est agencé pour recevoir deux bacs de stockage différents (403) entre lesquels des articles reçus audit au moins un des postes de travail (206, 207, 221, 240, 245, 255) sont transférés, et dans lequel ledit au moins un des postes de travail (206, 207, 221, 240, 245, 255) reçoit un premier des deux bacs de stockage différents via l'un des éléments suivants :
un chemin de déplacement en transit sur lequel les véhicules robotisés de stockage/récupération (406) peuvent traverser ledit au moins un des postes de travail (206, 207, 221, 240, 245, 255) pour transporter le premier des deux bacs de stockage différents (403) à travers celui-ci ; et
un chemin de déplacement par convoyeur séparé sur lequel des bacs de stockage (403) préalablement introduits traversent ledit au moins un des postes de travail (206, 207, 221, 240, 245, 255) indépendamment des véhicules robotisés de stockage/récupération (406).

17. Système de traitement de commandes (200) selon la revendication 1, dans lequel au moins une des zones de service différentes (202, 204, 205, 209, 210, 212, 216, 217) comprend au moins une série de postes de travail (206, 207, 221, 240, 245, 255) agencés en une rangée s'étendant vers l'extérieur depuis la structure ASRS (208) et desservis par un convoyeur de bacs, dans lequel le convoyeur de bacs comprend une section sortante s'étendant vers l'extérieur depuis la structure ASRS (208) et passant devant la série de postes de travail (206, 207, 221, 240, 245, 255), et dans lequel le convoyeur de bacs comprend en outre une série de ramifications, chacune se séparant de la section sortante du convoyeur de bacs vers un poste de travail respectif (206, 207, 221, 240, 245, 255) pour y délivrer un bac de stockage reçu (403).

18. Système de traitement de commandes (200) selon la revendication 1, comprenant en outre un système de contrôle informatisé (265) en communication opérationnelle avec la flotte de véhicules robotisés de stockage/récupération (406), dans lequel le système de contrôle informatisé (265) comprend une interface réseau (268) couplée à un réseau de communication, au moins un processeur (266) couplé à l'interface réseau (268), et un support de stockage non transitoire lisible par ordinateur couplé de manière communicative audit au moins un processeur (266), dans lequel le support de stockage non-transitoire lisible par ordinateur est configuré pour stocker des instructions de programme informatique, qui, lorsqu'elles sont exécutées par le processeur (266), amènent le processeur (266) à activer un ou plusieurs des véhicules robotisés de stockage/récupération (406) pour :
(a) naviguer au sein de la structure ASRS (208) et à travers chacune des zones de service différentes (202, 204, 205, 209, 210, 212, 216, 217) ;
(b) récupérer les bacs de stockage (403) des emplacements de stockage de la structure ASRS (208) ;
(c) déposer les bacs de stockage (403) aux zones de service différentes (202, 204, 205, 209, 210, 212, 216, 217) ;
(d) ramasser les bacs de stockage (403) des zones de service différentes (202, 204, 205, 209, 210, 212, 216, 217) ; et
(e) retourner et stocker les bacs de stockage (403) dans les emplacements de stockage de la structure ASRS (208) ;
dans lequel la livraison de bacs de stockage (403) vers et depuis chacune des zones de service différentes (202, 204, 205, 209, 210, 212, 216, 217) permet l'omission économe en espace de convoyeurs inter-zones circulant entre les zones de service différentes (202, 204, 205, 209, 210, 212, 216, 217), les transferts inter-zones de bacs de stockage (403) au sein de l'empreinte bidimensionnelle de la structure ASRS (208) étant effectués par les véhicules robotisés de stockage/récupération (406), et dans lequel la structure ASRS (208) est un lien de transfert de bacs fonctionnant de manière autonome pour les bacs de stockage (403) entre les zones de service différentes (202, 204, 205, 209, 210, 212, 216, 217).

19. Système de traitement de commandes (200) selon la revendication 1, dans lequel au moins un des postes de travail (206, 207, 221, 240, 245, 255) comprend :
une ouverture de préparation (231, 242) surplombant un chemin de bac d'approvisionnement sur lequel un bac de stockage d'approvisionnement sélectionné parmi l'approvisionnement de bacs de stockage (403) et contenant un ou plusieurs articles à préparer est déplaçable à travers ledit au moins un des postes de travail (206, 207, 221, 240, 245, 255) pour permettre la préparation d'un ou de plusieurs articles du bac de stockage d'approvisionnement lorsqu'il est stationné sur le chemin de bac d'approvisionnement à un emplacement de préparation sous l'ouverture de préparation (231, 242) ; et une ouverture d'accès de placement (230, 243) surplombant un chemin de bac destinataire sur lequel un bac de stockage destinataire sélectionné parmi l'approvisionnement de bacs de stockage (403) et auquel le ou les articles sont destinés est déplaçable à travers ledit au moins un des postes de travail (206, 207, 221, 240, 245, 255) pour permettre le placement du ou des articles dans le bac de stockage destinataire lorsqu'il est stationné sur le chemin de bac destinataire à un emplacement de placement sous l'ouverture d'accès de placement (230, 243) ;
dans lequel un premier du chemin de bac d'approvisionnement et du chemin de bac destinataire est une voie d'extension connectée à une voie de la structure ASRS (208) sur laquelle la flotte de véhicules robotisés de stockage/récupération (406) navigue dans la structure ASRS (208), moyennant quoi une première de l'ouverture de préparation (231, 242) et de l'ouverture d'accès de placement (230, 243) est desservie par l'un des véhicules robotisés de stockage/récupération (406) naviguant sur la voie d'extension pour transporter un bac correspondant parmi le bac de stockage d'approvisionnement et
le bac de stockage destinataire à la première de l'ouverture de préparation (231, 242) et de l'ouverture d'accès de placement (230, 243).

20. Procédé de traitement de commandes, le procédé comprenant :
la réception d'articles entrants dans une installation, l'installation comprenant :
une structure de système automatisé de stockage et de récupération (ASRS) (208) comprenant un réseau tridimensionnel d'emplacements de stockage répartis sur une empreinte bidimensionnelle de la structure ASRS (208) à une pluralité de niveaux de stockage au sein de la structure ASRS (208) ;
une flotte de véhicules robotisés de stockage/récupération (406) pouvant naviguer au sein de la structure ASRS (208) au moins par déplacement en deux dimensions sur l'empreinte bidimensionnelle de la structure ASRS (208) aux niveaux de service de la structure ASRS (208), dans lequel les niveaux de service sont positionnés au-dessus et en dessous des niveaux de stockage ; et
une pluralité de zones de service différentes (202, 204, 205, 209, 210, 212, 216, 217) positionnées de manière adjacente à un périmètre extérieur (208a, 208b, 208c, 208d) de l'empreinte bidimensionnelle de la structure ASRS (208) aux niveaux de service de la structure ASRS (208), dans lequel chacune des zones de service différentes (202, 204, 205, 209, 210, 212, 216, 217) comprend au moins un parmi des postes de travail de décantage (221), des postes de travail de traitement, des postes de travail de préparation (240), des postes de travail d'emballage (245), des postes de travail de services à valeur ajoutée (206), des postes de travail de gestion des retours (207), et des postes de travail d'emballage consolidé (255) ; ledit procédé **caractérisé par** :
la configuration des zones de service différentes (202, 204, 205, 209, 210, 212, 216, 217) dans un agencement continu autour de la structure ASRS (208) et à un niveau inférieur (400a) de la structure ASRS (208), pour exécuter de multiples fonctions du centre de traitement de commandes (200) de manière continue ;
l'interconnexion des zones de service différentes (202, 204, 205, 209, 210, 212, 216, 217) au moyen d'une disposition de voies inférieures en grille (402), permettant ainsi le transport de marchandises/articles entre tous les processus d'entrepôt dans n'importe quelle séquence, et permettant ainsi à n'importe quel nombre de processus d'entrepôt d'être accomplis dans n'importe quel ordre ; et
la configuration de différents côtés du périmètre (208a, 208b, 208c, 208d) de la structure ASRS (208) pour être respectivement occupés par une combinaison différente de postes de travail (206, 207, 221, 240, 245, 255) de sorte que chaque côté du périmètre (208a, 208b, 208c, 208d) de la structure ASRS (208) est dédié à une tâche particulière ou à une combinaison particulière de tâches qui diffère de la tâche ou de la combinaison particulière des tâches exécutées à d'autres côtés du périmètre (208a, 208b, 208c, 208d) de la structure ASRS (208).
